(19) Europäisches Patentamt
European Patent Office
Office européen des brevets

(11) EP 4 325 853 A1

(12) EUROPEAN PATENT APPLICATION
published in accordance with Art. 153(4) EPC

(43) Date of publication:
**21.02.2024 Bulletin 2024/08**

(21) Application number: **22788500.1**

(22) Date of filing: **15.04.2022**

(51) International Patent Classification (IPC):
***H04N 19/597*** *(2014.01)* ***H04N 19/96*** *(2014.01)*
***H04N 19/105*** *(2014.01)* ***H04N 19/139*** *(2014.01)*
***G06T 9/40*** *(2006.01)*

(52) Cooperative Patent Classification (CPC):
**G06T 9/40; H04N 19/105; H04N 19/139; H04N 19/597; H04N 19/96**

(86) International application number:
**PCT/KR2022/005475**

(87) International publication number:
**WO 2022/220645 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2021 KR 20210049338**

(71) Applicant: **LG Electronics Inc.**
**Yeongdeungpo-gu**
**Seoul 07336 (KR)**

(72) Inventors:
- **OH, Hyunmook**
  **Seoul 06772 (KR)**
- **HUR, Hyejung**
  **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

# (54) POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD

(57) A point cloud data transmission method according to embodiments comprises the steps of: encoding geometry data from among point cloud data; encoding, on the basis of the geometry data, attribute data from among the point cloud data; and transmitting the encoded geometry data, the encoded attribute data, and signaling information, wherein, in the step of encoding the geometry data, the geometry data can be compressed on the basis of an octree and the correlation between frames.

FIG. 24

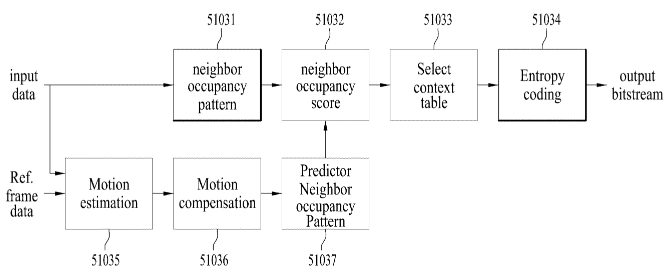


EP 4 325 853 A1

## Description

[Technical Field]

Embodiments relate to a method and apparatus for processing point cloud content.

[Background Art]

Point cloud content is content represented by a point cloud, which is a set of points belonging to a coordinate system representing a three-dimensional space (or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

[Disclosure]

[Technical Problem]

An object of the present disclosure devised to solve the above-described problems is to provide a point cloud data transmission device, a point cloud data transmission method, a point cloud data reception device, and a point cloud data reception method for efficiently transmitting and receiving a point cloud.

Another object of the present disclosure is to provide a point cloud data transmission device, a point cloud data transmission method, a point cloud data reception device, and a point cloud data reception method for addressing latency and encoding/decoding complexity.

Another object of the present disclosure is to provide a point cloud data transmission device, a point cloud data transmission method, a point cloud data reception device, and a point cloud data reception method for efficiently transmitting and receiving a geometry-point cloud compression (G-PCC) bitstream.

Another object of the present disclosure is to provide a point cloud data transmission device, a point cloud data transmission method, a point cloud data reception device, and a point cloud data reception method for performing transmission/reception of point cloud data through compression by applying an octree-based coding method so as to efficiently compress the point cloud data.

Another object of the present disclosure is to provide a point cloud data transmission device, a point cloud data transmission method, a point cloud data reception device, and a point cloud data reception method that may increase compression efficiency of geometry information by reflecting similarities between different frames in compressing the geometry information based on an octree.

Objects of the present disclosure are not limited to the aforementioned objects, and other objects of the present disclosure which are not mentioned above will become apparent to those having ordinary skill in the art upon examination of the following description.

[Technical Solution]

The object of the present disclosure can be achieved by providing a method of transmitting point cloud data. The method may include encoding geometry data in the point cloud data, encoding attribute data in the point cloud data based on the geometry data, and transmitting the encoded geometry data, the encoded attribute data, and signaling information. The encoding of the geometry data may include compressing the geometry data based on an inter-frame correlation and an octree.

In one embodiment, the encoding of the geometry data may include estimating a motion vector by performing motion estimation within a search window of a reference frame, performing motion compensation based on the estimated motion vector and selecting a predictor in the reference frame as a set of nodes having similar characteristics to a prediction unit in a current frame, wherein the prediction unit may be a set of neighbor nodes at a specific depth of the octree in the current frame, comparing a neighbor occupancy pattern of the prediction unit with a neighbor occupancy pattern of the predictor, and entropy coding residual information related to the geometry data based on a result of the comparison.

In one embodiment, a prediction error may be generated based on a compression target node of the prediction unit, at least one neighbor node of the compression target node, a predictive node of the predictor, and at least one neighbor node of the predictive node, wherein the motion vector may be estimated based on the prediction error.

In one embodiment, the neighbor occupancy pattern of the prediction unit may be generated based on occupancy information about at least one neighbor node of a compression target node of the prediction unit, and the neighbor occupancy pattern of the predictor may be generated based on occupancy information about at least one neighbor node of the predictive node of the predictor.

In one embodiment, the signaling information may include geometry compression related information, wherein the geometry compression related information may include at least motion vector information, reference frame information, and range information related to a depth of the octree for transmission of the motion vector.

In another aspect of the present disclosure, provided herein is a device for transmitting point cloud data. The device may include a geometry encoder configured to encode geometry data in the point cloud data, an attribute encoder configured to encode attribute data in the point cloud data based on the geometry data, and a transmitter configured to transmit the encoded geometry data, the encoded attribute data, and signaling information. The geometry encoder may compress the geometry data based on an inter-frame correlation and an octree.

In one embodiment, the geometry encoder may include a motion estimator configured to estimate a motion vector by performing motion estimation within a search window of a reference frame, a motion compensator configured to perform motion compensation based on the estimated motion vector and select a predictor in the reference frame as a set of nodes having similar characteristics to a prediction unit in a current frame, wherein the prediction unit is a set of neighbor nodes at a specific depth of the octree in the current frame, a neighbor occupancy pattern generator configured to compare a neighbor occupancy pattern of the prediction unit with a neighbor occupancy pattern of the predictor, and an entropy encoder configured to entropy code residual information related to the geometry data based on a result of the comparison.

In one embodiment, the motion estimator may generate a prediction error based on a compression target node of the prediction unit, at least one neighbor node of the compression target node, a predictive node of the predictor, and at least one neighbor node of the predictive node, and estimate the motion vector based on the prediction error.

In one embodiment, the neighbor occupancy pattern generator may generate the neighbor occupancy pattern of the prediction unit based on occupancy information about at least one neighbor node of a compression target node of the prediction unit, and generate the neighbor occupancy pattern of the predictor based on occupancy information about at least one neighbor node of the predictive node of the predictor.

In one embodiment, the signaling information may include geometry compression related information, wherein the geometry compression related information may include at least motion vector information, reference frame information, and range information related to a depth of the octree for transmission of the motion vector.

In another aspect of the present disclosure, provided herein is a method of receiving point cloud data. The method may include receiving geometry data, attribute data, and signaling information, decoding the geometry data based on the signaling information, decoding the attribute data based on the signaling information and the decoded geometry data, and rendering point cloud data reconstructed from the decoded geometry data and the decoded attribute data based on the signaling information, wherein the decoding of the geometry data may include decoding the geometry data based on an inter-frame correlation and an octree.

In one embodiment, the decoding of the geometry data may include generating the octree based on motion vector information included in the signaling information, generating an octree based on the motion vector information included in the signaling information, generating a neighbor occupancy pattern of a prediction unit in the current frame based on the octree, performing motion compensation based on the motion vector information and selecting a predictor in the reference frame as a set of nodes having similar characteristics to the prediction unit in the current frame, wherein the prediction unit is a set of neighbor nodes at a specific depth of the octree in the current frame, generating a neighbor occupancy pattern of the predictor, comparing the neighbor occupancy pattern of the prediction unit with the neighbor occupancy pattern of the predictor, and entropy decoding residual information related to the geometry data based on a result of the comparison.

In one embodiment, the neighbor occupancy pattern of the prediction unit may be generated based on occupancy information about at least one neighbor node of a node to be reconstructed in the prediction unit, and the neighbor occupancy pattern of the predictor may be generated based on occupancy information about at least one neighbor node of the predictive node of the predictor.

In one embodiment, the comparing may include determining a similarity between a node to be reconstructed in the current frame and a predictive node in the reference frame by comparing the neighbor occupancy pattern of the prediction unit with the neighbor occupancy pattern of the predictor.

In one embodiment, the signaling information may include geometry compression related information, wherein the geometry compression related information may include at least motion vector information, reference frame information, and range information related to a depth of the octree for transmission of the motion vector.

[Advantageous Effects]

A point cloud data transmission method, a point cloud data transmission device, a point cloud data reception method, and a point cloud data reception device according to embodiments may provide a good-quality point cloud service.

A point cloud data transmission method, a point cloud data transmission device, a point cloud data reception method, and a point cloud data reception device according to embodiments may achieve various video codec methods.

A point cloud data transmission method, a point cloud data transmission device, a point cloud data reception method, and a point cloud data reception device according to embodiments may provide universal point cloud content such as a self-driving service (or an autonomous driving service).

A point cloud data transmission method, a point cloud data transmission device, a point cloud data reception method, and a point cloud data reception device according to embodiments may perform space-adaptive partition of point cloud data for independent encoding and decoding of the point cloud data, thereby improving parallel processing and providing scalability.

A point cloud data transmission method, a point cloud data transmission device, a point cloud data reception method, and a point cloud data reception device according to embodiments may perform encoding and decoding by partitioning the point cloud data in units of tiles and/or slices, and signal necessary data therefore, thereby improving encoding and decoding performance of the point cloud.

With a point cloud data transmission method, a point cloud data transmission device, a point cloud data reception method, and a point cloud data reception device according to embodiments, compression efficiency of geometry information may be improved by employing a neighbor occupancy pattern of a predictive node that is present in a previous frame.

With a point cloud data transmission method, a point cloud data transmission device, a point cloud data reception method, and a point cloud data reception device according to embodiments, an optimal context table for entropy coding or entropy decoding may be selected by determining the prediction accuracy based on the similarity between a neighbor occupancy pattern of a predictive node in the previous frame and the neighbor occupancy pattern of a node to be compressed in the current frame. Therefore, the compression efficiency of geometry information may be improved.

With a point cloud data transmission method, a point cloud data transmission device, a point cloud data reception method, and a point cloud data reception device according to embodiments, when the motion between the current frame and the reference (i.e., neighboring or previous) frame is not large, the similarity between a compression target node in the current frame and a predictive node in the reference frame may be assumed, as well as the similarity between a neighbor of the compression target node and a neighbor of the predictive node. Based on these assumptions, the occupancy information about the predictive node may be used in addition to the occupancy information about the neighbor of the predictive node, thereby increasing the compression efficiency.

With a point cloud data transmission method, a point cloud data transmission device, a point cloud data reception method, and a point cloud data reception device according to embodiments, when motion prediction based on a neighbor occupancy pattern is used, motion prediction may be performed more precisely by considering the characteristics of neighbor nodes together.

With a point cloud data transmission method, a point cloud data transmission device, a point cloud data reception method, and a point cloud data reception device according to embodiments, It considers the neighbor occupancy pattern of the predictive node in the reference frame and the neighbor occupancy pattern of the coding target node (i.e., the compression target node) in the current frame together. Thus, considering the neighbor occupancy context, entropy coding may be performed differently for a context given in a case where the neighbor occupancy patterns are similar (e.g., the accuracy of motion estimation or similarity of prediction is high) and a context given in a case where the neighbor occupancy patterns are different (e.g., the accuracy of motion estimation or similarity of prediction is low). Thereby, compression efficiency may be increased.

With a point cloud data transmission method and a point cloud data transmission device, by considering an inter-frame data prediction mode in addition to intra-frame prediction, point cloud data may be efficiently compressed. Similarly, with a point cloud data reception method and a point cloud data reception device according to embodiments, a bitstream containing point cloud data may be received, and the point cloud data may be efficiently reconstructed based on signaling information in the bitstream and/or a decoding operation according to embodiments.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure.

FIG. 1 illustrates an exemplary point cloud content providing system according to embodiments.
FIG. 2 is a block diagram illustrating a point cloud content providing operation according to embodiments.
FIG. 3 illustrates an exemplary process of capturing a point cloud video according to embodiments.

FIG. 4 illustrates an exemplary block diagram of point cloud video encoder according to embodiments.
FIG. 5 illustrates an example of voxels in a 3D space according to embodiments.
FIG. 6 illustrates an example of octree and occupancy code according to embodiments.
FIG. 7 illustrates an example of a neighbor node pattern according to embodiments.
FIG. 8 illustrates an example of point configuration of a point cloud content for each LOD according to embodiments.
FIG. 9 illustrates an example of point configuration of a point cloud content for each LOD according to embodiments.
FIG. 10 illustrates an example of a block diagram of a point cloud video decoder according to embodiments.
FIG. 11 illustrates an example of a point cloud video decoder according to embodiments.
FIG. 12 illustrates a configuration for point cloud video encoding of a transmission device according to embodiments.
FIG. 13 illustrates a configuration for point cloud video decoding of a reception device according to embodiments.
FIG. 14 illustrates an exemplary structure operatively connectable with a method/device for transmitting and receiving point cloud data according to embodiments.
FIG. 15 is a diagram illustrating an example of a search window in a reference frame, according to embodiments.
FIGS. 16-(a) and 16-(b) are diagrams illustrating examples of signaling of split and flag information in an octree structure according to embodiments.
FIG. 17 is a diagram illustrating an example of calculating a cost function for an octree node according to embodiments.
FIG. 18 is a diagram illustrating an example of performing splitting at an octree depth according to embodiments.
FIG. 19 is a diagram illustrating an example of inter-prediction according to embodiments.
FIGS. 20-(a) and 20-(b) are diagrams illustrating an example of a predictor and a process of obtaining a neighbor occupancy pattern of the predictor according to embodiments.
FIG. 21 is a diagram illustrating an example of neighbor occupancy patterns according to embodiments.
FIG. 22 is a diagram illustrating an example of a neighbor occupancy score according to embodiments.
FIG. 23 is a diagram illustrating another example of a point cloud transmission device according to embodiments.
FIG. 24 is an example detailed block diagram of a geometry encoder 51003 according to embodiments.
FIG. 25 is a flowchart illustrating an example of a geometry encoding method according to embodiments.
FIG. 26 shows an example bitstream structure of point cloud data for transmission/reception according to embodiments.
FIG. 27 shows an example of a syntax structure of a geometry parameter set according to an embodiment of the present disclosure.
FIG. 28 shows an example syntax structure of a geometry data unit according to embodiments.
FIG. 29 shows an example syntax structure of a geometry data unit header according to embodiments.
FIG. 30 shows another example syntax structure of a geometry data unit header according to embodiments.
FIG. 31 shows an example syntax structure of a data unit that contains information related to geometry compression according to embodiments.
FIG. 32 is a diagram illustrating another example of a point cloud reception device according to embodiments.
FIG. 33 is an example detailed block diagram of a geometry decoder according to embodiments.
FIG. 34 is a flowchart illustrating an example of a geometry decoding method according to embodiments.
FIG. 35 is a flowchart illustrating a point cloud data transmission method according to embodiments.
FIG. 36 is a flowchart illustrating a point cloud data reception method according to embodiments.

[Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. It should be noted that the following examples are only for embodying the present disclosure and do not limit the scope of the present disclosure. What can be easily inferred by an expert in the technical field to which the present disclosure belongs from the detailed description and examples of the present disclosure is to be interpreted as being within the scope of the present disclosure.

The detailed description in this present specification should be construed in all aspects as illustrative and not restrictive. The scope of the disclosure should be determined by the appended claims and their legal equivalents, and all changes coming within the meaning and equivalency range of the appended claims are intended to be embraced therein.

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the following drawings and detailed description should not be construed as being limited to the specifically described embodiments, but should be construed as including equivalents or substitutes of the embodiments described in the drawings and detailed description.

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or nextgeneration coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component or module) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like).

The dotted lines in FIG. 1 represent a process of transmitting the feedback information secured by the renderer 10007. The point cloud content providing system may process (encode/decode) point cloud data based on the feedback information. Accordingly, the point cloud video decoder 10006 may perform a decoding operation based on the feedback information. The reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmitting device, a transmitter, a transmission system, or the like, and the reception device 10004 may be called a decoder, a receiving device, a receiver, a reception system, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (e.g., the point cloud transmission device 10000 or the point cloud video acquisition unit 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in FIG. 3, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

FIG. 4 illustrates an exemplary point cloud video encoder according to embodiments.

FIG. 4 shows an example of the point cloud video encoder 10002 of FIG. 1. The point cloud video encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud video encoder may perform geometry encoding and attribute encoding. The geometry encoding is performed before the attribute encoding.

The point cloud video encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry information. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. The voxelization means a minimum unit representing position information in 3D space. Points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center point of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (e.g., from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD). The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud video encoder of FIG. 4 may be implemented by hardware including one or more processors or integrated circuits configured to communicate with one or more memories included in the point cloud content providing apparatus, software, firmware, or a combination thereof. The one or more processors may perform at least one of the operations and/or functions of the elements of the point cloud video encoder of FIG. 4 described above. Additionally, the one or more processors may operate or execute a set of software programs and/or instructions for performing the operations and/or functions of the elements of the point cloud video encoder of FIG. 4. The one or more memories according to the embodiments may include a high speed random access memory, or include a non-volatile memory (e.g., one or more magnetic disk storage devices, flash memory devices, or other non-volatile solid-state memory devices).

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud video encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and ($2^d$, $2^d$, $2^d$) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

FIG. 6 shows an example of an octree and occupancy code according to embodiments.

As described with reference to FIGS. 1 to 4, the point cloud content providing system (point cloud video encoder 10002) or the octree analyzer 40002 of the point cloud video encoder performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, $2^d$ may be set to a value constituting the smallest bounding box surrounding all points of the point cloud content (or point cloud video). Here, d denotes the depth of the octree. The value of d is determined in Equation 1. In Equation 1, ($x^{int}_n$, $y^{int}_n$, $z^{int}_n$) denotes the positions (or position values) of quantized points.

[Equation 1]

$$d = Ceil\left(Log2\left(Max\left(x_n^{int}, y_n^{int}, z_n^{int}, n = 1, \dots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud video encoder (e.g., the arithmetic encoder 40004) according to the embodiments may perform entropy encoding on the occupancy codes. In order to increase the compression efficiency, the point cloud video encoder may perform intra/inter-coding on the occupancy codes. The reception device (e.g., the reception device 10004 or the point cloud video decoder 10006) according to the embodiments reconstructs the octree based on the occupancy codes.

The point cloud video encoder (e.g., the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud video encoder according to the embodiments may skip voxelization and perform direct coding to directly code the positions of points included in the specific region. The coordinates of a direct coding point according to the embodiments are referred to as direct coding mode (DCM). The point cloud video encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud video decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud video encoder (or the arithmetic encoder 40004) according to the embodiments may perform entropy coding on the positions (or position values) of the points.

The point cloud video encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud video encoder according to the embodiments may specify a level at which trisoup geometry encoding is to be applied. For example, when the specific level is equal to the depth of the octree, the point cloud video encoder does not operate in the trisoup mode. In other words, the point cloud video encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud video encoder according to the embodiments may perform entropy encoding on the starting point (x, y, z) of the edge, the direction vector (Δx, Δy, Δz) of the edge, and the vertex position value (relative position value within the edge). When the trisoup geometry encoding is applied, the point cloud video encoder according to the embodiments (e.g., the geometry reconstructor 40005) may generate restored geometry (reconstructed geometry) by performing the triangle reconstruction, upsampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed according to Equation 2 by: i) calculating the centroid value of each vertex, ii) subtracting the center value from each vertex value, and iii) estimating the sum of the squares of the values obtained by the subtraction.

[Equation 2]

$$①\begin{bmatrix}\mu_x\\ \mu_y\\ \mu_z\end{bmatrix}=\frac{1}{n}\sum_{i=1}^{n}\begin{bmatrix}x_i\\ y_i\\ z_i\end{bmatrix}\quad ②\begin{bmatrix}\bar{x}_i\\ \bar{y}_i\\ \bar{z}_i\end{bmatrix}=\begin{bmatrix}x_i\\ y_i\\ z_i\end{bmatrix}-\begin{bmatrix}\mu_x\\ \mu_y\\ \mu_z\end{bmatrix}\quad ③\begin{bmatrix}\sigma_x^2\\ \sigma_y^2\\ \sigma_z^2\end{bmatrix}=\sum_{i=1}^{n}\begin{bmatrix}\bar{x}_i^2\\ \bar{y}_i^2\\ \bar{z}_i^2\end{bmatrix}$$

Then, the minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. Table 1 below shows a combination of vertices for creating a triangle according to the number of the vertices. The vertices are ordered from 1 to n. Table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table 1] Triangles formed from vertices ordered 1,...,n

[Table 1]

| ***n*** | **Triangles** |
|---|---|
| **3** | (1,2,3) |
| **4** | (1,2,3), (3,4,1) |
| **5** | (1,2,3), (3,4,5), (5,1,3) |
| **6** | (1,2,3), (3,4,5), (5,6,1), (1,3,5) |
| **7** | (1,2,3), (3,4,5), (5,6,7), (7,1,3), (3,5,7) |
| **8** | (1,2,3), (3,4,5), (5,6,7), (7,8,1), (1,3,5), (5,7,1) |
| **9** | (1,2,3), (3,4,5), (5,6,7), (7,8,9), (9,1,3), (3,5,7), (7,9,3) |
| **10** | (1,2,3), (3,4,5), (5,6,7), (7,8,9), (9,10,1), (1,3,5), (5,7,9), (9,1,5) |
| **11** | (1,2,3), (3,4,5), (5,6,7), (7,8,9), (9,10,11), (11,1,3), (3,5,7), (7,9,11), (11,3,7) |
| **12** | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud video encoder according to the embodiments may voxelize the refined vertices. In addition, the point cloud video encoder may perform attribute encoding based on the voxelized positions (or position values).

FIG. 7 shows an example of a neighbor node pattern according to embodiments.

In order to increase the compression efficiency of the point cloud video, the point cloud video encoder according to the embodiments may perform entropy coding based on context adaptive arithmetic coding.

As described with reference to FIGS. 1 to 6, the point cloud content providing system or the point cloud video encoder 10002 of FIG. 1, or the point cloud video encoder or arithmetic encoder 40004 of FIG. 4 may perform entropy coding on the occupancy code immediately. In addition, the point cloud content providing system or the point cloud video encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud video encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud video encoder may perform coding according to the neighbor node pattern value (for example, when the neighbor node pattern value is 63, 64 kinds of coding may be performed). According to embodiments, the point cloud video encoder may reduce coding complexity by changing a neighbor node pattern value (based on, for example, a table by which 64 is changed to 10 or 6).

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud video encoder (e.g., the LOD generator 40009) may classify (reorganize or group) points by LOD. FIG. 8 shows the point cloud content corresponding to LODs. The leftmost picture in FIG. 8 represents original point cloud content. The second picture from the left of FIG. 8 represents distribution of the points in the lowest LOD, and the rightmost picture in FIG. 8 represents distribution of the points in the highest LOD. That is, the points in the lowest LOD are sparsely distributed, and the points in the highest LOD are densely distributed. That is, as the LOD rises in the direction pointed by the arrow indicated at the bottom of FIG. 8, the space (or distance) between points is narrowed.

FIG. 9 illustrates an example of point configuration for each LOD according to embodiments.

As described with reference to FIGS. 1 to 8, the point cloud content providing system, or the point cloud video encoder (e.g., the point cloud video encoder 10002 of FIG. 1, the point cloud video encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud video encoder, but also by the point cloud video decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud video encoder according to the embodiments may perform prediction transform coding based on LOD, lifting transform coding based on LOD, and RAHT transform coding selectively or in combination.

The point cloud video encoder according to the embodiments may generate a predictor for points to perform prediction transform coding based on LOD for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud video encoder according to the embodiments (e.g., the coefficient quantizer 40011) may quantize and inversely quantize the residual of each point (which may be called residual attribute, residual attribute value, attribute prediction residual value or prediction error attribute value and so on) obtained by subtracting a predicted attribute (or attribute value) each point from the attribute (i.e., original attribute value) of each point. The quantization process performed for a residual attribute value in a transmission device is configured as shown in table 2. The inverse quantization process performed for a residual attribute value in a reception device is configured as shown in Table 3.

[Table 2]

| |
|---|
| int PCCQuantization(int value, int quantStep) { |
| if( value >=0) { |
| return floor(value / quantStep + 1.0/3.0); |
| } else { |
| return -floor(-value / quantStep + 1.0 / 3.0); |
| } |
| } |

[Table 3]

| |
|---|
| int PCCInverseQuantization(int value, int quantStep) { |
| if( quantStep ==0) { |
| return value; |
| } else { |
| return value * quantStep; |
| } |
| } |

When the predictor of each point has neighbor points, the point cloud video encoder (e.g., the arithmetic encoder 40012) according to the embodiments may perform entropy coding on the quantized and inversely quantized residual attribute values as described above. When the predictor of each point has no neighbor point, the point cloud video encoder according to the embodiments (e.g., the arithmetic encoder 40012) may perform entropy coding on the attributes of the corresponding point without performing the above-described operation.

The point cloud video encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.
2) Lift prediction process: Subtract the value obtained by multiplying the attribute value of the point by the weight from the existing attribute value to calculate a predicted attribute value.
3) Create temporary arrays called updateweight and update and initialize the temporary arrays to zero.
4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.
5) Lift update process: Divide the attribute values of the update array for all predictors by the weight value of the updateweight array of the predictor index, and add the existing attribute value to the values obtained by the division.
6) Calculate predicted attributes by multiplying the attribute values updated through the lift update process by the weight updated through the lift prediction process (stored in the QW) for all predictors. The point cloud video encoder (e.g., coefficient quantizer 40011) according to the embodiments quantizes the predicted attribute values. In addition, the point cloud video encoder (e.g., the arithmetic encoder 40012) performs entropy coding on the quantized attribute values.

The point cloud video encoder (e.g., the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud video encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

Equation 3 below represents a RAHT transformation matrix. In Equation 3, $g_{l\ 'x,y,z}$ denotes the average attribute value of voxels at level *l*. $g_{l\ x,y,z}$ may be calculated based on $g_{l+1\ 2x,y,z}$ and $g_{l+1\ 2x+1,y,z}$. The weights for $g_{l\ 2x,y,z}$ and $g_{l\ 2x+1,y,z}$ are $w1 = w_{l\ 2x,y,z}$ and $w2 = w_{l\ 2x+1,y,z}$.

[Equation 3]

$$\begin{bmatrix} g_{l-1\ x,y,z} \\ h_{l-1_{x,y,z}} \end{bmatrix} = T_{w1\ w2} \begin{bmatrix} g_{l\ 2x,y,z} \\ g_{l_{2x+1,y,z}} \end{bmatrix} \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\ 'x,y,z}$ is a low-pass value and is used in the merging process at the next higher level. $h_{l-1\ 'x,y,z}$ denotes high-pass coefficients. The high-pass coefficients at each step are quantized and subjected to entropy coding (e.g., encoding by the arithmetic encoder 40012). The weights are calculated as $w_{l-1\ 'x,y,z} = w_{l\ 2x,y,z} + w_{l\ 2x+1,y,z}$. The root node is created through the $g_{1\ 0,0,0}$ and $g_{1\ 0,0,1}$ as Equation 4.

[Equation 4]

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

The value of gDC is also quantized and subjected to entropy coding like the high-pass coefficients.

FIG. 10 illustrates a point cloud video decoder according to embodiments.

The point cloud video decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud video decoder may receive a geometry bitstream and an attribute bitstream contained in one or more bitstreams. The point cloud video decoder includes a geometry decoder and an attribute decoder. The geometry decoder performs geometry decoding on the geometry bitstream and outputs decoded geometry. The attribute decoder performs attribute decoding on the attribute bitstream based on the decoded geometry, and outputs decoded attributes. The decoded geometry and decoded attributes are used to reconstruct point cloud content (a decoded point cloud).

FIG. 11 illustrates a point cloud video decoder according to embodiments.

The point cloud video decoder illustrated in FIG. 11 is an example of the point cloud video decoder illustrated in FIG. 10, and may perform a decoding operation, which is the reverse of the encoding operation of the point cloud video encoder illustrated in FIGS. 1 to 9.

As described with reference to FIGS. 1 and 10, the point cloud video decoder may perform geometry decoding and attribute decoding. The geometry decoding is performed before the attribute decoding.

The point cloud video decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct decoding and trisoup geometry decoding are selectively applied. The geometry decoding is not limited to the above-described example, and is performed as the reverse of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, upsampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud video encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud video encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud video encoder.

Although not shown in the figure, the elements of the point cloud video decoder of FIG. 11 may be implemented by hardware including one or more processors or integrated circuits configured to communicate with one or more memories included in the point cloud content providing apparatus, software, firmware, or a combination thereof. The one or more processors may perform at least one or more of the operations and/or functions of the elements of the point cloud video decoder of FIG. 11 described above. Additionally, the one or more processors may operate or execute a set of software programs and/or instructions for performing the operations and/or functions of the elements of the point cloud video decoder of FIG. 11.

FIG. 12 illustrates a transmission device according to embodiments.

The transmission device shown in FIG. 12 is an example of the transmission device 10000 of FIG. 1 (or the point cloud video encoder of FIG. 4). The transmission device illustrated in FIG. 12 may perform one or more of the operations and methods the same as or similar to those of the point cloud video encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquisition unit 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud video encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud video encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 40012.

The transmission processor 12012 according to the embodiments may transmit each bitstream containing encoded geometry and/or encoded attributes and metadata, or transmit one bitstream configured with the encoded geometry and/or the encoded attributes and the metadata. When the encoded geometry and/or the encoded attributes and the metadata according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS or tile inventory) for signaling of a tile level, and slice data. The slice data may include information about one or more slices. One slice according to embodiments may include one geometry bitstream $Geom0^0$ and one or more attribute bitstreams $Attr0^0$ and $Attr1^0$.

The slice is a series of a syntax element representing in whole or in part of the coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

FIG. 13 illustrates a reception device according to embodiments.

The reception device illustrated in FIG. 13 is an example of the reception device 10004 of FIG. 1 (or the point cloud video decoder of FIGS. 10 and 11). The reception device illustrated in FIG. 13 may perform one or more of the operations and methods the same as or similar to those of the point cloud video decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, upsampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform the reverse of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

FIG. 14 shows an exemplary structure operatively connectable with a method/device for transmitting and receiving point cloud data according to embodiments.

The structure of FIG. 14 represents a configuration in which at least one of a server 17600, a robot 17100, a self-driving vehicle 17200, an XR device 17300, a smartphone 17400, a home appliance 17500, and/or a head-mount display (HMD) 17700 is connected to a cloud network 17000. The robot 17100, the self-driving vehicle 17200, the XR device 17300, the smartphone 17400, or the home appliance 17500 is referred to as a device. In addition, the XR device 17300 may correspond to a point cloud compression data (PCC) device according to embodiments or may be operatively connected to the PCC device.

The cloud network 17000 may represent a network that constitutes part of the cloud computing infrastructure or is present in the cloud computing infrastructure. Here, the cloud network 17000 may be configured using a 3G network, 4G or Long Term Evolution (LTE) network, or a 5G network.

The server 17600 may be connected to at least one of the robot 17100, the self-driving vehicle 17200, the XR device 17300, the smartphone 17400, the home appliance 17500, and/or the HMD 17700 over the cloud network 17000 and may assist in at least a part of the processing of the connected devices 17100 to 17700.

The HMD 17700 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 17100 to 17500 to which the above-described technology is applied will be described. The devices 17100 to 17500 illustrated in FIG. 14 may be operatively connected/coupled to a point cloud data transmission device and reception according to the above-described embodiments.

<PCC+XR>

The XR/PCC device 17300 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 17300 may analyze 3D point cloud data or image data acquired through various sensors or from an external device and generate position data and attribute data about 3D points. Thereby, the XR/PCC device 17300 may acquire information about the surrounding space or a real object, and render and output an XR object. For example, the XR/PCC device 17300 may match an XR object including auxiliary information about a recognized object with the recognized object and output the matched XR object.

<PCC+Self-driving+XR>

The self-driving vehicle 17200 may be implemented as a mobile robot, a vehicle, an unmanned aerial vehicle, or the like by applying the PCC technology and the XR technology.

The self-driving vehicle 17200 to which the XR/PCC technology is applied may represent a self-driving vehicle provided with means for providing an XR image, or a self-driving vehicle that is a target of control/interaction in the XR image. In particular, the self-driving vehicle 17200 which is a target of control/interaction in the XR image may be distinguished from the XR device 17300 and may be operatively connected thereto.

The self-driving vehicle 17200 having means for providing an XR/PCC image may acquire sensor information from sensors including a camera, and output the generated XR/PCC image based on the acquired sensor information. For example, the self-driving vehicle 17200 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 17200 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world obj ects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud compression data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, the point cloud data may include a set of points, and each point may have a geometry (referred to also as geometry information) and an attribute (referred to as attribute information). The geometry information represents three-dimensional (3D) position information (xyz) of each point. That is, the position of each point is represented by parameters in a coordinate system representing a 3D space (e.g., parameters (x, y, z) of three axes, X, Y, and Z axes, representing a space). The attribute information represents color (RGB, YUV, etc.),

reflectance, normal vectors, transparency, etc. of the point.

According to embodiments, a point cloud data encoding process includes compressing geometry information based on an octree, a trisoup, or prediction and compressing attribute information based on geometry information reconstructed (or decoded) with position information changed through compression. A point cloud data decoding process includes receiving an encoded geometry bitstream and an encoded attribute bitstream, decoding geometry information based on an octree, a trisoup, or prediction, and decoding attribute information based on geometry information reconstructed through a decoding operation.

The present disclosure aims to improve compression efficiency in compressing geometry information based on octree by removing redundant information based on correlation between frames.

The present disclosure aims to improve compression efficiency by reflecting the similarity of information between different frames in compressing geometry information based on octree.

In other words, according to the present disclosure, when point cloud data is composed of consecutive frames, high coding efficiency may be achieved by removing redundant information based on high correlation between neighboring frames.

According to embodiments, the geometry encoder constructs an octree based on the positions of the input points and performs geometry compression based on the octree. The prediction for geometry compression may be performed within a frame, or may be performed between frames. In the present disclosure, the former is referred to as intra-frame prediction and the latter is referred to as inter-frame prediction. That is, geometry coding based on intra-frame prediction is performed based on the similarity between points within the current frame. When point cloud data is composed of consecutive frames, the correlation between neighboring frames is high. If only intra-based geometry compression is performed without considering this feature, the efficiency of geometry coding decreases.

Therefore, in one embodiment of the present disclosure, an inter-prediction based geometry coding method is applied when the point cloud data is composed of consecutive frames.

In particular, according to the present disclosure, the compression efficiency may be improved by using a neighbor occupancy pattern of a predictive node existing in a previous frame.

Furthermore, according to the present disclosure, the compression efficiency may be improved by determining the prediction accuracy based on the similarity between the neighbor occupancy pattern of the previous frame and the neighbor occupancy pattern of the current frame.

In addition, the method/device for transmitting and receiving point cloud data according to the embodiments may be simply referred to as a method/device according to the embodiments.

The point cloud data transmission method/device according to the embodiments is construed as a term referring to the transmission device 10000, point cloud video encoder 10002, and transmitter 10003 of FIG. 1, the acquisition 20000-encoding 20001-transmission 20002 of FIG. 2, the point cloud video encoder of FIG. 4, the transmission device of FIG. 12, the device of FIG. 14, the transmission device of FIG. 23, and the like.

The point cloud data reception method/device according to the embodiments is construed as a term referring to the reception device 10004, receiver 10005, and point cloud video decoder 10006 of FIG. 1, the transmission 20002-decoding 20003-rendering 20004 of FIG. 2, the decoder of FIG. 10, the point cloud video decoder of FIG. 11, the reception device of FIG. 13, the device of FIG. 14, the reception device of FIG. 32, and the like.

According to embodiments, the encoding of the point cloud data may be performed by the point cloud video encoder 10002 of FIG. 1, the encoder 20001 of FIG. 2, the point cloud video encoder of FIG. 4, the point cloud video encoder of FIG. 12, the geometry encoder 51003 of FIG. 23, the geometry encoder of FIG. 24, or the geometry encoding of FIG. 25. The decoding of the point cloud data according to embodiments may be performed by the point cloud video decoder 10006 of FIG. 1, the decoder 20003 of FIG. 2, the point cloud video decoder of FIG. 11, the point cloud video decoder of FIG. 13, the geometry decoder 61003 of FIG. 32, the geometry decoder of FIG. 34, or the geometry decoding of FIG. 35. FIGS. 23 to 25 and FIGS. 32 and 33 will be described in detail later.

According to embodiments, geometry data, geometry information, position information, and the like constituting the point cloud data are construed as having the same meaning. In addition, attribute data, attribute information, and the like constituting point cloud data are construed as having the same meaning.

Methods for increasing compression efficiency in octree-based geometry (or position) compression are described in detail below.

According to embodiments, geometry compression is context-based compression that improves methods for predicting probabilities based on relevant information in compressing nodes to be compressed in the current frame.

According to embodiments, a prediction unit (PU) and a predictor are defined to perform inter-frame geometry compression.

According to embodiments, the PU is defined in the current frame and the predictor is defined in a reference frame (e.g., a previous frame).

In the present disclosure, a PU may be defined as a set of neighboring nodes at a certain depth in the octree of the current frame. In particular, a PU may be defined as a set of nodes that have the same parent.

In the present disclosure, a predictor may be defined as information in a reference frame that is found based on motion estimation. That is, a predictor may be defined as a set of nodes having characteristics most similar to the PU of the current frame within a search window (or range) of the reference frame.

According to embodiments, a motion that is present between frames may be defined in a three-dimensional space such as x, y, and z. The motion between frames may be defined by a global motion vector. In contrast, there may be locally different motions within a frame, which may be defined by a local motion vector.

According to embodiments, the motion vector (MV) may be provided by external sources (e.g., the global motion vector may be acquired through GPS information on a vehicle if the data is acquired by a LiDAR mounted on the vehicle), or motion estimation techniques may be used to estimate the motion vector between frames. The acquired MV may then be used to estimate information in the current frame based on information in the previous frame.

In an embodiment of the present disclosure, motion estimation is performed on a PU-by-PU basis. In other words, for each PU, motion estimation (ME) may be performed within a search window, which is a range for finding a MV in a reference frame (also referred to as a previous frame). The search window according to the embodiments may be defined as a whole or part of the reference frame, and may be defined in a three-dimensional space.

In this case, if the motion between adjacent frames is not significant, the similarity between the compression target node in the current frame and the predictive node in the reference frame as well as the similarity between at least one neighbor of the compression target node and at least one neighbor of the predictive node may be assumed. Based on these assumptions, the occupancy information about at least one neighbor of the predictive node may be used in addition to the occupancy information about the predictive node, and the compression efficiency may be increased based on this additional information.

The present disclosure proposes methods for increasing compression efficiency based on occupancy information of a neighbor node in using a motion estimation-based geometry compression method.

1) Motion estimation based on neighbor occupancy

Hereinafter, motion estimation based on neighbor occupancy is described.

FIG. 15 is a diagram illustrating an example of a search window in a reference frame, according to embodiments.

Motion estimation according to the embodiments may be performed on a a per-PU basis.

For any PU defined in the current frame, motion estimation (ME) may be performed to estimate similar information in a reference frame, as shown in FIG. 15. In the present disclosure, the reference frame refers to a frame that is referenced in encoding/decoding the current frame, and may represent at least one frame that has been encoded and/or decoded prior to the current frame. That is, the encoding/decoding efficiency of the current frame may be increased by referencing a frame processed prior to the current frame in performing inter-frame estimation.

In this case, a motion search window may be defined within the reference frame for efficiency of motion estimation, and the similarity to the information contained in the PU of the current frame may be estimated. According to embodiments, the present disclosure may use information about a neighbor node for the PU (i.e., the compression target node) as a method for increasing the accuracy of motion estimation.

In FIG. 15, six neighbor nodes on the top, bottom, left, right, front, and back of the target node may be considered simultaneously. In another example, 26 neighbor nodes may be considered simultaneously. Also, depending on the method applied, other definitions of neighbor nodes (e.g., points, lines, face-touching nodes, etc.) may be used. This is based on the assumption that areas with high continuity between frames are highly likely to exhibit similar motion, not only for the target node, but also for its neighbors.

According to embodiments, when the set of points belonging to the PU of the current frame is defined as PU block B, and the set of points belonging to any prediction candidate defined within the search window W of the reference frame is defined as a predictor candidate or predictor P, the difference between B and P (i.e., the error or residual) D(B, P) may be defined as a function of the difference for each point, as shown in Equation 5.

[Equation 5]

$$D(B, Bn, P, Pn) = \sum_{b \in B, bn \in Bn} \log_2 \left(1 + \min_{p \in P}\{\|b(x,y,z) - p(x,y,z)\|_L + w\|bn(x,y,z) - pn(x,y,z)\|_L\}\right)$$

In Equation 5, the sets of neighbors, B and P, are defined as Bn and Pn , respectively, and the relative position of each node with respect to PU and/or P may be represented by B(-1, 0, 0), B(1, 0, 0), B(0, -1, 0), B(0, 1, 0), B(0, 0, -1), and B(0, 0, 1), or P(-1, 0, 0), P(1, 0, 0), P(0, -1, 0), P(0, 1, 0), P(0, 0, -1), and P(0, 0, 1). Then, when the points belonging to B and P are defined as b and p, respectively, and the positions thereof may be defined as b(x,y,z) and p(x,y,z), respectively. Also, when the points belonging to Bn and Pn are defined as bn and pn, respectively, Equation 5 may represent the difference between B and P. In one embodiment, the value of the difference between B and P may be referred to as a residual value, a residual geometry value, or a prediction error geometry value.

In Equation 5, w may be used as a weight to determine the importance of the predictor and neighbors. Different weights may be applied to different neighbor positions as needed. For example, assuming that the node at the center (e.g., the target node) has a weight equal to 1, 0.5 may be assigned to its neighbors. As another example, assuming that 26 neighbor nodes are considered, nodes that share a face may be assigned a weight of 0.6, nodes that share a line may be assigned a weight of 0.4, and nodes that share only a vertex may be assigned a weight of 0.2. In this way, different weights may be assigned depending on the distance between the target node and its neighbors.

Then, when the difference between the PU and the predictor candidate is defined as described above, the motion estimation in the reference frame with respect to the PU may define as a predicted value the predictor candidate P with the least value of D(B, P) among all predictor candidates P definable in the search window. In this case, the motion vector V between two blocks (e.g., B and P) may be defined as the difference between the positions of the two blocks (P(x,y,z)-B(x,y,z)), as shown in Equation 6 below.

[Equation 6]

$$V(x, y, z) = P(x, y, z) - B(x, y, z)$$

By defining the motion vector as shown in Equation 6, the best motion vector may be found in terms of transmission efficiency while minimizaing the error.

Furthermore, a cost function (C(V)) that adjusts the error D(B, P(W,V)) caused by the motion vector and the bit usage (R(V)) caused by the use of the motion vector with a weighting function $\lambda$ may be derived as shown in Equation 7 below.

[Equation 7]

$$C(V) = D(B, P(W, V)) + \lambda R(V)$$

With the cost function in Equation 7, an optimal motion vector that uses fewer bits while reducing error may be found based on the weighting function. For example, when the weighting function is 0, a motion vector that minimizes error will be used. On the other hand, when the weighting function is infinite, the motion vector will converge to 0 to minimize the bits used (motion vector = 0).

FIGS. 16-(a) and 16-(b) are diagrams illustrating examples of signaling of split and flag information in an octree structure according to embodiments.

According to embodiments, in addition to a motion vector at a specific octree depth, a motion vector for the optimal octree may be found in a specific range of octree depths. In this case, flag information may be used to indicate whether each octree node is occupied, and to indicate that the octree should be split if no motion vector is found.

According to embodiments, the flag information may include a split flag (referred to as split flag information) and a population flag (referred to as population flag information). The flag information may be contained in a data unit (e.g., FIG. 31).

According to embodiments, occupancy bit information for a child node of the current node at the current octree depth may be indicated by the population flag. According to embodiments, whether to transmit a motion vector at the current octree depth or at a lower depth may be indicated by the split flag. The population flag and the split flag may be included and transmitted in geometry compression related information.

For example, when the value of the split flag is 0, the motion vector may be transmitted based on the node at the current depth. That is, the split flag equal to 0 indicates that the corresponding node (e.g., a cube or space) at the current depth is no longer split. Therefore, the motion vector is transmitted at the node.

For example, the split flag equal to 1 may indicate that splitting to the next depth after the current depth is performed. That is, the split flag equal to 1 indicates that the corresponding node (e.g., a cube or space) at the current depth will be split to the next depth. Therefore, no motion vectors will be transmitted at the node.

Furthermore, whether the split region is occupied or not may be indicated using the population flag. For example, the population flag equal to 1 indicates that the region is occupied (i.e., the region contains at least one point), while the population flag equal to 0 indicates that the region is not occupied (i.e., the region does not contain the at least one point). In other words, when the population flag is equal to 1, there is an occupancy bit. When the population flag is equal to 0, there is no occupancy bit.

For example, when the value of the split flag is 0, the node at the current depth is split. As another example, when the value of the split flag is 1, the node at the current depth is split into four nodes in 2D. This means that it will be split into 8 nodes in 3D. If the split nodes are not further split, the value of the split flag will be 0. That is, the split flag will be 1 0000. When the split nodes are referred to as first quadrant, second quadrant, third quadrant, and fourth quadrant in 2D, the value of the population flag will be 1000 if the first quadrant has an occupancy bit and the others do not have an occupancy bit.

In other words, in FIG. 16-(a), the first figure is not split, and therefore the value of the split flag is 0. The second figure has been split only once to a lower depth, and therefore the value of the split flag is 1 0000 in the case of 2D, and the value of the population flag is 1000 (where 1 represents the occupied hatched portion). The third figure is obtained by splitting the left two squares (or spaces) in the second figure into a sub-depth again, and therefore the value of the split flag is 1 1010 in the case of 2D and the value of the population flag is 01 1001 1000 (where 1 represents the occupied hatched portions).

FIG. 16-(b) illustrates an example of partitioning (i.e., splitting) a large prediction unit (LPU) into multiple PUs. The LPU is the largest prediction unit. In FIG. 16-(b), the hatched portion represents a populated LPU. That is, an LPU with an occupancy bit may be split into PUs. On an octree-depth basis, as the depth increases, the nodes may be split more finely.

In 2D, splitting after first splitting at a specific depth may yield various results, as shown in FIG. 16-(b). In this case, the presence of an occupancy bit in the split nodes (regions) may be indicated using the population flag.

In the present disclosure, the split flag and population flag are transmitted to the reception device because the reception device needs to perform the same splitting operation as the transmission device. In other words, when the reception device receives an MV, the reception device may identify the node from which the MV is received based on the split flag and the population flag.

To determine whether to perform splitting for each octree depth, the transmission/reception device/method according to embodiments may define a cost function (C(V)) as a cumulative value of the costs of the sub-PUs, as shown in Equation 8 below. where λ1 and λ2 are weighting functions.

[Equation 8]

$$C(V) = \sum_i D(B, P(W, V_i) + \lambda_1 R(V_i) + \lambda_2 R(\text{split/population flags})$$

In Equation 8, the cost function may include a term that represents the error and bit usage resulting from using the motion vector, or the cost of the operation in the case of splitting a node. Thus, the cost function may determine whether to split an octree node according to the lowest cost calculated in the cost function. In other words, according to embodiments, the cost of splitting an octree node may be compared with the cost of transmitting a motion vector, and the splitting (or encoding operation) may be determined according to the lower cost.

FIG. 17 is a diagram illustrating an example of calculating a cost function for an octree node according to embodiments. In particular, the diagram illustrates an example of calculating a cost function (e.g., C(V1), C(V4)) for the occupied node(s) among the split child nodes. In this case, the value of the split flag is 10000 and the value of the population flag is 1001.

According to embodiments, the cost function for all nodes may be obtained by Equation 9 below, where λ is a weighting function.

[Equation 9]

$$C = C(V_1) + C(V_4) + \lambda R_{split}(10000) + \lambda R_{pop}(1001)$$

That is, based on the cost for MV 1 and the cost for MV 2 that have an occupancy bit, a cost function may be computed. When the occupancy is equal to 1001 at a specific depth, the cost for MV1 and MV2 of the occupancy node may be calculated to determine whether to split the node.

The transmission/reception device/method according to embodiments may select whether to split the node at a specific depth of the octree or apply a motion vector based on the cost function described above.

FIG. 18 is a diagram illustrating an example of performing splitting at an octree depth according to embodiments.

FIG. 18 shows the result of performing the operation of finding a motion vector for point cloud data having an octree structure. In the figure, a depth range for performing motion estimation in an octree structure from a root to a leaf is indicated as 50001. According to embodiments, in the case where delivering an MV for a specific node without splitting the node requires a lower cost than splitting the node, the split flag for that node may be set to 0 (split flag=0, i.e., No splitting) and the MV for the node may be delivered. Conversely, in the case where splitting the node requires a lower cost than delivering the MV, the split flag for the node may be set to 1 (split flag=1, i.e., split the node) and the MV may be delivered by a child node. In other words, the MV is transmitted at the node if the node is not split, and the MV is transmitted at the child node if the node is split.

Region 50001 may be represented by an ME depth start and an ME depth end. Here, the ME depth start and ME depth end may indicate a range of octree depths (or levels) in which motion estimation is performed. In FIG. 18, it is determined whether motion estimation is performed from the next child of the root node to the immediate parent of the leaf node. Nodes 50003, 50004, 50006, and 50007 with split flag equal to 0 are nodes that do not split because delivering the motion vector is less costly than splitting, and nodes 50002 and 50005 with split flag equal to 1 are nodes that are split because it is less costly to deliver the motion vector than to split the nodes. In the latter case, the MV is delivered at the child nodes.

In other words, the nodes 50003, 50004, 50006, and 50007 with the split flag equal to 0 are not split, and thus their respective MVs are delivered at the nodes 50003, 50004, 50006, and 50007. Also, nodes 50002 and 50005 with the split flag equal to 1 are split, and thus each MV is transmitted at the children of the nodes 50002 and 50005.

According to embodiments, the cost of generating an MV at node 50002 may be calculated, the cost of splitting node 50002 and generating MVs at nodes 50004 and 50005 may be calculated, and the two costs may be compared. If the cost of the lower depth split is more efficient (i.e., lower), the split may proceed at node 50002 and the split flag may be assigned a value of 1.

FIG. 19 is a diagram illustrating an example of inter-prediction according to embodiments.

As described above, with an inter-prediction based geometry compression method, a predictor (or prediction block) P in a reference frame may be identified from the information about the motion vector V for the reference frame. When the position of the PU block where the prediction is performed in the current frame is B(x,y,z) and the motion vector V is V(x,y,z), the position P(x,y,z) of the predictor P may be defined as shown in Equation 10 below.

[Equation 10]

$$P(x,y,z) = B(x,y,z) + V(x,y,z)$$

In this case, the position of the block may be defined as the minimum value along each axis of the bounding box for the points included in the block. According to embodiments, a prediction target (or PU block) B in the current frame may be predicted based on the predictor P defined in the reference frame. Also, when a predicted block for the PU in the current frame is defined as B', the occupancy of the points belonging to B' conforms to the occupancy of P, and the positions b'(x,y,z) of the points b' belonging to B' are defined based on the position p(x,y,z) and the motion vector V(x,y,z) of the point p belonging to P, as shown in Equation 11 below.

[Equation 11]

$$\text{Occupancy of } B' = \text{occupancy of } P$$

$$b'(x,y,z) = p(x,y,z) - V(x,y,z)$$

When the current point cloud data (e.g., positions) is predicted on an inter-frame basis, as shown in FIG. 19, neighbor occupancy may be further considered.

To consider the neighbor occupancy, a neighborhood occupancy pattern of a predictor is described below.

2) Neighbor occupancy pattern

When information found in the reference frame based on motion estimation according to embodiments is defined as a predictor, the child occupancy of the predictor may be used as additional information for increasing the efficiency of compressing (or reconstructing) the child occupancy information related to the PU. According to embodiments, entropy coding is used to compress point cloud data, and the additional information may be used as context to increase compression efficiency. In other words, in the case of octree-based geometry coding, context information about previous nodes may be used sequentially and cumulatively to increase compression performance.

In the present disclosure, by using reference frame-based prediction to compress the child occupancy of a PU in the current frame, the distribution characteristics of similar points in a previous frame may be referenced, thereby increasing compression efficiency. Similarly, by referencing the characteristics of the neighbor distribution in consideration of not only the predictor in the reference frame but also the neighbor occupancy of the predictor, the accuracy of the prediction may be improved and the compression efficiency may be increased.

The present disclosure describes a method for considering a neighbor occupancy pattern of a predictor in order to consider the neighbor occupancy and a method for comparing neighbor occupancy distribution characteristics of a predictor and a PU.

According to embodiments, the neighbor occupancy pattern of a predictor selected as a block similar to a prediction target PU in the reference frame may be used for compression (or reconstruction).

FIGS. 20-(a) and 20-(b) illustrate an example of an operation of obtaining a neighborhood occupancy pattern (also referred to as a neighbor node pattern) based on a predictor and occupancy information about the neighbors of the predictor according to embodiments.

When neighbor nodes (i.e., square or cube whose faces touch the predictor) of the predictor (i.e., the hatched square or cube located at the center) are defined as defined in the motion estimation above, 64 (=$2^6$) neighbor occupancy patterns may be defined depending on the occupancy situation of the six neighbor nodes (i.e., nodes that share at least one face with the predictor). In other words, the nodes shown in the figure are nodes of the same depth. The numbers shown in the figure represent the weights (1, 2, 4, 8, 16, 32, etc.) associated with each of the six neighbor nodes. The weights are assigned sequentially based on the positions of the neighbor nodes.

Referring to FIGS. 20-(a) and 20-(b), each neighbor node is assigned a number (i.e., a weight), and an occupancy pattern index may be defined by summing the numbers corresponding to the occupied neighbor nodes. That is, the occupancy pattern index is the sum of values obtained by multiplying numbers corresponding to the occupied neighbor nodes (i.e., the neighbors with points) by corresponding weights. Therefore, the occupancy pattern index may range from 0 to 63. For example, when the neighbor nodes on the top, bottom, and left of the predictor are occupied, the occupancy pattern index may be 1+ 2+ 4+ 8 = 15, as shown in (b) of FIG. 20.

As another example, the occupancy pattern index equal to 0 indicates that there are no nodes with points (occupied nodes) among the neighbor nodes of the predictor. Also, the occupancy pattern index equal to 63 indicates that all the neighbor nodes of the predictor are occupied nodes.

In the present disclosure, a neighbor node is considered as a node that is of the same size as the predictor and is in face contact with the predictor, but nodes of different sizes or at different positions (e.g., line-sharing nodes, vertex-sharing nodes, etc.) may be considered as neighbors of the predictor.

As such, the point cloud video encoder according to embodiments may determine the occupancy of the neighbors of the predictor and obtain an occupancy pattern index.

FIG. 21 is a diagram illustrating an example of neighbor occupancy patterns according to embodiments.

According to embodiments, the number of neighbor occupancy patterns that may be presented in FIG. 20 may be reduced as shown in FIG. 21. FIG. 21 illustrates an example of reducing 64 neighbor occupancy patterns to 10 neighbor occupancy patterns, taking into account redundant patterns.

According to embodiments, the number of neighbor occupancy patterns may be reduced by rotating the predictor. For example, assuming that only one neighbor node is occupied, rotating the predictor 90, 180, or 270 degrees in the x-y plane with respect to up, left, and down, and rotating the predictor 90, 180, or 270 degrees in the x-z plane with respect to back and front may be considered to result in the same neighbor occupancy pattern as that in the case where the right node is occupied. In this way, the number of neighbor occupancy patterns can be reduced by rotation, mirroring, and the like.

In other words, when the number of neighbor occupancy patterns is 64, 64 types of coding need to be performed, but the present disclosure may reduce the number of neighbor occupancy patterns for the predictor by applying the patterns in FIG. 21, thereby reducing the complexity of coding.

According to embodiments, the method described with reference to FIGS. 20-(a), 20-(b), and 21 may be applied to define neighbor occupancy patterns and occupancy pattern indexes for a node to be compressed in the current frame and to reduce the number of the neighbor occupancy patterns. For example, the present disclosure may reduce the number of neighbor occupancy patterns for a PU in the current frame corresponding to the predictor by applying the method of FIG. 21, thereby reducing the complexity of coding.

Next, a method for comparing the neighbor occupancy distribution characteristics of a PU and a predictor based on a score is described.

3) Neighbor occupancy score

In accordance with the present disclosure, a neighbor occupancy pattern-based context may be used to compare the similarity between corresponding neighbors of a PU and a predictor.

FIG. 22 is a diagram illustrating an example PU and predictor for calculating a neighbor occupancy score according to embodiments. The neighbor occupancy score may be referred to as an occupancy comparison score.

FIG. 22 defines six neighbors for each of the PU and the predictor and shows the corresponding neighbor nodes for each of the following positions: up, down, left, right, front, and back. In this case, it may be determined that the prediction accuracy of the predictor increases as the percentage of matches of the occupancy information about the corresponding nodes increases. Conversely, if the occupancy information about the corresponding neighbor nodes is all mismatched, the prediction accuracy of the predictor may be determined to be low. For example, assuming that the occupancy information about the neighbor nodes of the PU is 101011 in order of up, down, left, right, front, and back, and the occupancy information about the neighbor nodes of the predictor is 010100, the occupancy information about the corresponding neighbor nodes between the PU and the predictor are all mismatched.

According to embodiments, two methods may be used to compare the occupancy information about the neighbor nodes of the PU with the occupancy information about the corresponding neighbor nodes of the predictor, as shown in FIG. 22. The two methods will be described below as a first embodiment and a second embodiment.

First Embodiment

First, the occupancy status for the n-th neighbor of the PU or the predictor may be indicated by a PU neighbor occupancy flag (n) and/or a predictor neighbor occupancy flag (n). Here, n denotes an index of the positions of the neighbor nodes (e.g., six nodes in FIG. 22). The PU neighbor occupancy flag (n) and/or the predictor neighbor occupancy flag (n) may be included in signaling information, for example, in at least one of SPS, GPS, APS, TPS, or may be included in a geometry data unit header of a geometry data unit (or geometry bitstream) or in a data unit.

For example, the PU neighbor occupancy flag (n) or predictor neighbor occupancy flag (n) equal to 1 may indicate that the n-th neighbor node is occupied, while the PU neighbor occupancy flag (n) or predictor neighbor occupancy flag (n) equal to 0 may indicate that the n-th neighbor node is not occupied (i.e., non-occupied). That is, the PU neighbor occupancy flag (n) equal to 1 may indicate that the n-th neighbor of the compression target node of the PU is occupied, while the PU neighbor occupancy flag (n) equal to 0 may indicate that the n-th neighbor of the compression target node of the PU is non-occupied. Furthermore, the predictor neighbor occupancy flag (n) equal to 1 may indicate that the n-th neighbor node of the predictor is occupied, while the predictor neighbor occupancy flag (n) equal to 0 may indicate that the n-th neighbor node of the predictor is non-occupied.

Based on these indications, the present disclosure may define (or identify) whether the occupancy of the n-th neighbor node of the PU is matches that of the predictor.

That is, if the PU neighbor occupancy information matches the predictor neighbor occupancy information in terms of the position of the n-th neighbor node (i.e., both n-th neighbor nodes are occupied or unoccupied), the n-th neighbor occupancy comparison flag may be defined as 1, as shown in Equation 12 below.

[Equation 12]

$$\text{neighbor occupancy comparison flag}(n) = 1 \quad \text{if PU neighbor occupancy flag}(n) = \text{Predictor neighbor occupancy flag}(n)$$

On the contrary, if the PU neighbor occupancy information mismatches the predictor neighbor occupancy information in terms of the position of the n-th neighbor node (i.e., one n-th neighbor node is occupied and the other is unoccupied), the n-th neighbor occupancy comparison flag may be defined as 0, as shown in Equation 13 below.

[Equation 13]

$$\text{neighbor occupancy comparison flag}(n) = 0 \quad \text{if PU neighbor occupancy flag}(n) =/= \text{Predictor neighbor occupancy flag}(n)$$

Second Embodiment

The present disclosure provides a neighbor occupancy score for the predictor based on a comparison between the neighbors of the PU and the predictor, as shown in Equation 14 below.

[Equation 14]

1) neighbor occupancy score 1= $sum_n$ (neighbor occupancy comparison flag(n) << n)

2) neighbor occupancy score 2= $sum_n$ (neighbor occupancy comparison flag (n))

3) neighbor occupancy score 3= $sum_n$ (neighbor occupancy comparison flag (n)) if PU neighbor occupancy flag (n) = 1,

4) neighbor occupancy score 4= $sum_n$ (neighbor occupancy comparison flag (n)) if PU neighbor occupancy flag (n) = 0

In other words, Equation 14 describes a method of obtaining a neighbor occupancy score.

In Equation 14, 1) represents a method of presenting a pattern for each position based on the neighbor occupancy comparison flag. In other words, in the case of 1), a 6-bit map (in the case of FIG. 22) related to whether the neighbor occupancy corresponds may be provided. In Equation 14, 2) represents a method of obtaining the number of matching neighbor nodes. For example, in FIG. 22, assuming that the up, down, and left nodes are occupied and the right and front nodes are unoccupied, the neighbor occupancy score 2 may be 5. In Equation 14, 3) represents a method of obtaining the number of occupied neighbor nodes that match between the PU and the predictor. For example, in FIG. 22, assuming that the up, down, and left nodes are occupied and the right and front nodes are unoccupied, the neighbor occupancy score 3 may be 3. In Equation 14, 4) represents a method of obtaining the number of unoccupied neighbor nodes that matche between the PU and the predictor match. For example, in FIG. 22, assuming that the up, down, and left nodes are occupied and the right and front nodes are unoccupied, the neighbor occupancy score 4 may be 2. As such, the present disclosure may design neighbor occupancy scores as shown in Equation 14.

According to embodiments of the present disclosure, the most appropriate context table for entropy encoding of the geometry information may be selected based on the neighbor occupancy scores obtained as in Equation 12, Equation 13, or Equation 14. That is, the geometry information may be entropy coded based on the selected context table.

According to embodiments, the context table may be the base information for assigning codewords in entropy coding. That is, the length of the codeword assigned in entropy coding may vary depending on the result of the comparison between the occupancy information about the neighbor nodes of the PU and the occupancy information about the corresponding neighbor nodes of the predictor. In this case, the context table may be updated on a PU-by-PU basis.

According to embodiments, it may be determined that the prediction accuracy increases with the number of occupied and/or unoccupied neighbor nodes that match between the PU and the predictor. In other words, the probability that the compression target node of the PU and the predictive node of the predictor are similar is high. In this case, a context table where short codewords are available may be selected to perform entropy coding. Conversely, it may be determined that the prediction accuracy decreases as the number of occupied and/or unoccupied neighbor nodes that match between the PU and the predictor decreases. In this case, a context table where long codewords are available may be selected to perform entropy coding. In this way, in the current disclosure, by using the occupancy information about the neighbors of the compression target node of the PU in the current frame and the predictive node in the reference frame, as well as the occupancy information about the neighbors of the compression target node of the PU in the current frame and the occupancy information about the neighbors of the predictive node in the reference frame, it may be determined whether the accuracy of the prediction is high, and the most appropriate context table may be selected based on the determination to perform entropy coding.

For example, for neighbor occupancy score 1, a different context table may be used for each score, or the context table may be divided into a smaller number of scores (e.g., 10 neighbor occupancy patterns, see FIG. 21) by removing redundant occupancy scores obtained by rotation or tile.

As another example, for neighbor occupancy score 2, the context table may be divided into two or more sections based on a threshold. In this case, if the score is greater than or equal to the threshold, it may be determined that there are a sufficient number of matching nodes, in which case the probability that the prediction similarity is high is high. On the other hand, if the score is less than the threshold, there are many mismatches, and thus the probability that the prediction similarity is low is high, in which case the probability may be updated by dividing the context table into a match case and a mismatch case.

As another example, for neighbor occupancy scores 3 and 4, if the neighbor of the compression target node is occupied or unoccupied, it is checked if the corresponding neighbor of the predictor is equally occupied or unoccupied. In other words, different context tables may be used depending on the number of matching occupied neighbor nodes of the PU and the predictor, or depending on the number of matching unoccupied neighbor nodes of the PU and the predictor. In other words, different context tables may be used by comparing the matching occupancy/unoccupancy ratio of the neighbors of the compression target node and the neighbors of the predictor. According to embodiments, the neighbor occupancy score according to each relation may be calculated and the most efficient method may be selected to perform entropy encoding/decoding on the geometry information.

FIG. 23 is a diagram illustrating another example of a point cloud transmission device according to embodiments. The elements of the point cloud transmission device illustrated in FIG. 23 may be implemented by hardware, software, processors, and/or combinations thereof.

According to embodiments, the point cloud transmission device may include a data input unit 51001, a signaling processor 51002, a geometry encoder 51003, an attribute encoder 51004, and a transmission processor 51005.

The geometry encoder 51003 and the attribute encoder 51004 may perform some or all of the operations described in the point cloud video encoder 10002 of FIG. 1, the encoding 20001 of FIG. 2, the point cloud video encoder of FIG. 4, and the point cloud video encoder of FIG. 12.

The data input unit 51001 according to embodiments receives or acquires point cloud data. The data input unit 51001 may perform some or all of operations of the point cloud video acquisition unit 10001 in FIG. 1 or some or all of the operations of the data input unit 12000 in FIG. 12.

The data input unit 51001 outputs positions of points of point cloud data to the geometry encoder 51003, and outputs attributes of points of point cloud data to the attribute encoder 51004. Parameters are output to the signaling processor 51002. In some embodiments, the parameters may be provided to the geometry encoder 51003 and the attribute encoder 51004.

The geometry encoder 51003 constructs an octree based on the positions of the input points and performs geometry compression based on the octree. The prediction for geometry compression may be performed within a frame, or may be performed between frames. In the present disclosure, the former is referred to as intra-frame prediction and the latter is referred to as inter-frame prediction. The geometry encoder 51003 performs entropy encoding on the compressed geometry information and outputs the result to the transmission processor 51005 in the form of a geometry bitstream.

In one embodiment of the present disclosure, geometry compression is performed based on inter-frame prediction. That is, the geometry encoder 51003 performs entropy coding on the geometry information considering the occupancy information about the neighbor nodes of the PU of the current frame and the occupancy information about the neighbor nodes of the predictor of the reference frame as well as the PU of the current frame and the predictor of the reference frame, as described in FIGS. 15 to 22.

The geometry encoder 51003 reconfigures the geometry information based on positions changed through compression, and outputs the reconfigured (or decoded) geometry information to the attribute encoder 51004.

The attribute encoder 51004 compresses attribute information based on positions at which geometry encoding is not performed and/or reconfigured geometry information. According to an embodiment, the attribute information may be coded using any one or a combination of one or more of RAHT coding, LOD-based predictive transform coding, and lifting transform coding. The attribute encoder 51004 performs entropy encoding on the compressed attribute information and outputs the information to the transmission processor 51005 in the form of an attribute bitstream.

The signaling processor 51002 may generate and/or processes signaling information necessary for encoding/decoding/rendering of the geometry information and attribute information and provide the generated and/or processed signaling information to the geometry encoder 51003, the attribute encoder 51004, and/or the transmission processor 51005. Alternatively, the signaling processor 51002 may be provided with the signaling information generated by the geometry encoder 51003, the attribute encoder 51004, and/or the transmission processor 51005. The signaling processor 51002 may provide information fed back from the reception device (e.g., head orientation information and/or viewport information) to the geometry encoder 51003, the attribute encoder 51004, and/or the transmission processor 51005.

In the present disclosure, the signaling information may be signaled and transmitted in units of a parameter set (an SPS, a GPS, an APS, and a TPS (also referred to as a tile inventory)). In addition, the signaling information may be signaled and transmitted in units of a coding unit (or a compression unit or a prediction unit) of each image, such as a slice or a tile.

The transmission processor 51005 may perform the same or similar operation and/or transmission method as or to the operation and/or transmission method of the transmission processor 12012 of FIG. 12 and perform the same or similar operation and/or transmission method as or to the transmitter 1003 of FIG. 1. For a detailed description, refer to the description of FIG. 1 or FIG. 12 and the detailed description will be omitted herein.

The transmission processor 51005 may multiplex the geometry bitstream output from the geometry encoder 51003, the attribute bitstream output from the attribute encoder 51004, and the signaling bitstream output from the signaling processor 51002 into one bitstream. The multiplexed bitstream may be transmitted without change or transmitted by being encapsulated in a file or a segment. In an embodiment of the present disclosure, the file is in an ISOBMFF file format.

According to embodiments, the file or the segment may be transmitted to the reception device or stored in a digital storage medium (e.g., a USB drive, SD, CD, DVD, Blu-ray disc, HDD, SSD, etc.). The transmission processor 51005 according to the embodiments may communicate with the reception device through wired/wireless communication through a network such as 4G, 5G, or 6G. In addition, the transmission processor 51005 may perform a necessary data processing operation depending on a network system (e.g., a 4G, 5G, or 6G communication network system). The transmission processor 51005 may transmit encapsulated data according to an on-demand scheme.

According to embodiments, compression-related information is included in GPS and/or TPS and/or geometry data unit (also referred to as a geometry slice bitstream) by at least one of the signaling processor 51002, the geometry encoder 51003, and the transmission processor 51005 and may be transmitted.

FIG. 24 is an example detailed block diagram of the geometry encoder 51003 according to embodiments. More specifically, FIG. 24 is a detailed block diagram of the geometry encoder 51003 configured to perform geometry compression based on inter-frame correlation according to embodiments. The elements of the geometry encoder illustrated in FIG. 24 may be implemented by hardware, software, processors, and/or combinations thereof.

According to embodiments, the geometry encoder 51003 may include a neighbor pattern generator 51031, a neighbor occupancy score generator 51032, a context table selector 51033, an entropy coder 51034, a motion estimator 51035, a motion compensator 51036, and a predictor neighbor occupancy pattern generator 51037. In FIG. 24, the order of execution of the respective blocks may change, some blocks may be omitted, and some new blocks may be added.

In one embodiment, the neighbor occupancy pattern generator 51031 generates a neighbor occupancy pattern of the neighbor nodes of the compression target node for the current frame to find a relationship between the compression target node and the neighbor nodes. According to embodiments, the neighbor occupancy pattern generator 51031 determines the occupancy information about the neighbor nodes of the compression target node of the PU in the current frame as shown in FIGS. 20-(a) and 20-(b) to generate the neighbor occupancy patterns for the compression target node of the PU. Further, the number of neighbor occupancy patterns of the PU may be reduced by applying the method described with reference to FIG. 21. For parts not described herein, refer to the detailed description of FIGS. 20-(a), 20-(b), and 21 as given above.

In one embodiment, the motion estimator 51035 may receive data of the current frame and data of a reference frame as inputs and perform neighbor occupancy-based motion estimation to estimate (or acquire) an inter-frame motion vector.

According to embodiments, the motion estimator 51035 performs motion estimation on a per PU basis. Further, in one embodiment, the motion estimator 51035 may perform the motion estimation considering neighbor nodes to estimate similar information in a reference frame for any PU in the current frame, as shown in FIG. 15. In this regard, the motion estimator 51035 may define a motion search window within the reference frame for efficiency of motion estimation, and may estimate similarity to information contained in the PU in the current frame.

Once motion estimation is performed by the motion estimator 5135, the motion compensator 51036 may perform motion compensation based on the motion vector (MV) acquired as a result of the motion estimation to generate (or select) a predictor that is similar to the PU of the current frame within the reference frame .

That is, the motion compensator 51036 may find, in the reference frame, a predictive node that is similar to the compression target node based on the similarity between the current frame and the neighboring frame. In this regard, by finding the similarity based on the difference between the compression target node in the current frame and the predictive node in the reference frame based on the method proposed in the present disclosure and considering the difference between the occupancy information about the neighbors of the compression target node and the occupancy information about the neighbors of the predictive node, the accuracy of the motion prediction may be improved.

The process of selecting the predictor of the reference frame by estimating the motion vector by the motion estimator 51035 and the motion compensator 51036 has been described in detail with reference to FIGS. 15 through 19 and will not be described below.

In one embodiment, the predictor neighbor occupancy pattern generator 51037 determines the occupancy information about the neighbor nodes of the predictor of the reference frame selected by the motion compensator 51036 and generates the neighbor occupancy pattern of the predictor, as illustrated in FIGS. 20-(a) and 20-(b). In other words, once the motion compensator 51036 determines the position of the predictive node (or predictor node) in the reference frame based on the motion vector, the predictor neighbor occupancy pattern may be generated based on the occupancy information about the neighbor nodes of the predictive node. In this regard, the predictor neighbor occupancy pattern generator 51037 may reduce the number of predictor neighbor occupancy patterns by applying the method of reducing the number of neighbor occupancy patterns described with reference to FIG. 21. For parts not described herein, refer to the detailed description of FIGS. 20-(a), 20-(b), and 21 as given above.

In one embodiment, the neighbor occupancy score generator 51032 generates (or computes) a neighbor occupancy score based on the neighbor occupancy pattern of the PU of the current frame generated by the neighbor occupancy pattern generator 51031 and the neighbor occupancy pattern of the predictor of the reference frame generated by the predictor neighbor occupancy pattern generator 51037. The method of generating the neighbor occupancy score by the neighbor occupancy score generator 51032 has been described in detail in Equation 12 to Equation 14, and will be omitted below to avoid redundant description.

In one embodiment, the context table selector 51033 may select the context table based on the neighbor occupancy pattern of the PU of the current frame generated by the neighbor occupancy pattern generator 51031 and the neighbor occupancy pattern of the predictor of the reference frame generated by the predictor neighbor occupancy pattern generator 51037, or may select the context table based on the neighbor occupancy score generated by the neighbor occupancy score generator 51032. According to embodiments, the occupancy pattern may be used as additional information for selecting a context table. The context table may be selected based on the degree of match based on a value compared with the neighbor occupancy pattern of the compression target node in the current frame.

In one embodiment, the entropy coder 51034 performs entropy coding on the geometry information based on the context table selected by the context table selector 51033. In one embodiment, the geometry information that is entropy coded by the entropy coder 51034 is a residual value (also referred to as a residual geometry value or a prediction error geometry value). For example, the residual value may be obtained from the difference between a set B of points belonging to the PU in the current frame and a set P of points belonging to the predictor in the reference frame. In other words, when the prediction accuracy is determined to be high based on the neighbor occupancy score, a context table where a short codeword is available may be selected to perform entropy coding on the residual value. When the prediction accuracy is determined to be low, a context table where a long codeword is available may be selected to perform entropy coding on the residual value.

FIG. 25 is a flowchart illustrating an example of encoding of geometry information based on inter-frame correlations according to embodiments. The operations shown in FIG. 25 may be performed by point cloud data transmission devices according to embodiments (e.g., the transmission device of FIG. 1, the encoding of FIG. 2, the point cloud video encoder of FIG. 4, the transmission device of FIG. 12, the geometry encoder of FIG. 23, or the geometry encoder of FIG. 24), or a combination thereof. Components of the point cloud data transmission device according to the embodiments may be configured by hardware, software, processors, and/or combinations thereof.

After attribute matching is completed for an octree node, the method/device according to embodiments performs motion estimation and motion compensation considering occupancy patterns of neighbor nodes for a depth range (depthStart, depthEnd) of the octree in which the estimation is performed.

That is, the current depth is set to the depth start (called depthStart or motion estimation depth start) and input. In operation 51051, it is checked whether the current depth is less than or equal to the depth end (called depthEnd or motion estimation depth end).

In operation 51051, if the current depth (depth) is less than or equal to depthEnd, numNode is set to 0, and then the process proceeds to operation 51052; otherwise, the process proceeds to operation 51057.

In operation 51052, it is checked whether the value of parentSplitFlag for occupied nodes is 1. The parentSplitFlag is an internal parameter that indicates whether the parent node has been split. The parentSplitFlag may have the same meaning as the split flag. In some embodiments, whether to perform motion estimation (or prediction) is determined based on parentSplitFlag. For all nodes belonging to depthStart, motion prediction is performed from depthStart, assuming parentSplitFlag = 1 (operation 51053).

Then, for an occupied node (i.e., population_flag = 1), if the value of parentSplitFlag is 1, a motion vector is acquired by performing motion prediction based on the inter-frame correlation proposed in the present disclosure. Then, motion compensation is performed based on the acquired motion vector to acquire, from the reference frame, a predictor similar to the compression target node (i.e., the current node) in the current frame (operation 51054). In other words, in operation 51054, a predictive node similar to the compression target node may be found in the reference frame based on the similarity between the current frame and a neighboring frame. In this regard, by finding the similarity based on the difference between the compression target node in the current frame and the predictive node in the reference frame based on the method proposed in the present disclosure and considering the difference between the occupancy information about the neighbors of the compression target node and the occupancy information about the neighbors of the predictive node, the accuracy of the motion prediction may be improved.

Once the predictor in the reference frame is selected in operation 51054, the cost of required in the case of delivering the motion vector is compared with the cost required in the case where splitting is performed without delivering the motion vector (operation 51055).

If the cost required in the case of delivering the motion vector is less than the cost required in the case where splitting is performed as a result of the comparison in operation 51055, the splitting is not performed, inter-frame geometry prediction is performed based on the predictor in the case of using the motion vector, and parentSplitFlag is set to 0 (operation 51056). In operation 51056, the neighbor occupancy pattern of the PU in the current frame is generated based on the occupancy information about the neighbor nodes of the compression target node of the PU. Also, the neighbor occupancy pattern of the predictor (or predictive node) in the reference frame is generated based on the occupancy information about the neighbor nodes of the predictor.

If the cost required in the case where splitting is performed is less than the cost required in the case of delivering the motion vector as a result of the comparison in operation 51055, the splitting is performed. Therefore, in this case, split_flag = 1 is defined and compression is not performed (i.e., the motion vector is not delivered from the current node but is delivered from a child node).

A neighbor occupancy score (or neighbor occupancy comparison score) is calculated by comparing the neighbor occupancy pattern of the predictive node (or predictor) of the reference frame and the neighbor occupancy pattern of the compression target node of the current frame generated in operation 51056 (operation 51058). Based on the neighbor occupancy score calculated in operation 51058, a neighbor context is determined, and a context table for entropy coding is selected based on the determined neighbor context. Also, an occupancy map is entropy coded based on the selected context table (operation 51059).

Then, the number of nodes in the current frame (numNode) is compared with the maximum number of nodes (maxNumNode[depth]) (operation 51060). If the number is not equal to the maximum number, numNode is incremented by 1 and the process returns to operation 51052. If the number is equal to the maximum number, the current depth is compared with maxDepth (operation 51061). If the current depth is equal to maxDepth, the above process terminates; otherwise, depth is incremented by 1 and the process returns to operation 51051.

If depth is greater than depthEnd in operation 51051 or the value of parentSplitFlag for the occupied nodes is 0 in operation 51052, a neighbor occupancy pattern is generated to perform intra-based geometry compression in operation 51057, and the process proceeds to operation 51058. For any portion of FIG. 25 that is not described or omitted, refer to the description of FIGS. 15 to 24.

FIG. 26 shows an example bitstream structure of point cloud data for transmission/reception according to embodiments. According to embodiments, a bitstream output from the point cloud video encoder of one of FIGS. 1, 2, 4, 12, and 23 may be in the form of FIG. 26.

According to embodiments, the bitstream of point cloud data provides a tile or a slice to divide and process point cloud data by region. Each region of a bitstream according to embodiments may have different importance. Therefore, when point cloud data is divided into tiles, different filters (encoding methods) and different filter units may be applied to each tile. When point cloud data is divided into slices, different filters and different filter units may be applied to each slice.

The transmitting device according to the embodiments may transmit point cloud data according to the bitstream structure as shown in FIG. 26, and thus provided may be provided a method of applying different encoding operations according to importance and using an encoding method with good quality in an important area. In addition, efficient encoding and transmission according to the characteristics of point cloud data may be supporte4d and an attribute value according to user requirements may be provided.

The receiving device according to embodiments receives point cloud data according to the bitstream structure as shown in FIG. 26, and thus different filtering methods (decoding methods) may be applied for each region (region divided into tiles or slices) instead of using a complicated decoding (filtering) method for entire point cloud data according to the processing capacity of the receiving device. Accordingly, a better image quality in an important region to a user and appropriate latency on a system may be ensured.

When a geometry bitstream, an attribute bitstream, and/or a signaling bitstream (or signaling information) according to embodiments constitute one bitstream (or G-PCC bitstream) as shown in FIG. 26, the bitstream may include one or more sub bitstreams. A bitstream according to embodiments may include a sequence parameter set (SPS) for signaling of a sequence level, a geometry parameter set (GPS) for signaling of geometry information coding,one or more attribute parameter sets ($APS_0$ and $APS_1$)) for signaling of attribute information coding, a tile inventory for signaling at a tile level (also referred to as a TPS), and one or more slices (slice 0 to slice n). That is, a bitstream of point cloud data according to embodiments may include one or more tiles, and each tile may be a group of slices including one or more slices (slice 0 to slice n). A tile inventory (i.e., TPS) according to embodiments may include information about each tile (e.g., coordinate value information and height/size information of a tile bounding box) for one or more tiles. Each slice may include one geometry bitstream (Geom0) and/or one or more attribute bitstreams (Attr0 and Attr1). For example, slice 0 may include one geometry bitstream ($Geom0^0$) and one or more attribute bitstreams ($Attr0^0$ and $Attr1^0$).

The geometry bitstream in each slice may include a geometry slice header (geom_slice_header) and geometry slice data (geom_slice_data). According to embodiments, the geometry bitstream within each slice is also referred to as a geometry data unit, the geometry slice header is referred to as a geometry data unit header, and the geometry slice data is referred to as geometry data unit data. A geometry slice header (or geometry data unit header) according to embodiments may include information (geomBoxOrigin, geom_box_log2_scale, geom_max_node_size_log2, geom_num_points) and the like about data included in identification information (geom_parameter_set_id), a tile identifier (geom_tile_id), a slice identifier (geom_slice_id), and geometry slice data (geom_slice_data) of a parameter set included in a geometry parameter set (GPS). geomBoxOrigin is geometry box origin information indicating the box origin of the corresponding geometry slice data, geom_box_log2_scale is information indicating a log scale of the corresponding geometry slice data, geom_max_node_size_log2 is information indicating the size of the root geometry octree node, and geom_num_points is information related to information related to the number of points of the corresponding geometry slice data. Geometry slice data (or geometry data unit data) according to embodiments may include geometry information (or geometry data) of point cloud data within a corresponding slice.

Each attribute bitstream in each slice may include attribute slice header (attr_slice_header) and attribute slice data (attr_slice_data). According to embodiments, an attribute bitstream within each slice is also referred to as an attribute data unit, an attribute slice header is referred to as an attribute data unit header, and attribute slice data is referred to as attribute data unit data. An attribute slice header (or attribute data unit header) according to embodiments may include information about the corresponding attribute slice data (or corresponding attribute data unit), and the attribute slice data may include attribute information (also referred to as attribute data or attribute value) of point cloud data in the corresponding slice. When there are a plurality of attribute bitstreams in one slice, each attribute bitstream may include different attribute information. For example, one attribute bitstream may include attribute information corresponding to color, and another attribute stream may include attribute information corresponding to reflectance.

According to embodiments, parameters required for encoding and/or decoding of point cloud data may be defined in parameter sets of point cloud data (e.g., SPS, GPS, APS, and TPS (also referred to as a tile inventory)) and/or a header of the corresponding slice. For example, during encoding and/or decoding of geometry information, the parameters may be added to a geometry parameter set (GPS), and during tile-based encoding and/or decoding, the parameters may be added to a tile and/or a slice header.

According to embodiments, geometry compression-related information may be signaled to at least one of a geometry parameter set, a geometry slice header (also referred to as a geometry data unit header), or geometry slice data (also referred to as geometry data unit data).

According to embodiments, geometry compression-related information may be signaled to an attribute parameter set and/or an attribute slice header (also referred to as an attribute data unit header) in connection with an attribute coding method or applied to attribute coding.

According to embodiments, the geometry compression-related information may be signaled to a sequence parameter set and/or a tile parameter set.

According to embodiments, when a syntax element defined below is to be applied to a plurality of point cloud data streams as well as the current point cloud data stream, the geometry compression-related information may be transferred through a parameter set of a higher concept, and the like.

According to embodiments, the geometry compression-related information may be defined in a corresponding position or a separate position depending on the application or system, and an application range, an application method, and the like may be used differently. A field, a term used in syntaxes of the present specification described below, may have the same meaning as a parameter or a syntax element.

According to embodiments, parameters (which may be variously called metadata, signaling information, and the like) including the geometry compression-related information may be generated by a metadata processor (or metadata generator) or a signaling processor of a transmitting device, and may be transferred to a receiving device to be used in a decoding/reconstruction process. For example, a parameter generated and transmitted by a transmitting device may be obtained from a metadata parser of the receiving device.

FIG. 27 shows an example of a syntax structure of a geometry parameter set (geometry_parameter_set()) (GPS) according to an embodiment of the present disclosure. The GPS according to embodiments may include information about a method of encoding geometry information of the point cloud data contained in one or more slices.

The GPS according to the embodiments may include a geom_tree_type field. The geom_tree_type field indicates whether the position information (i.e., geometry information) is encoded using an octree or a predictive tree. For example, geom_tree_type equal to 0 indicates that the position information (i.e., geometry information) is encoded using an octree, while geom_tree_type equal to 1 indicates that the position information (i.e., geometry information) is encoded using a predictive tree.

When geom_tree_type is equal to 0, indicating that the position information (i.e., geometry information) is encoded using an octree, the GPS according to the embodiments may further include a predictor_neighbor_enabled_flag field.

When predictor_neighbor_enabled _flag is equal to 1, it may indicate that the relationship between the predictor and its neighbor nodes in the reference frame is used in considering an inter-frame relationship. When predictor_neighbor_enabled _flag is equal to 0, it may indicate that only the predictor in the reference frame is used in considering the inter-frame relationship.

When predictor_neighbor_enabled_flag is equal to 1, the GPS according to the embodiments may further include a predictor_neighbor_type field.

The predictor_neighbor_type field may indicate how the relationship between the predictor and its neighbor nodes is considered. That is, the predictor_neighbor_type field may be used to compare the occupancy information about the neighbor nodes of the PU and the corresponding neighbor nodes of the predictor, as described in Equation 12 to Equation 14.

For example, predictor_neighbor_type equal to 0 may indicate that the predictor neighbor occupancy pattern is considered, and predictor_neighbor_type equal to 1 may indicate that the predictor neighbor occupancy pattern is compared with the PU neighbor occupancy pattern. Also, predictor_neighbor_type equal to 2 may indicate the number of matching neighbor nodes for the predictor neighbor occupancy pattern and PU neighbor occupancy pattern is used, and predictor_neighbor_type equal to 3 may indicate that the number of neighbor nodes whose positions match among the occupied neighbor nodes of the predictor and PU is used. Also, predictor_neighbor_type equal to 4 may indicate that the number of neighbor nodes whose positions match among the unoccupied neighbor nodes of the predictor and PU is used.

FIG. 28 shows an example syntax structure of a geometry data unit (geometry_data_unit()) according to embodiments.

The geometry_data_unit() according to the embodiments may include a geometry data unit header (geometry_data_unit_header()) and may include geometry octree data (geometry_octree()) or geometry predictive tree data (geometry_predtree_data()).

For example, when the value of the geom_tree_type field included in the GPS is 0, the geometry_data_unit() contains geometry octree data (geometry_octree()). When the value of the geom_tree_type field included in the GPS is 1, the geometry _data _unit() contains the geometry predictive tree data (geometry_predtree_data()).

FIG. 29 shows an example syntax structure of a geometry data unit header(geometry_data_unit_header()) according to embodiments.

In FIG. 29, a gsh_geometry_parameter_set_id field represents a value of the gps_geom_parameter_set_id of an active GPS.

A gsh_tile_id field represents an identifier of a corresponding tile referenced by the corresponding geometry data unit header.

A gsh_slice_id field represents an identifier of a corresponding slice for reference by other syntax elements.

A slice_tag field may be used to identify one or more slices having a specific value of slice_tag.

A frame_ctr_lsb field represents least significant bits (LSB) of a notional frame number counter.

A geometry data unit header according to embodiments further includes a gsh_entropy_continuation_flag field when a value of an entropy_continuation_enabled_flag field is false, and further includes a gsh_prev_slice_id field when a value of the gsh_entropy_continuation_flag field is true.

The entropy_continuation_enabled_flag field may be included in a SPS. When a value of the entropy_continuation_enabled_flag field is value 1 (i.e., true), this indicates that an initial entropy context state of a slice depends upon a final entropy context state of a preceding slice. When a value of the entropy_continuation_enabled_flag field is 0 (i.e., false), this indicates that the initial entropy context state of each slice is independent.

The gsh_prev_slice_id field represents a value of a slice identifier (i.e., gsh_slice_id field) of a previous geometry data unit in bitstream order.

A geometry data unit header according to embodiments may include a gsh_box_log2_scale field when a value of a gps_gsh_box_log2_scale_present_flag field is true

The gps_gsh box log2_scale_present flag field may be included in the GPS. When a value of the gps_gsh_box_log2_scale_present_flag field is 1, this indicates that the gsh_box_log2_scale field is signaled to each geometry data unit that references the current GPS. When a value of the gps_gsh_box_log2_scale_present_flag field is 0, this indicates that a gsh_box_log2_scale field is not signaled to each geometry data unit and that a common scale for all slices is signaled to a gps_gsh_box_log2_scale field of the current GPS.

The gsh_box_log2_scale field indicates a scaling factor of a corresponding slice origin.

A geometry data unit header according to embodiments may include a gsh_box_origin_bits_minus1 field.

The length of the gsh_box_origin_xyz[k] field positioned next is indicated in bits by adding 1 to a value of the gsh_box_origin_bits_minus1 field.

The gsh_box_origin_xyz[k] field indicates a k-th component of the quantized (x,y,z) coordinates of the corresponding slice origin.

The geometry data unit header according to embodiments may include a gsh_angular_origin_bits_minus1 field and a gsh_angular_origin_xyz[k] field when a value of the geom_slice_angular_origin_present_flag field is true.

The geom_slice_angular_origin_present_flag field may be included in a GPS. When a value of the geom_slice_angular_origin_present_flag field is 1, this indicates that a slice relative angular origin is present in the corresponding geometry data unit header. When a value of the geom_slice_angular_origin_present_flag field is 0, this indicates that the angular origin is not present in the corresponding geometry data unit header.

The length of the gsh_angular_origin_xyz[ k ] field positioned next is indicated in bits by adding 1 to the gsh_angular_origin_bits_minus1 field.

The gsh_angular_origin_xyz[k] field indicates a k-th component of the (x, y, z) coordinates of the origin used in processing of an angular coding mode.

When a value of the geom_tree_type field is 0 (i.e., octree-based coding), a geometry data unit header according to embodiments may include a geom_tree_depth_minus1 field and a gsh_entropy_stream_cnt_minus1 field.

The number of geometry tree levels present in the data unit is indicated by adding 1 to the geom_tree_depth_minus1 field.

The maximum number of entropy streams used to convey geometry tree data by adding 1 to the gsh_entropy_stream_cnt_minus 1 field.

The geometry data unit header according to embodiments may include a repetitive statement repeated as many times as a value of the geom_tree_depth_minus1 field when a value of the geom_tree_type field is 0 (i.e., octree-based coding) and a value of the geom_tree_coded_axis_list_present_flag field is true. The repetition statement may include a geom_tree_coded_axis_flag[ lvl ][ k ] field.

The geom_tree_coded_axis_list_present_flag field may be included in a GPS. When a value of the geom_tree_coded_axis_list_present_flag field is 1, this indicates that each geometry data unit includes a geom_tree_coded_axis_flag field used to derive a size of a geometry root node. When a value of the geom_tree_coded_axis_list_present_flag field is 0, this indicates that the geom_tree_coded_axis_flag field is not present in the corresponding geometry data unit and a coded geometry tree indicates a cubic volume.

The geom_tree_coded_axis_flag[ lvl ][ k ] field indicates whether a k-th axis is coded at a v-th level (i.e., a given depth) of a geometry tree. The geom_tree_coded_axis_flag[ lvl ][ k ] field may be used to determine a size of a root node.

The geometry data unit header according to embodiments may include a geom_slice_qp_offset field when a value of a geom_scaling_enabled_flag field is true, and may further include a geom_qp_offset_intvl_log2_delta field when a value of the geom_tree_type field is 1 (i.e., predictive tree-based coding).

The geom_scaling_enabled_flag field may be included in a GPS. When a value of the geom_scaling_enabled_flag field is 1, this indicates that a scaling process for geometry positions is invoked during a geometry decoding process. When a value of the geom_scaling_enabled_flag field is 0, this indicates that geometry positions do not require scaling.

The geometry data unit header according to embodiments may include a ptn_residual_abs_log2_bits[ k ] field when a value of the geom_tree_type field is 1 (i.e., predictive tree-based coding), and may further include a ptn_radius_min_value field when a value of the geometry_angular_enabled _flag field is true.

The ptn_residual_abs_log2_bits[ k ] field indicates the number of bins used to code a k-th component of the ptn_residual_abs_log2 field. The description of the ptn_residual_abs_log2 field will be given later.

The geometry_angular_enabled_flag field may be included in a GPS. When a value of the geometry_angular_enabled_flag field is 1, this indicates that an angular coding mode is active. When a value of the geometry_angular enabled _flag field is 0, this indicates that an angular coding mode is not active.

The ptn_radius_min_value field represents the minimum value of radius.

FIG. 30 shows another example syntax structure of a geometry data unit header (geometry_data_unit_header()) containing geometry compression related information according to embodiments.

According to embodiments, the geometry_data_unit_header() of FIG. 30 may include a ref_frame_id field, an mv_depth_start field, and an mv_depth_end field.

The ref_frame_id field may indicate the index of a reference frame used for PU prediction.

The mv_depth_start field and the mv_depth_end field may indicate the start and end of an octree depth over which the motion vector may be delivered.

According to embodiments, the geometry compression related information of FIG. 30 may be included at any position in the geometry data unit header of FIG. 29.

FIG. 31 shows an example syntax structure of a data unit (data_unit()) including geometry compression related information according to embodiments. In one embodiment, the data unit (data_unit()) of FIG. 31 is included in the geometry octree data (geometry_octree()).

The data unit (data_unit()) of FIG. 31 may include a split_flag[i][j] field, a population_flag[i][j] field, a motion_vector[i][j][k] field, and an occupancy _map[i][j] field.

The split_flag[i][j] field indicates whether the j-th node among the nodes belonging to the i-th octree depth of the octree is split. For example, split_flag[i][j] equal to 1 indicates that the motion vector for the j-th node of the i-th octree depth is delivered after splitting into child nodes. That is, it indicates that the j-th node of the i-th octree depth is split. Also, split_flag[i][j] equal to 0 indicates that the motion vector for the j-th node of the i-th octree depth is delivered. That is, it indicates that the j-th node of the i-th octree depth is not split, and therefore the motion vector is delivered from the j-th node.

The population_flag[i][j] field is included when the value of the split_flag[i][j] field is 0, and indicates whether the j-th node is occupied among the nodes belonging to the i-th octree depth of the octree. For example, population_flag[i][j] equal to 1 indicates that the j-th node of the i-th octree depth is occupied, while population _flag[i][j] equal to 0 indicates that the j-th node is non-occupied. In other words, population _flag[i][j] may indicate whether a non-split node is occupied.

The motion _vector[i][j][k] field is included when the value of the population_flag[i][j] field is 1, and may indicate the motion vector for each axis of the j-th node among the nodes belonging to the i-th octree depth of the octree. where k denotes the x, y, and z axes.

The occupancy _map[i][j] field may carry the occupancy map of the j-th node among the nodes belonging to the i-th octree depth of the octree. The occupancy map may be passed in bits or bytes.

FIG. 32 is a diagram showing another example of a point cloud data reception device according to embodiments. Elements of the point cloud data reception device shown in FIG. 32 may be implemented by hardware, software, processor, and/or a combination thereof.

According to embodiments, the point cloud data reception device may include a reception processor 61001, a signaling processor 61002, the geometry decoder 61003, an attribute decoder 61004, and a post-processor 61005.

The reception processor 61001 according to embodiments may receive one bitstream or may receive each of a geometry bitstream, an attribute bitstream, and a signaling bitstream. When receiving a file and/or a segment, the reception processor 61001 according to embodiments may decapsulate the received file and/or segment and output the decapsulated file and/or segment in a bitstream.

When receiving (or decapsulating) one bitstream, the reception processor 61001 according to embodiments may demultiplex a geometry bitstream, an attribute bitstream, and/or a signaling bitstream from one bitstream, output the demultiplexed signaling bitstream to the signaling processor 61002, output the geometry bitstream to the geometry decoder 61003, and output the attribute bitstream to the attribute decoder 61004.

When receiving (or decapsulating) a geometry bitstream, an attribute bitstream, and/or a signaling bitstream, the reception processor 61001 according embodiments may transfer the signaling bitstream to the signaling processor 61002, transfer the geometry bitstream to the geometry decoder 61003, and transfer the attribute bitstream to the attribute decoder 61004.

The signaling processor 61002 may parse and process information included in signaling information, e.g., SPS, GPS, APS, TPS, and metadata from the input signaling bitstream and provide the parsed and processed information to the geometry decoder 61003, the attribute decoder 61004, and the post-processor 61005. According to another embodiment, signaling information included in the geometry data unit header and/or the attribute data unit header may also be pre-parsed by the signaling processor 61002 prior to decoding of corresponding slice data.

According to embodiments, the signaling processor 61002 may also parse and process signaling information (e.g., geometry compression-related information) signaled to the geometry data unit and provide the parsed and processed information to the geometry decoder 61003.

According to embodiments, the geometry decoder 61003 may perform a reverse process of the geometry encoder 51003 of FIG. 23 based on signaling information on the compressed geometry bitstream to restore geometry. The geometry information restored (or reconstructed) by the geometry decoder 61003 is provided to the attribute decoder 61004. The attribute decoder 61004 may restore an attribute by performing a reverse process of the attribute encoder 51004 of FIG. 23 based on signaling information and reconstructed geometry information for the compressed attribute bitstream.

According to embodiments, the post-processor 61005 may reconstruct point cloud data by matching geometry information (i.e., positions) restored and output from the geometry decoder 61003 with attribute information restored and output from the attribute decoder 61004 and display/render the matched information.

FIG. 33 is an example detailed block diagram of the geometry decoder 61003 according to embodiments. FIG. 33 is an example detailed block diagram of a geometry decoder configured to reconstruct geometry information based on inter-frame correlation.

According to embodiments, the geometry decoder 61003 may include a motion vector-based tree generator 61031, a PU neighbor occupancy pattern generator 61032, a motion compensator 61033, a predictor neighbor occupancy pattern generator 61034, a neighbor occupancy score generator 61035, a context table selector 61036, and an entropy decoder 61037.

The elements of the geometry decoder illustrated in FIG. 33 may be implemented by hardware, software, processors, and/or combinations thereof. In FIG. 33, the order of execution of the respective blocks may change, some blocks may be omitted, and some new blocks may be added.

According to embodiments, once a bitstream is acquired by the reception processor 61001, the geometry compression related information (e.g., motion vector, reference frame ID, etc.) described with reference to FIGS. 27 to 31 may be acquired.

The motion vector-based tree generator 61031 generates an octree based on the bitstream (e.g., the geometry bitstream) and the signaling information including the geometry compression related information. In one embodiment, the octree may be generated based on a motion vector included in the geometry compression related information.

The PU neighbor occupancy pattern generator 61032 generates a PU neighbor occupancy pattern of the current frame based on the octree generated by the motion vector-based tree generator 61031 and the signaling information. That is, the PU neighbor occupancy pattern is an occupancy pattern generated based on the occupancy information about the neighbors of a node of the PU to be reconstructed in the current frame.

The motion compensator 61033 reads a reference frame from a buffer (not shown) based on the signaling information including the geometry compression related information, and selects a node in the position and range specified by the motion vector included in the geometry compression related information as a predictive node (or predictor) of the reference frame. In one embodiment, the reference frame is at least one of the decoded previous frames.

The predictor neighbor occupancy pattern generator 61034 generates a neighbor occupancy pattern of the selected predictor based on the signaling information, including the geometry compression related information. That is, the predictor neighbor occupancy pattern is an occupancy pattern generated based on the occupancy information about the neighbors of the predictor (or prediction target node or predictive node) of the reference frame. The predictor neighbor occupancy pattern generator 61034 may also generate a neighbor occupancy score for the predictor.

The neighbor occupancy score generator 61035 generates a neighbor occupancy score based on the PU neighbor occupancy pattern generated by the PU neighbor occupancy pattern generator 61032 and the predictor neighbor occupancy pattern generated by the predictor neighbor occupancy pattern generator 61034. The method of generating the neighbor occupancy score by the neighbor occupancy score generator 61035 has been described in detail regarding Equation 12 to Equation 14, and therefore will be omitted below to avoid redundant description.

In other words, the PU neighbor occupancy pattern generator 61032 and the predictor neighbor occupancy pattern generator 61034 may check the neighbor occupancy pattern by determining the occupancy information about the neighbor nodes in a predetermined range. Then, the neighbor occupancy score generator 61035 may compare the neighbor occupancy pattern for the node to be reconstructed generated by the PU neighbor occupancy pattern generator 61032 with the neighbor occupancy pattern for the predictive node generated by the predictor neighbor occupancy pattern generator 61034 to determine the similarity between the node to be reconstructed and the predictive node.

The context table selector 61036 may select a context table to be used for entropy decoding based on the neighbor occupancy score generated by the neighbor occupancy score generator 61035.

The entropy decoder 61037 applies the context table selected by the context table selector 61036 to perform entropy decoding on the geometry information. In one embodiment, the geometry information that is entropy decoded by the entropy decoder 61037 may be an entropy-coded prediction error (also referred to as residual information or a residual). In other words, when it is determined that the prediction accuracy is high based on the neighbor occupancy score, a context table where a short codeword is available may be selected to perform entropy decoding on the prediction error. When it is determined that the prediction accuracy is low, a context table where a long codeword is available may be selected to perform entropy decoding on the prediction error.

FIG. 34 is a flowchart illustrating an example geometry decoding method for reconstructing compressed geometry based on inter-frame correlation according to embodiments. The operations shown in FIG. 34 may be performed by a point cloud data reception device according to embodiments (e.g., the reception device of FIG. 1, the decoding of FIG. 2, the point cloud video decoder of FIG. 11, the reception device of FIG. 13, the geometry decoder of FIG. 32, or the geometry decoder of FIG. 33), or a combination thereof. The elements of the point cloud data reception device according to the embodiments may be configured by hardware, software, processors, and/or combinations thereof.

The method/device according to the embodiments decodes an occupancy map considering occupancy patterns of neighbor nodes over a depth range (depthStart, depthEnd) of an octree included in the geometry compression related information.

That is, the current depth is set to the depth start (called depthStart or motion estimation depth start) and input. In operation 61051, it is checked whether the current depth is less than or equal to the depth end (called depthEnd or motion estimation depth end).

In operation 61051, if the current depth is less than or equal to depthEnd, numNode is set to 0, and then the process proceeds to operation 61052; otherwise, the process proceeds to operation 61056.

In operation 61052, it is checked whether the value of parentReconFlag for populated nodes is 0. The parentReconFlag is an internal parameter that indicates whether the parent node has been decoded. That is, ParentReconFlag equal to 1 indicates the geometry can be reconstructed using intra-frame geometry predictions (operation 61056), and ParentReconFlag equal to 0 indicates that there may be an MV for the current node. Accordingly, the split_flag field contained in the geometry compression related information may be checked to determine whether to perform decoding (operation 61053).

In one embodiment, when the value of the split_flag field is 1, the MV is not delivered because additional splitting is performed. On the other hand, when the value of the split_flag field is 0, the geometry prediction may be performed through a motion compensated prediction block using the motion vector included in the geometry compression related information in the reference frame specified by the reference_frame_id field (operation 61054). In operation 61054, a neighbor occupancy score (or neighbor occupancy comparison score) is calculated by comparing the neighbor occupancy pattern of the neighbors of the predictive node (also referred to as the predictor or prediction target node) acquired through motion compensation with the neighbor occupancy pattern of the neighbors of the node to be reconstructed in the current frame (operation 61055).

A neighbor context is determined based on the neighbor occupancy score calculated in operation 61055, and a context table for entropy decoding is selected based on the determined neighbor context. Also, an occupancy map is entropy-decoded based on the selected context table (operation 61057).

Then, the number of nodes in the current frame (numNode) is compared with the maximum number of nodes (maxNumNode[depth]) (operation 61058). If the number is not equal to the maximum number, numNode is incremented by 1 and the process returns to operation 61052. If the number is equal to the maximum number, the current depth is compared with maxDepth (operation 61059). If the current depth is equal to maxDepth, the above process terminates; otherwise, depth is incremented by 1 and the process returns to operation 61051.

If depth is greater than depthEnd in operation 61051 or the value of parentReconFlag for the populated nodes is 1 in operation 61052, intra-based geometry prediction is performed in operation 61056 and then the process proceeds to operation 61055.

For parts that are not described or omitted in FIG. 34, refer to the description of FIGS. 15 to 33.

FIG. 35 is a flowchart illustrating a point cloud data transmission method according to embodiments.

The point cloud data transmission method according to the embodiments may include operation 71001 of acquiring point cloud data, operation 71002 of encoding the point cloud data, and operation 71003 of transmitting the encoded point cloud data and signaling information. In this case, a bitstream containing the encoded point cloud data and the signaling information may be encapsulated and transmitted as a file.

In operation 71001 of acquiring the point cloud data, some or all of the operations of the point cloud video acquisition unit 10001 of FIG. 1 may be performed, or some or all of the operations of the data input unit 12000 of FIG. 12 may be performed.

In operation 71002 of encoding the point cloud data, some or all of the operations of the point cloud video encoder 10002 of FIG. 1, the encoding 20001 of FIG. 2, the point cloud video encoder of FIG. 4, the point cloud video encoder of FIG. 12, the geometry encoder of FIG. 23, the geometry encoder of FIG. 24, or the geometry encoding of FIG. 25 may be performed to encode the geometry information.

In operation 71002 of encoding the point cloud data according to the embodiments, the geometry information may be compressed based on the aforementioned inter-frame correlation.

For details of determining a prediction accuracy based on a similarity between a neighbor occupancy pattern of a predictive node present in a reference frame and a neighbor occupancy pattern of the current frame and selecting a context table for entropy encoding based on the determination result, reference is made to the description of FIGS. 15 to 31 above, and a description thereof is omitted herein. Based on the selected context table, the geometry information (e.g., residual information and/or occupancy map) related to each point is entropy-encoded and then output in the form of a geometry bitstream.

According to embodiments, in operation 71002 of encoding the point cloud data, attribute information is compressed based on positions on which geometry encoding has not been performed and/or reconstructed geometry information. In one embodiment, the attribute information may be coded using any one or a combination of one or more of RAHT coding, LOD-based predictive transform coding, and lifting transform coding.

In the present disclosure, the signaling information may include geometry compression related information. In one embodiment, the geometry compression related information is included in a geometry data unit. In another embodiment, the geometry compression related information may be signaled in the SPS, GPS, APS, or TPS. The details of the geometry compression related information have been described above and will not be described below.

FIG. 36 is a flowchart illustrating a point cloud data reception method according to embodiments.

The point cloud data reception method according to the embodiments may include operation 81001 of receiving encoded point cloud data and signaling information, operation 81002 of decoding the point cloud data based on the signaling information, and operation 81003 of rendering the decoded point cloud data.

Operation 81001 of receiving the point cloud data and signaling information may be performed by the receiver 10005 of FIG. 1, the transmission 20002 or decoding 20003 of FIG. 2, or the receiver 13000 or reception processor 13001 of FIG. 13.

In operation 81002 of decoding the point cloud data, some or all of the operations of the point cloud video decoder 10006 of FIG. 1, the decoding 20003 of FIG. 2, the point cloud video decoder of FIG. 11, the point cloud video decoder of FIG. 13, the geometry decoder of FIG. 32, the geometry decoder of FIG. 33, or the geometry decoding of FIG. 34 to decode the geometry information.

In operation 81002 of decoding the point cloud data, a reference frame may be selected from a buffer based on the geometry compression related information included in the signaling information, and a node in a position and range specified by the motion vector may be selected as a predictive node. Then, a similarity may be determined by comparing the neighbor occupancy pattern for the predictive node with the neighbor occupancy pattern for the node to be reconstructed in the current frame, and a context table for entropy decoding may be selected based on the similarity. Then, inter-frame prediction may be performed to decode (i.e., reconstruct) the entropy-decoded geometry information. For further details, refer to the description of FIGS. 15 to 22 and FIGS. 26 to 33.

In operation 81002 of decoding the point cloud data, attribute information may be decoded (i.e., decompressed) based on the reconstructed geometry information. In one embodiment, the attribute information may be decoded using any one or a combination of one or more of RAHT coding, LOD-based predictive transform coding, and lifting transform coding.

In operation 81003 of rendering, point cloud data may be reconstructed based on the reconstructed (or restored) geometry information and attribute information and rendered according to various rendering methods. For example, points in the point cloud content may be rendered as a vertex having a certain thickness, a cube having a specific minimum size centered on the corresponding vertex position, or a circle centered on the corresponding vertex position. All or some regions of the rendered point cloud content is provided to the user through a display (e.g., a VR/AR display, a general display, etc.). Operation 81003 of rendering the point cloud data may be performed by the renderer 10007 of FIG. 1, the rendering 20004 of FIG. 2, or the renderer 13011 of FIG. 13.

As described above, the compression (i.e., the transmission device) and reconstruction (i.e., the reception device) of the geometry information based on similarity between frames described in the present disclosure may be used for compression and reconstruction of the point cloud data.

The aforementioned operation according to embodiments may be performed through components of the point cloud transmitting and receiving device/method including a memory and/or a processor. The memory may store programs for processing/controlling operations according to embodiments. Each component of the point cloud transmitting and receiving device/method according to embodiments may correspond to hardware, software, a processor, and/or a combination thereof. The processor may control the various operations described in the present disclosure. The processor may be referred to as a controller or the like. The operations according to embodiments may be performed by firmware, software, and/or a combination thereof and firmware, software, and/or a combination thereof may be stored in the processor or stored in the memory. In the present embodiment, the method of compressing geometry information of point cloud data has been described, but the methods described in the specification may be applied to attribute information compression and other compression methods.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "... module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if' and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

Additionally, the operations according to the embodiments described in this document may be performed by transmitting and receiving devices, each of which includes a memory and/or processor, depending on the embodiments. The memory may store programs for processing and controlling the operations according to the embodiments, and the processor may control various operations described in this document. The processor may be referred to as a controller or the like. The operations according to the embodiments may be implemented by firmware, software, and/or combinations thereof, and the firmware, software, and/or combinations thereof may be stored in the processor or memory.

[Mode for Disclosure]

The details have been specifically described in the best mode for the disclosure.

[Industrial Applicability]

It will be apparent to those skilled in the art that various modifications and variations are possible without departing from the spirit or scope of the embodiments. Thus, it is intended that the embodiments cover the modifications and variations of the embodiments provided they come within the appended claims and their equivalents.

## Claims

**1.** A method of transmitting point cloud data, the method comprising:

encoding geometry data in the point cloud data;

encoding attribute data in the point cloud data based on the geometry data; and
transmitting the encoded geometry data, the encoded attribute data, and signaling information,
wherein the encoding of the geometry data comprises:
compressing the geometry data based on an inter-frame correlation and an octree.

**2.** The method of claim 1, wherein the encoding of the geometry data comprises:

estimating a motion vector by performing motion estimation within a search window of a reference frame;
performing motion compensation based on the estimated motion vector and selecting a predictor in the reference frame as a set of nodes having similar characteristics to a prediction unit in a current frame, wherein the prediction unit is a set of neighbor nodes at a specific depth of the octree in the current frame;
comparing a neighbor occupancy pattern of the prediction unit with a neighbor occupancy pattern of the predictor; and
entropy coding residual information related to the geometry data based on a result of the comparison.

**3.** The method of claim 2, further comprising:

generating a prediction error based on a compression target node of the prediction unit, at least one neighbor node of the compression target node, a predictive node of the predictor, and at least one neighbor node of the predictive node,
wherein the motion vector is estimated based on the prediction error.

**4.** The method of claim 2, wherein the neighbor occupancy pattern of the prediction unit is generated based on occupancy information about at least one neighbor node of a compression target node of the prediction unit,
wherein the neighbor occupancy pattern of the predictor is generated based on occupancy information about at least one neighbor node of the predictive node of the predictor.

**5.** The method of claim 2, wherein the signaling information comprises geometry compression related information, wherein the geometry compression related information comprises at least motion vector information, reference frame information, and range information related to a depth of the octree for transmission of the motion vector.

**6.** A device for transmitting point cloud data, the device comprising:

a geometry encoder configured to encode geometry data in the point cloud data;
an attribute encoder configured to encode attribute data in the point cloud data based on the geometry data; and
a transmitter configured to transmit the encoded geometry data, the encoded attribute data, and signaling information,
wherein the geometry encoder compresses the geometry data based on an inter-frame correlation and an octree.

**7.** The device of claim 6, wherein the geometry encoder comprises:

a motion estimator configured to estimate a motion vector by performing motion estimation within a search window of a reference frame;
a motion compensator configured to perform motion compensation based on the estimated motion vector and select a predictor in the reference frame as a set of nodes having similar characteristics to a prediction unit in a current frame, wherein the prediction unit is a set of neighbor nodes at a specific depth of the octree in the current frame;
a neighbor occupancy pattern generator configured to compare a neighbor occupancy pattern of the prediction unit with a neighbor occupancy pattern of the predictor; and
an entropy encoder configured to entropy code residual information related to the geometry data based on a result of the comparison.

**8.** The device of claim 7, wherein the motion estimator is configured to:

generate a prediction error based on a compression target node of the prediction unit, at least one neighbor node of the compression target node, a predictive node of the predictor, and at least one neighbor node of the predictive node; and
estimate the motion vector based on the prediction error.

**9.** The device of claim 7, wherein the neighbor occupancy pattern generator is configured to:

generate the neighbor occupancy pattern of the prediction unit based on occupancy information about at least one neighbor node of a compression target node of the prediction unit; and
generate the neighbor occupancy pattern of the predictor based on occupancy information about at least one neighbor node of the predictive node of the predictor.

**10.** The device of claim 7, wherein the signaling information comprises geometry compression related information, wherein the geometry compression related information comprises at least motion vector information, reference frame information, and range information related to a depth of the octree for transmission of the motion vector.

**11.** A method of receiving point cloud data, the method comprising:

receiving geometry data, attribute data, and signaling information;
decoding the geometry data based on the signaling information;
decoding the attribute data based on the signaling information and the decoded geometry data; and
rendering point cloud data reconstructed from the decoded geometry data and the decoded attribute data based on the signaling information,
wherein the decoding of the geometry data comprises:
decoding the geometry data based on an inter-frame correlation and an octree.

**12.** The method of claim 11, wherein the decoding of the geometry data comprises:

generating the octree based on motion vector information included in the signaling information;
generating an octree based on the motion vector information included in the signaling information;
generating a neighbor occupancy pattern of a prediction unit in the current frame based on the octree;
performing motion compensation based on the motion vector information and selecting a predictor in the reference frame as a set of nodes having similar characteristics to the prediction unit in the current frame, wherein the prediction unit is a set of neighbor nodes at a specific depth of the octree in the current frame;
generating a neighbor occupancy pattern of the predictor;
comparing the neighbor occupancy pattern of the prediction unit with the neighbor occupancy pattern of the predictor; and
entropy decoding residual information related to the geometry data based on a result of the comparison.

**13.** The method of claim 12, wherein the neighbor occupancy pattern of the prediction unit is generated based on occupancy information about at least one neighbor node of a node to be reconstructed in the prediction unit, wherein the neighbor occupancy pattern of the predictor is generated based on occupancy information about at least one neighbor node of the predictive node of the predictor.

**14.** The method of claim 12, wherein the comparing comprises:
determining a similarity between a node to be reconstructed in the current frame and a predictive node in the reference frame by comparing the neighbor occupancy pattern of the prediction unit with the neighbor occupancy pattern of the predictor.

**15.** The method of claim 12, wherein the signaling information comprises geometry compression related information, wherein the geometry compression related information comprises at least motion vector information, reference frame information, and range information related to a depth of the octree for transmission of the motion vector.

FIG. 1

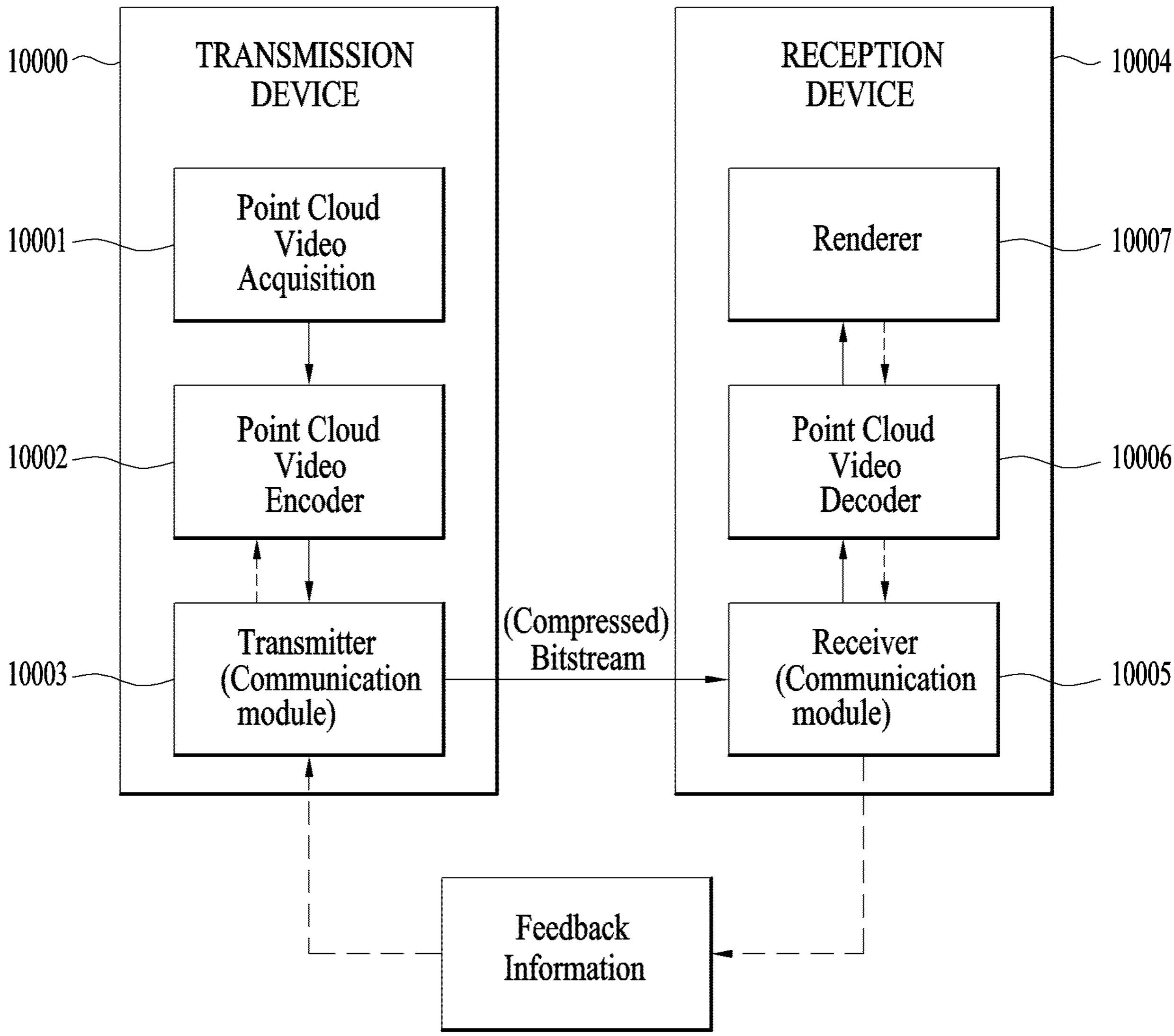
10000
TRANSMISSION DEVICE
10001
Point Cloud Video Acquisition
10002
Point Cloud Video Encoder
10003
Transmitter (Communication module)
(Compressed) Bitstream
10004
RECEPTION DEVICE
10007
Renderer
10006
Point Cloud Video Decoder
10005
Receiver (Communication module)
Feedback Information

FIG. 2

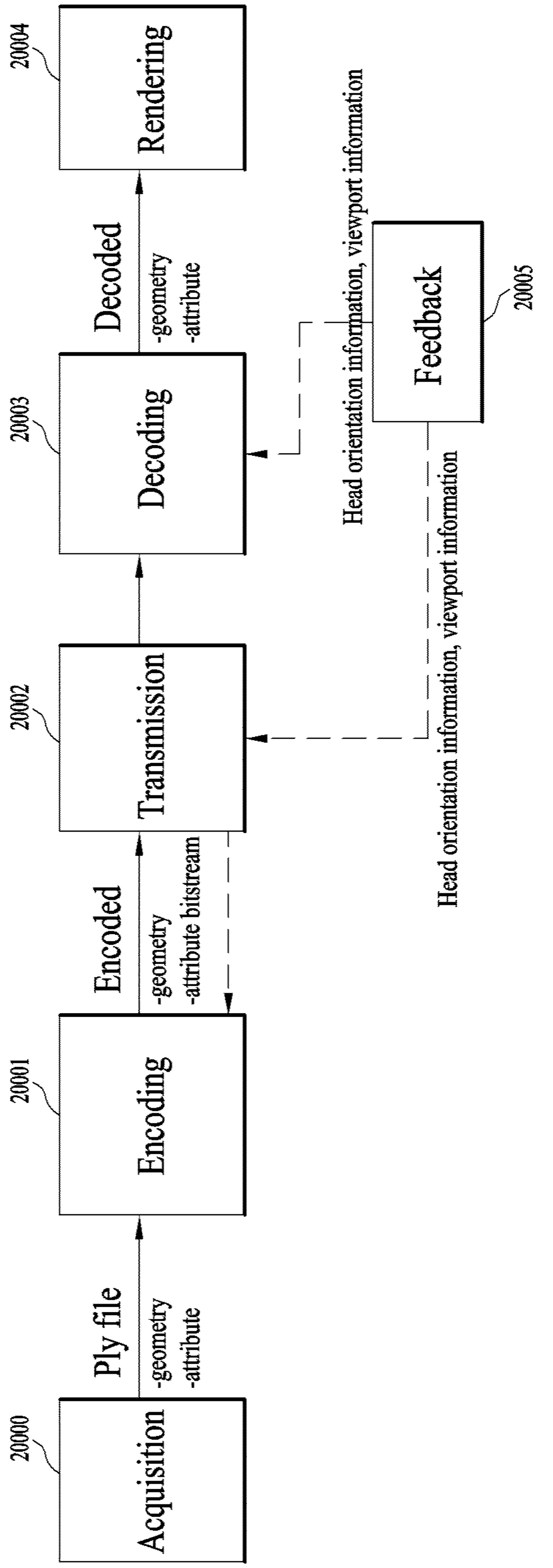
20000
Acquisition
Ply file
-geometry
-attribute
20001
Encoding
Encoded
-geometry
-attribute bitstream
20002
Transmission
20003
Decoding
Decoded
-geometry
-attribute
20004
Rendering
20005
Feedback
Head orientation information, viewport information
Head orientation information, viewport information

FIG. 3

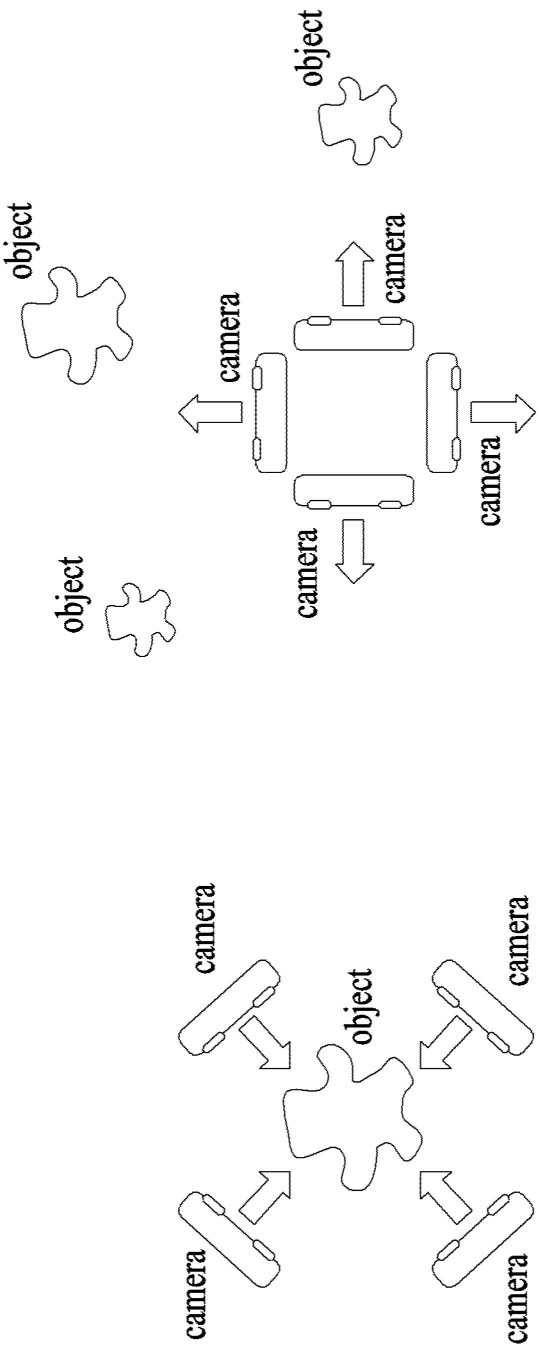
object
object
object
camera
camera
camera
camera
camera
camera
object
camera
camera

FIG. 4

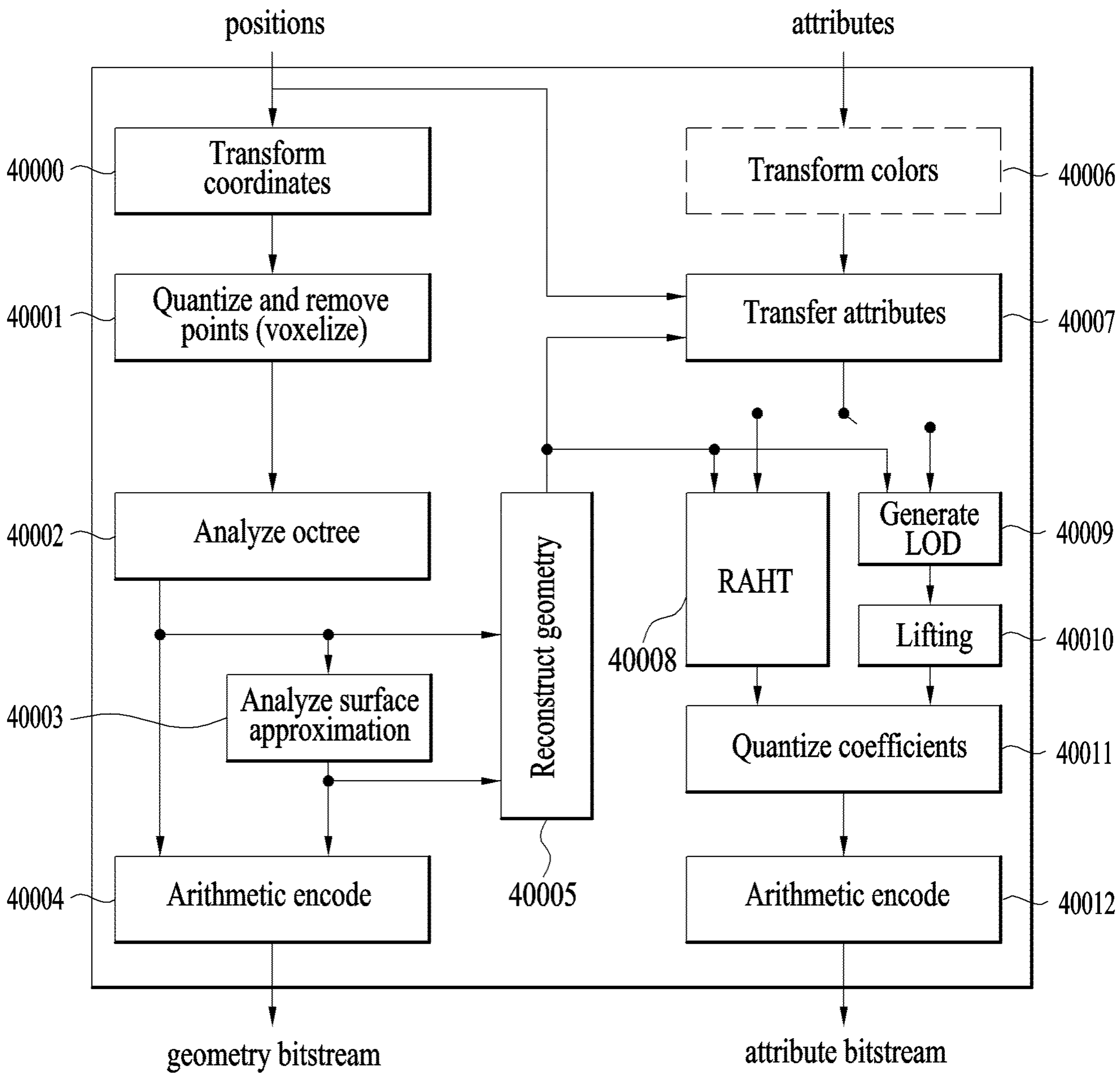
positions
attributes
Transform coordinates
40000
Quantize and remove points (voxelize)
40001
Analyze octree
40002
Analyze surface approximation
40003
Arithmetic encode
40004
Reconstruct geometry
40005
Transform colors
40006
Transfer attributes
40007
RAHT
40008
Generate LOD
40009
Lifting
40010
Quantize coefficients
40011
Arithmetic encode
40012
geometry bitstream
attribute bitstream

FIG. 5

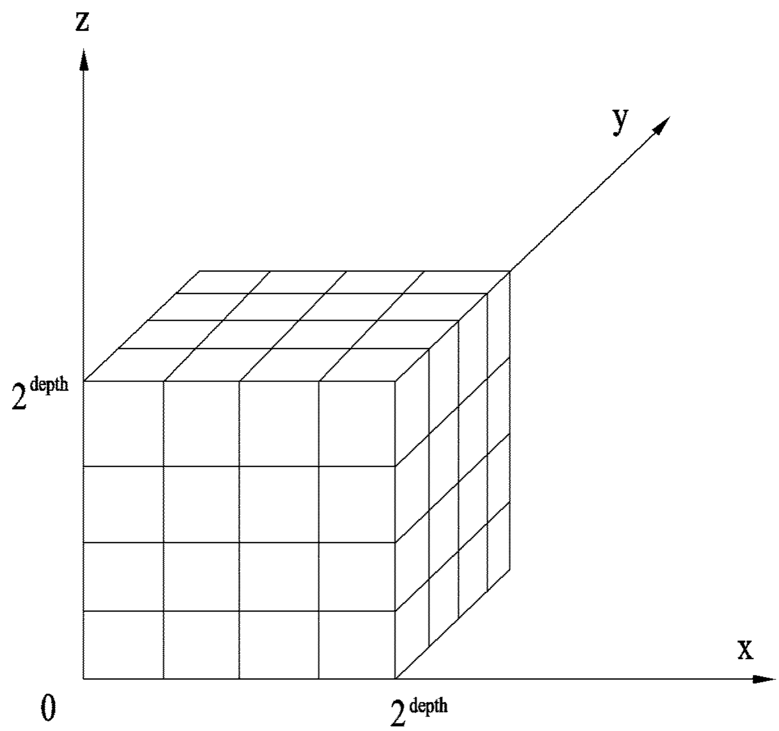

FIG. 6

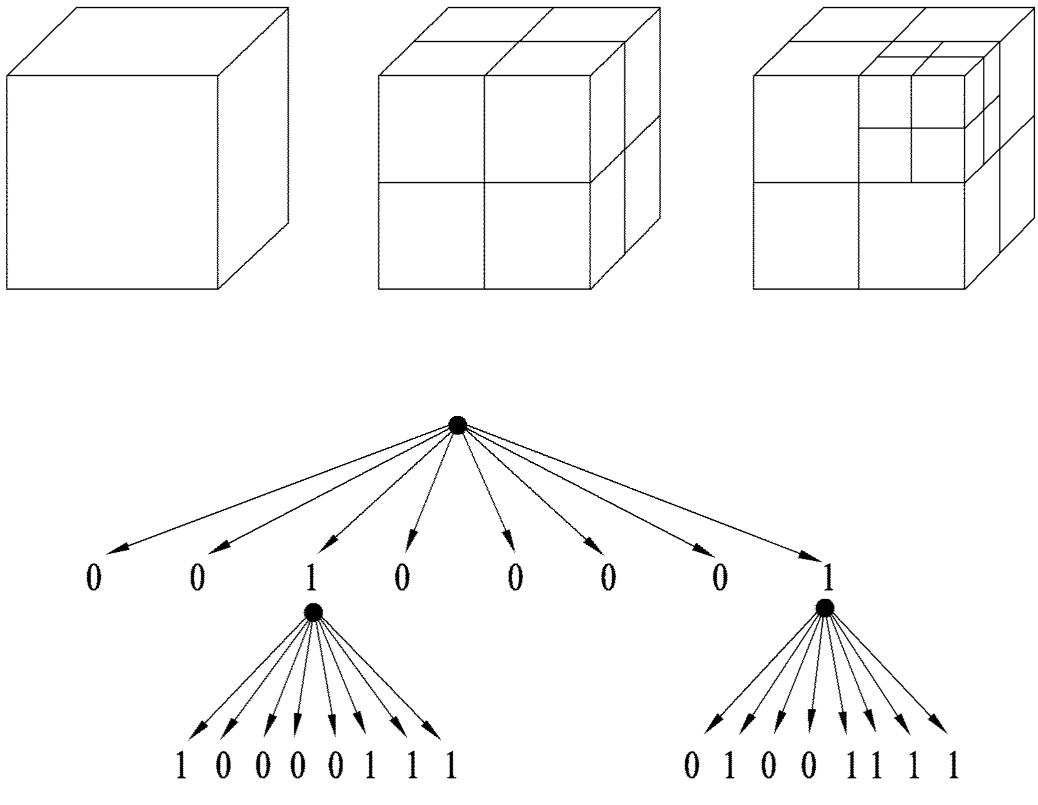

FIG. 7

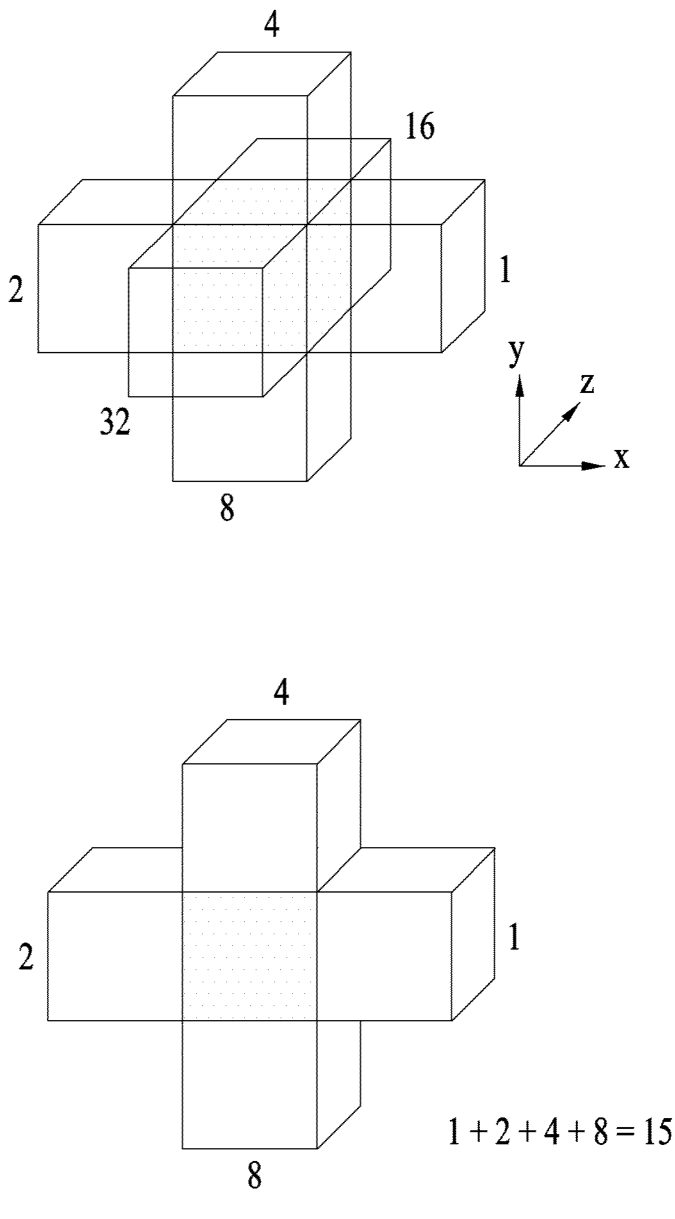

FIG. 8

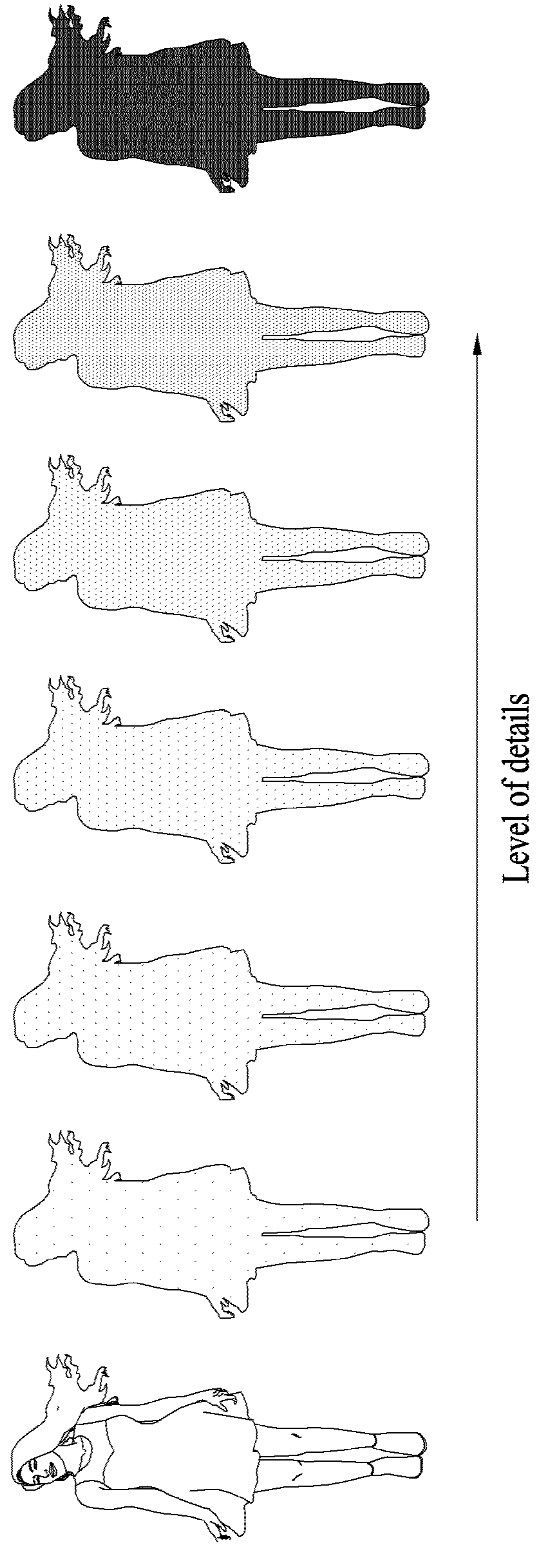

FIG. 9

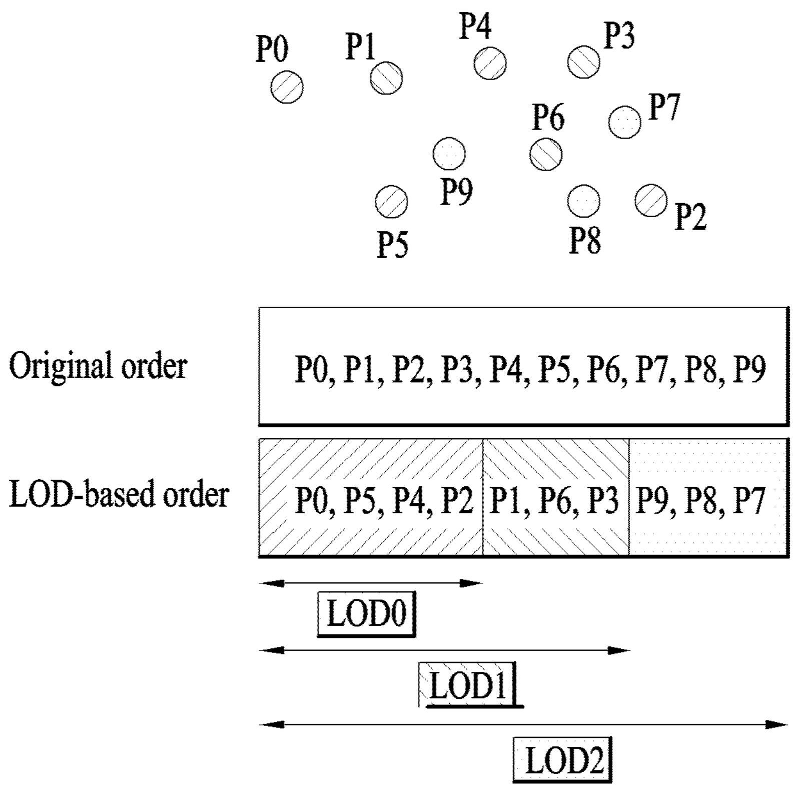
P0
P1
P4
P3
P6
P7
P9
P5
P8
P2
Original order
P0, P1, P2, P3, P4, P5, P6, P7, P8, P9
LOD-based order
P0, P5, P4, P2
P1, P6, P3
P9, P8, P7
LOD0
LOD1
LOD2

FIG. 10

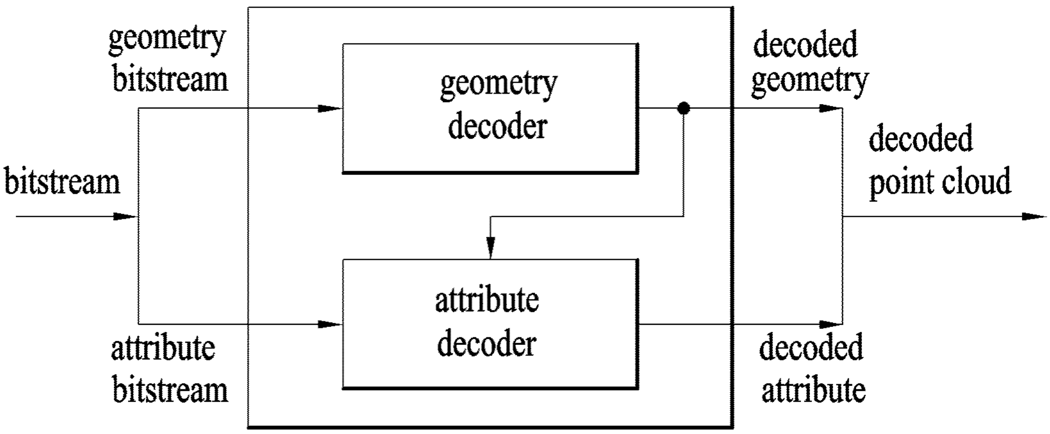
geometry
bitstream
bitstream
attribute
bitstream
geometry
decoder
attribute
decoder
decoded
geometry
decoded
point cloud
decoded
attribute

FIG. 11

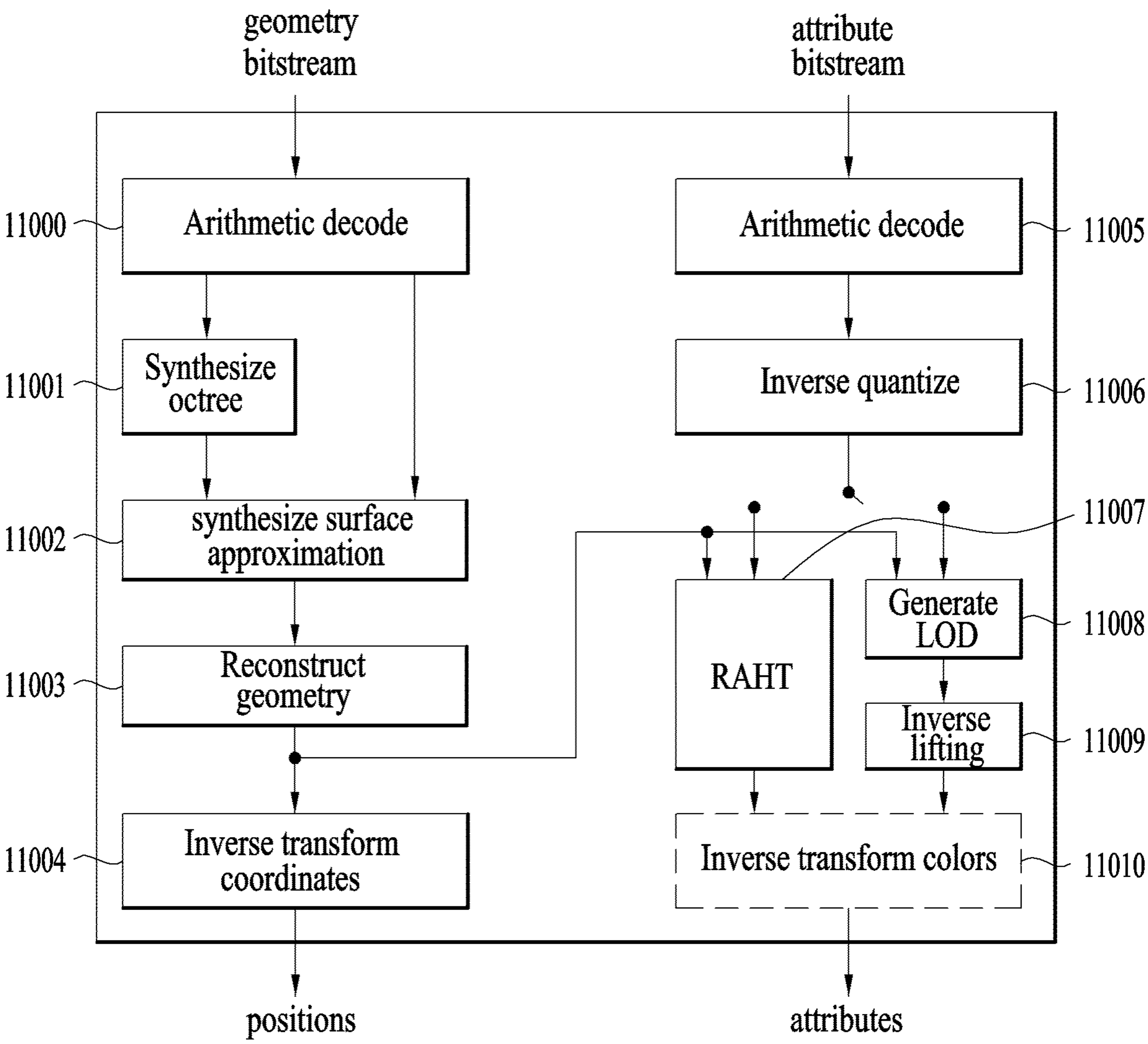
geometry bitstream
attribute bitstream
11000
Arithmetic decode
Arithmetic decode
11005
11001
Synthesize octree
Inverse quantize
11006
11007
11002
synthesize surface approximation
Generate LOD
11008
RAHT
11003
Reconstruct geometry
Inverse lifting
11009
11004
Inverse transform coordinates
Inverse transform colors
11010
positions
attributes

FIG. 12

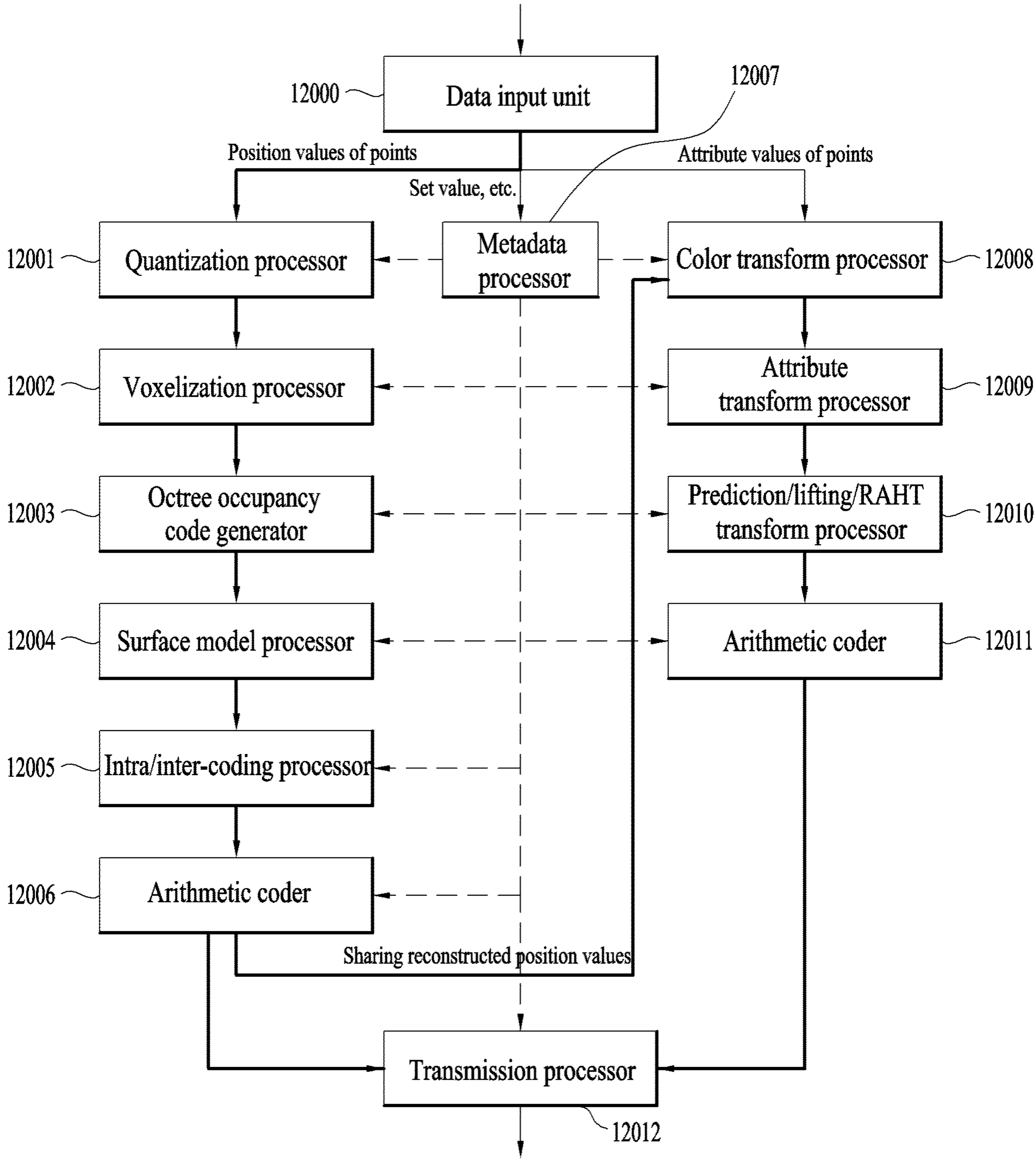
Data input unit
12000
12007
Position values of points
Set value, etc.
Attribute values of points
Quantization processor
12001
Metadata processor
Color transform processor
12008
Voxelization processor
12002
Attribute transform processor
12009
Octree occupancy code generator
12003
Prediction/lifting/RAHT transform processor
12010
Surface model processor
12004
Arithmetic coder
12011
Intra/inter-coding processor
12005
Arithmetic coder
12006
Sharing reconstructed position values
Transmission processor
12012

FIG. 13

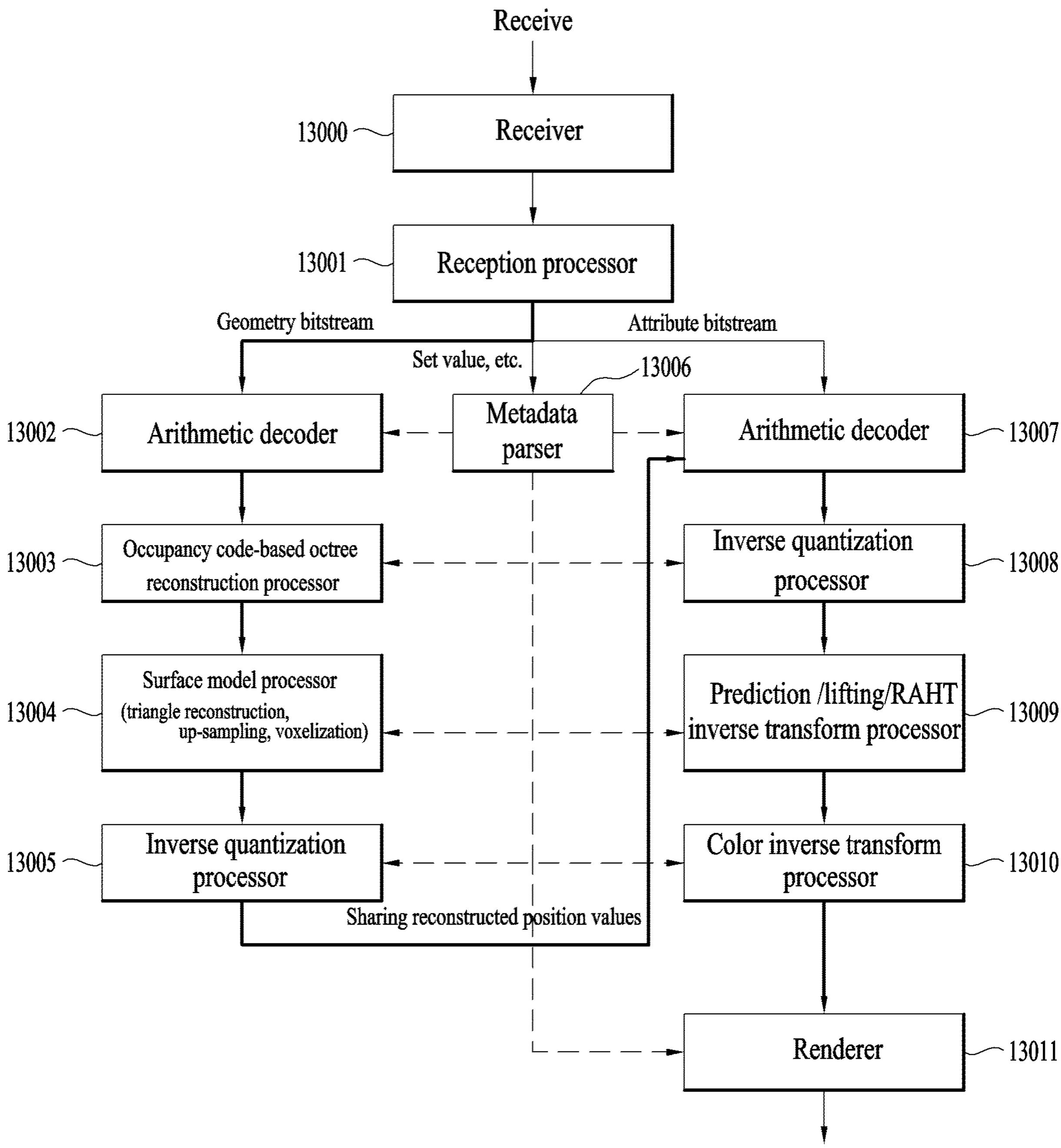
Receive
Receiver
13000
Reception processor
13001
Geometry bitstream
Attribute bitstream
Set value, etc.
13006
Metadata parser
Arithmetic decoder
13002
Arithmetic decoder
13007
Occupancy code-based octree reconstruction processor
13003
Inverse quantization processor
13008
Surface model processor (triangle reconstruction, up-sampling, voxelization)
13004
Prediction /lifting/RAHT inverse transform processor
13009
Inverse quantization processor
13005
Color inverse transform processor
13010
Sharing reconstructed position values
Renderer
13011

FIG. 14

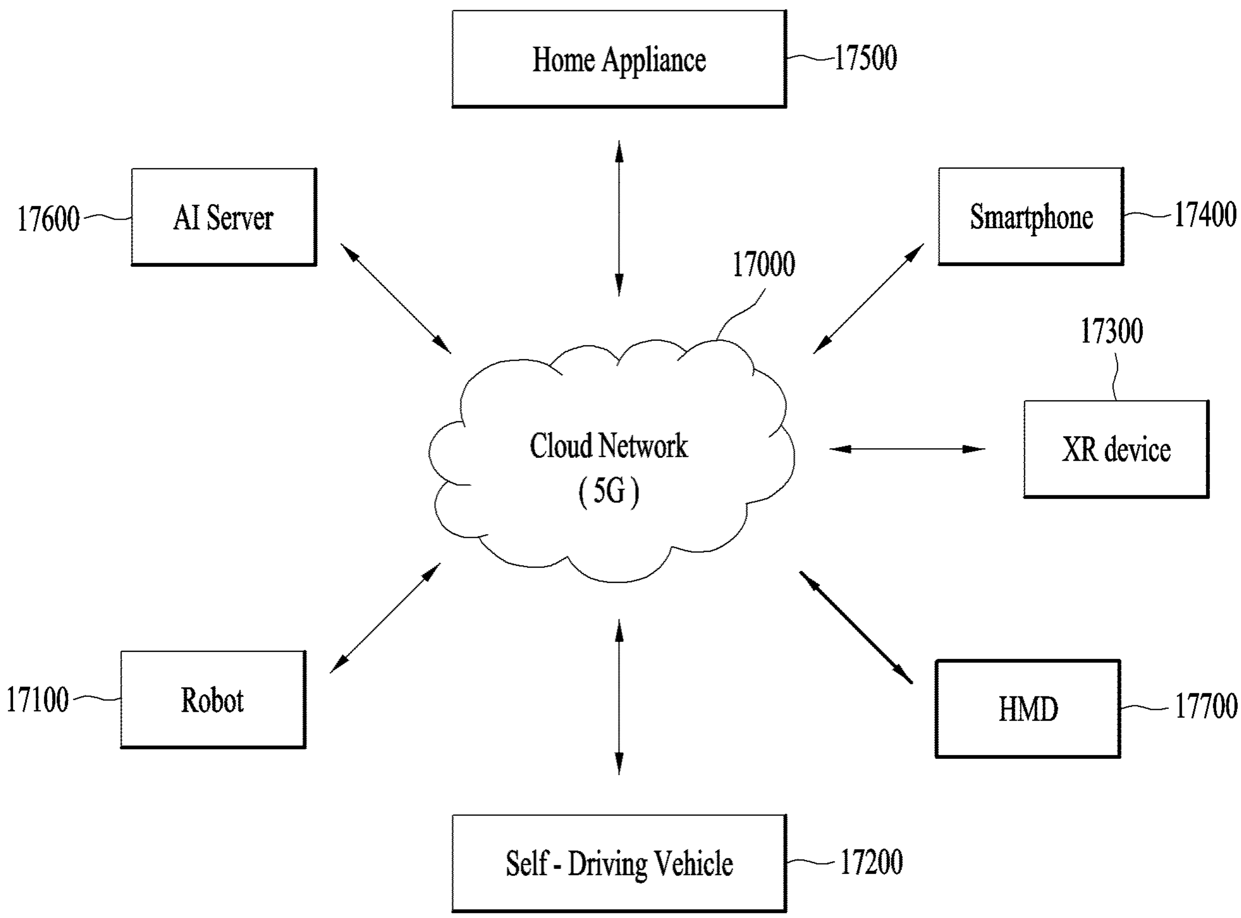
Home Appliance
17500
17600
AI Server
Smartphone
17400
17000
17300
Cloud Network
( 5G )
XR device
17100
Robot
HMD
17700
Self - Driving Vehicle
17200

FIG. 15

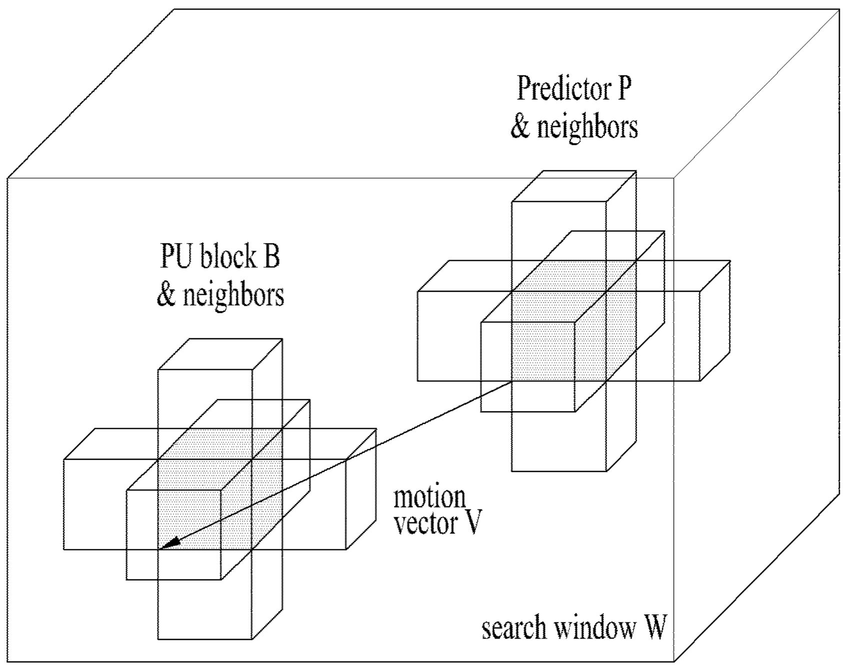
Predictor P
& neighbors
PU block B
& neighbors
motion
vector V
search window W

FIG. 16

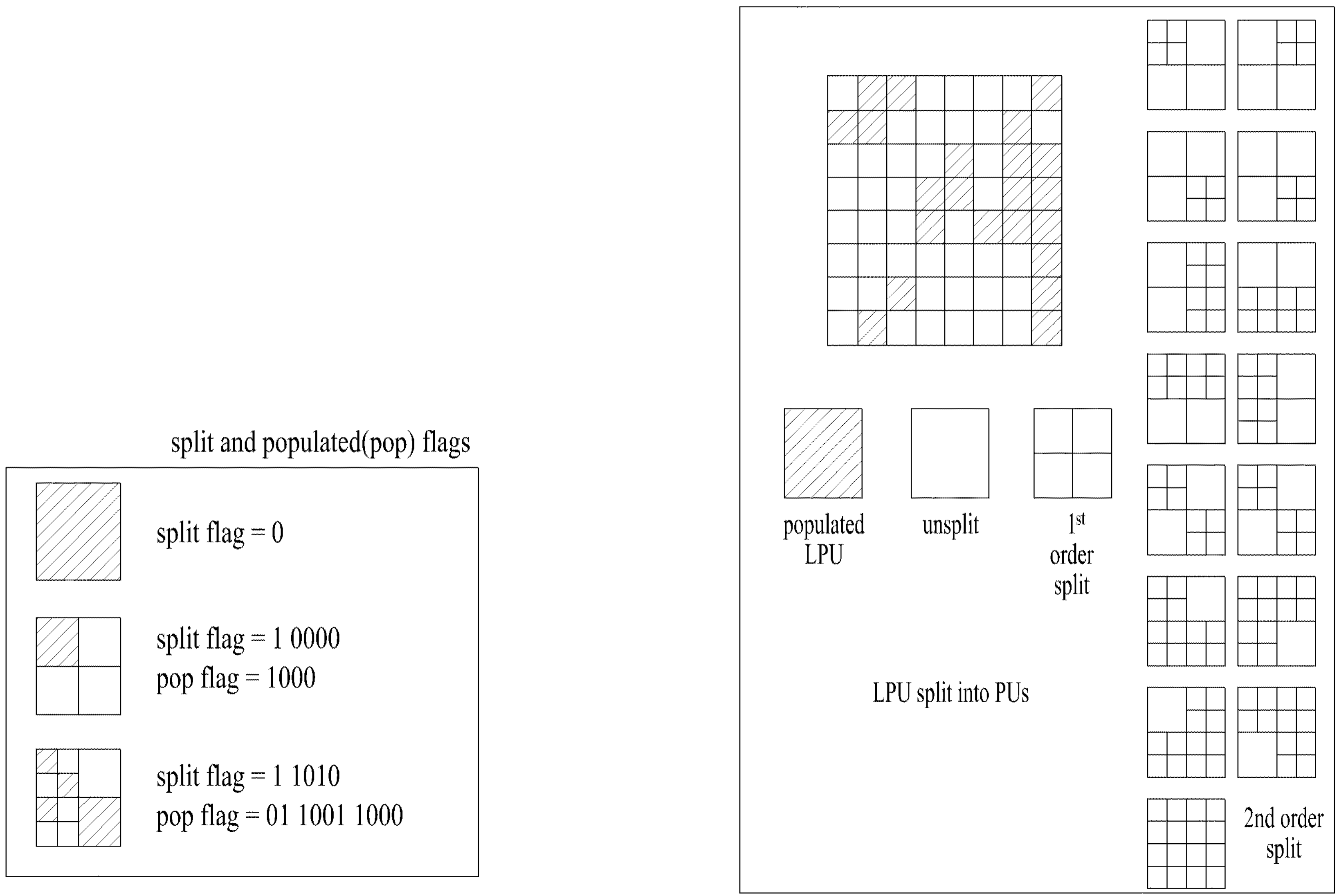
split and populated(pop) flags
split flag = 0
split flag = 1 0000
pop flag = 1000
split flag = 1 1010
pop flag = 01 1001 1000
populated LPU
unsplit
1st order split
LPU split into PUs
2nd order split

(a) (b)

FIG. 17

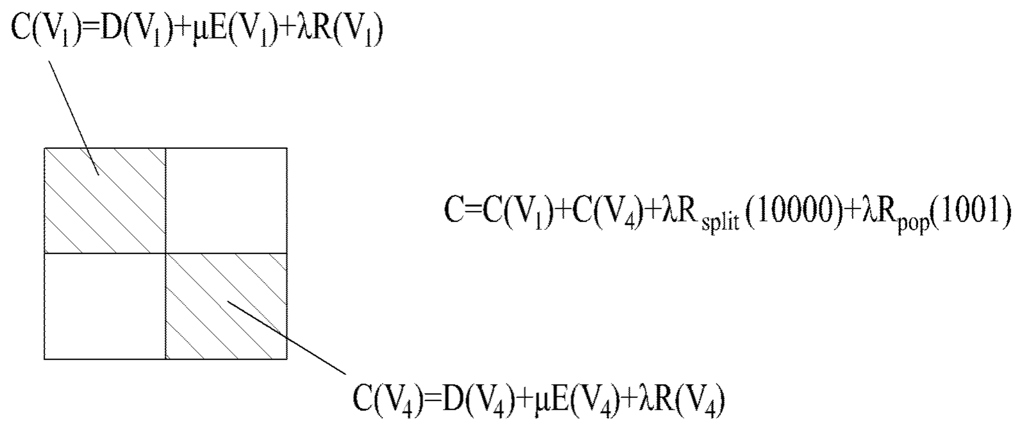
C(V1)=D(V1)+μE(V1)+λR(V1)
C=C(V1)+C(V4)+λR split (10000)+λRpop(1001)
C(V4)=D(V4)+μE(V4)+λR(V4)

FIG. 18

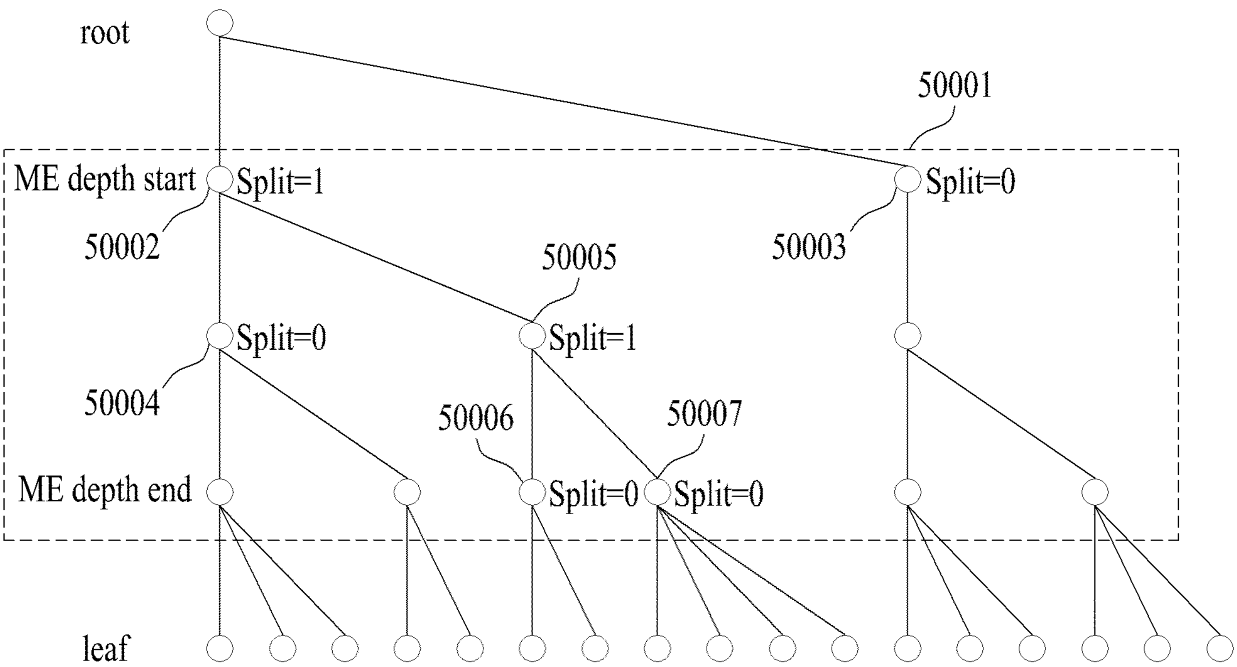
root
50001
ME depth start
Split=1
Split=0
50002
50005
50003
Split=0
Split=1
50004
50006
50007
ME depth end
Split=0
Split=0
leaf

FIG. 19

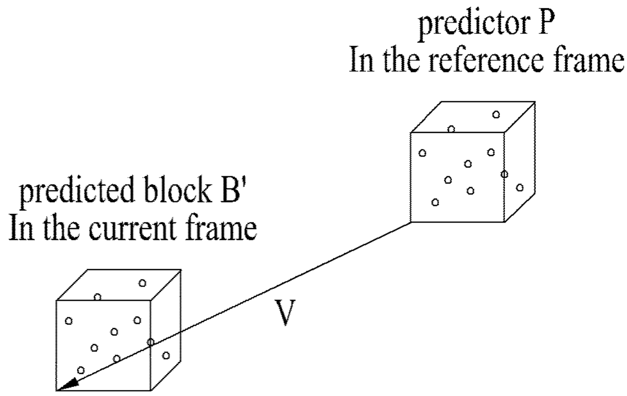
predictor P
In the reference frame
predicted block B'
In the current frame
V

FIG. 20

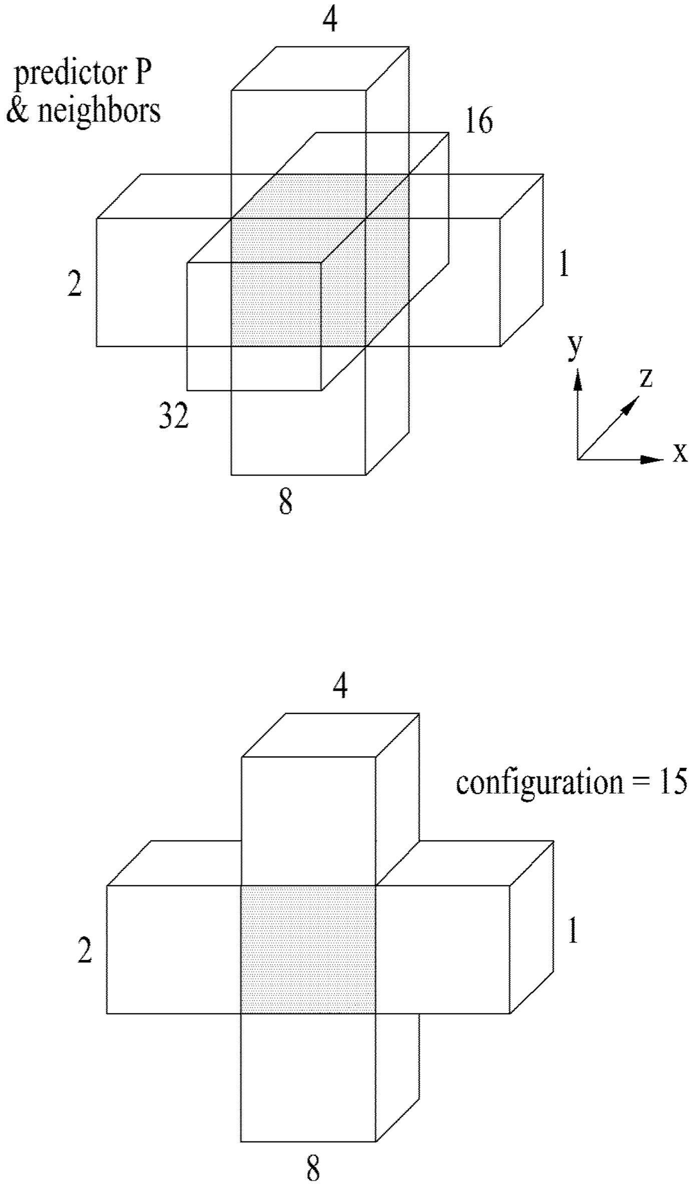

FIG. 21

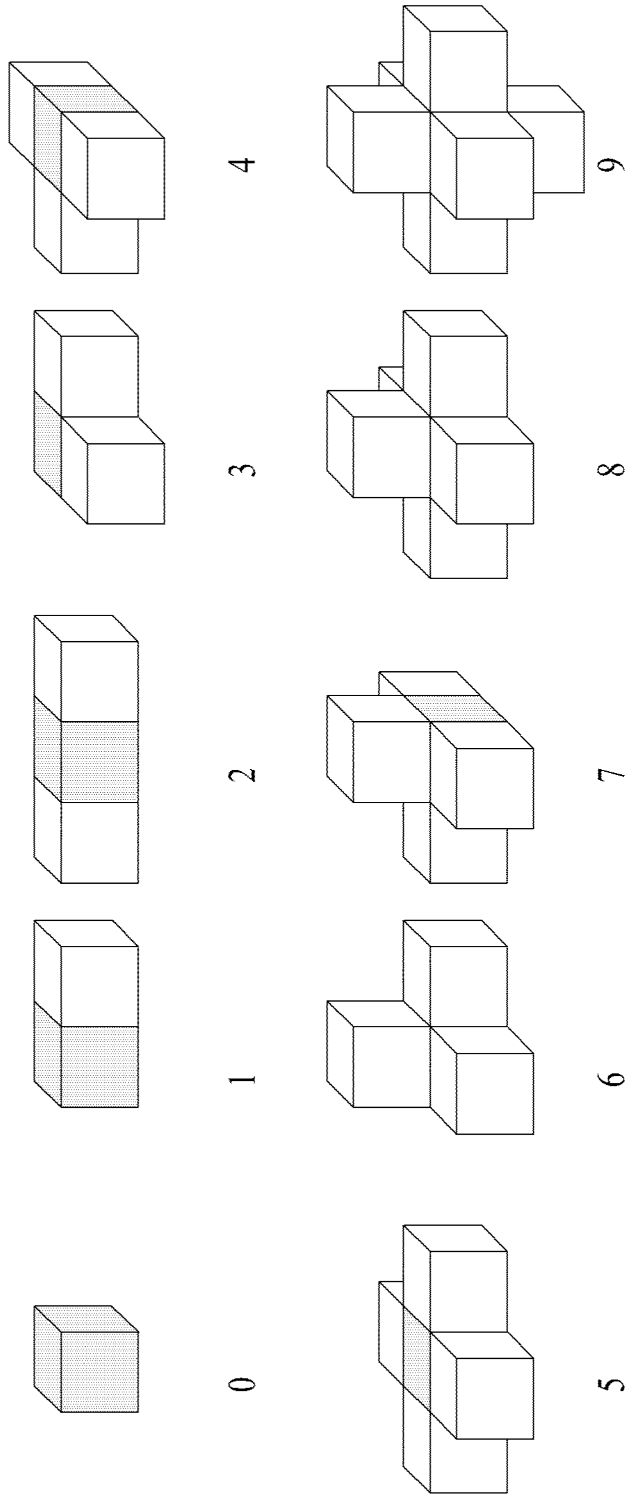

FIG. 22

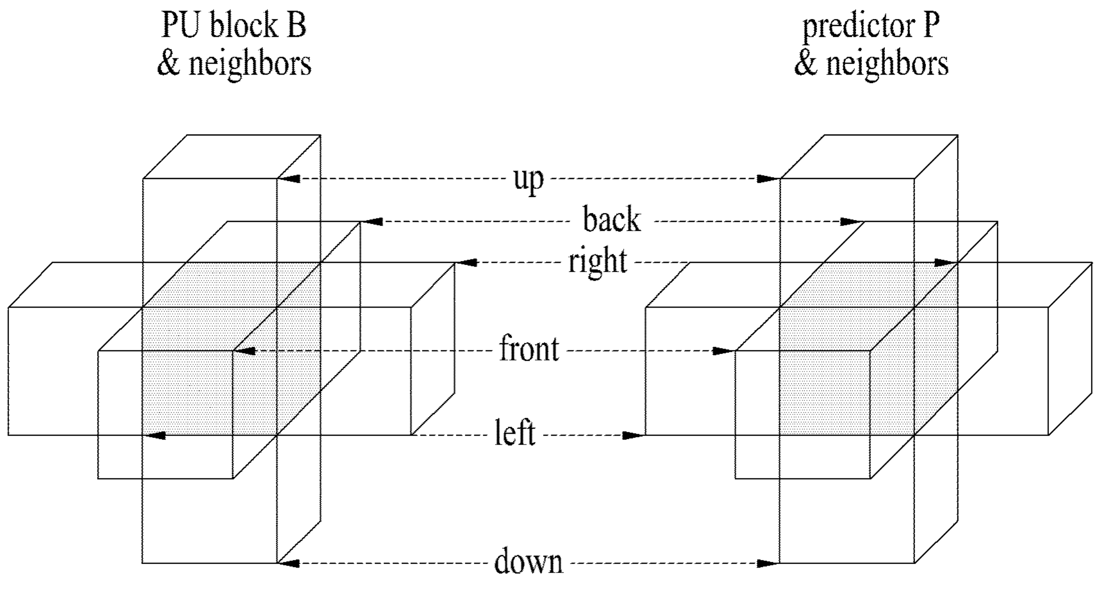
PU block B
& neighbors
predictor P
& neighbors
up
back
right
front
left
down

FIG. 23

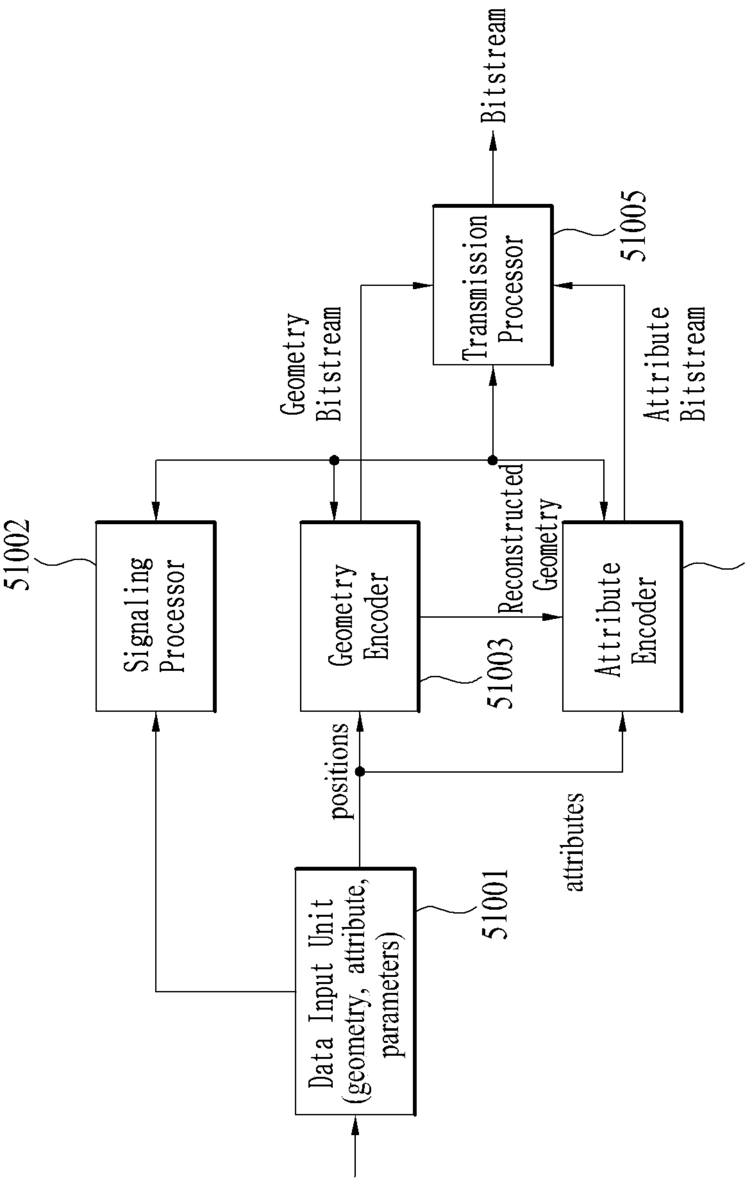
Data Input Unit (geometry, attribute, parameters)
51001
positions
attributes
Signaling Processor
51002
Geometry Encoder
51003
Reconstructed Geometry
Attribute Encoder
51004
Geometry Bitstream
Attribute Bitstream
Transmission Processor
51005
Bitstream

FIG. 24

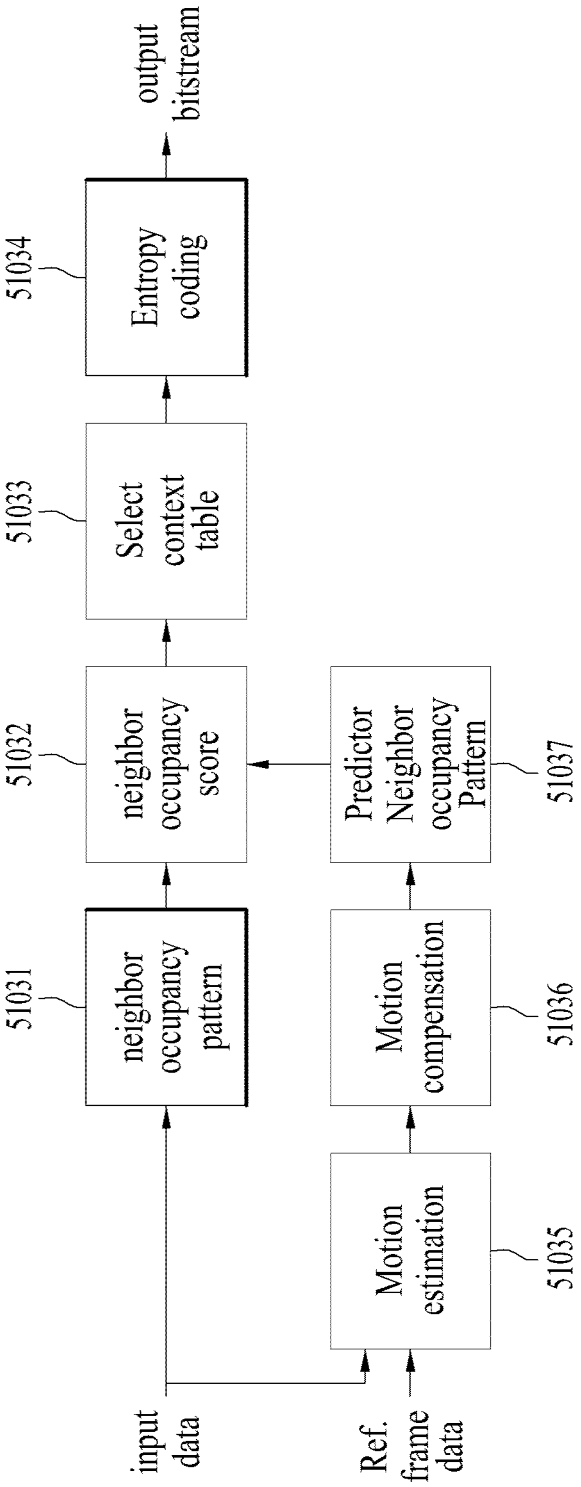
input data
Ref. frame data
Motion estimation
51035
Motion compensation
51036
Predictor Neighbor occupancy Pattern
51037
neighbor occupancy pattern
51031
neighbor occupancy score
51032
Select context table
51033
Entropy coding
51034
output bitstream

FIG. 25

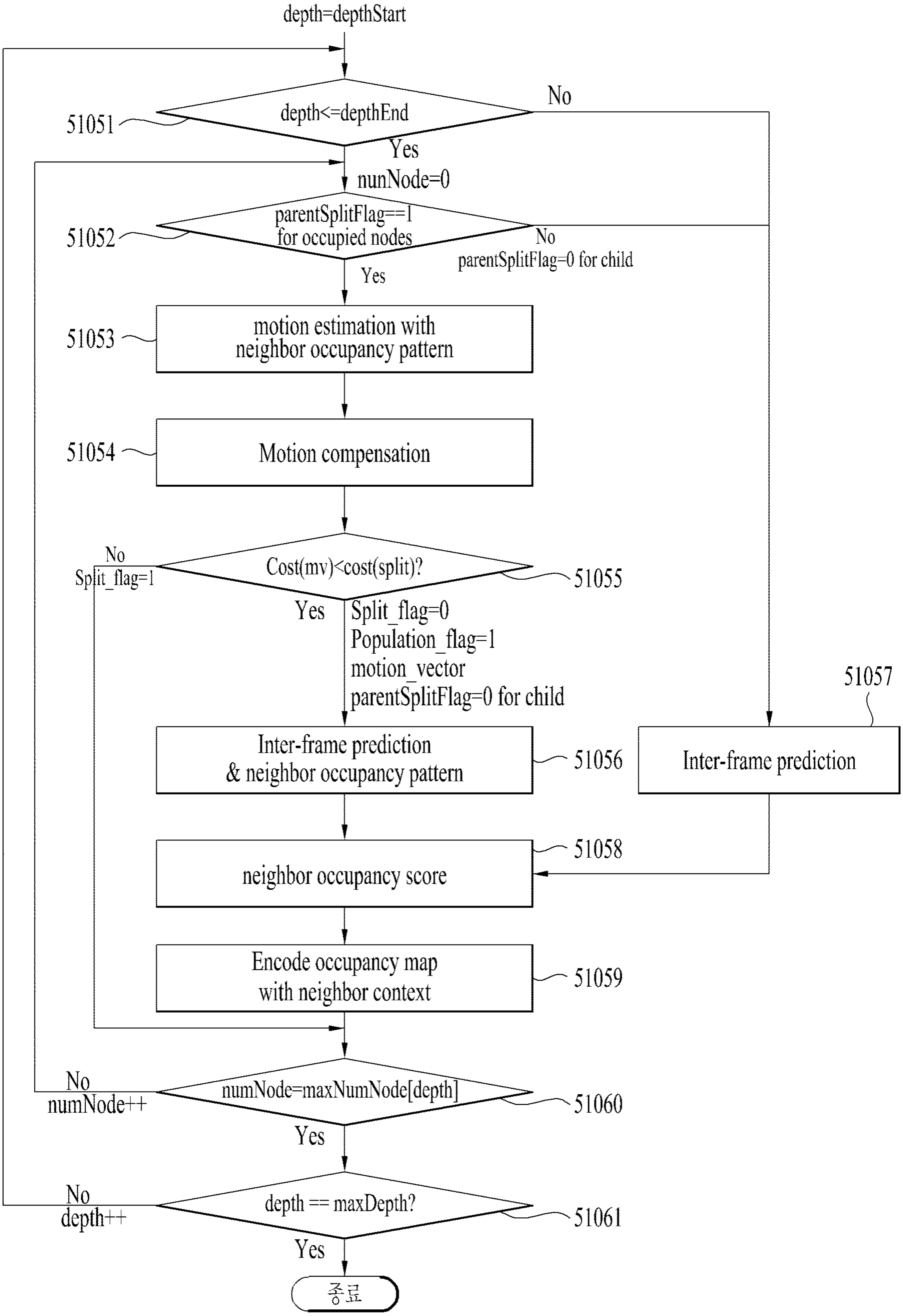
depth=depthStart
depth<=depthEnd
51051
No
Yes
nunNode=0
parentSplitFlag==1
for occupied nodes
51052
No
parentSplitFlag=0 for child
Yes
motion estimation with
neighbor occupancy pattern
51053
Motion compensation
51054
No
Split_flag=1
Cost(mv)<cost(split)?
51055
Yes
Split_flag=0
Population_flag=1
motion_vector
parentSplitFlag=0 for child
51057
Inter-frame prediction
& neighbor occupancy pattern
51056
Inter-frame prediction
neighbor occupancy score
51058
Encode occupancy map
with neighbor context
51059
No
numNode++
numNode=maxNumNode[depth]
51060
Yes
No
depth++
depth == maxDepth?
51061
Yes
종료

FIG. 26

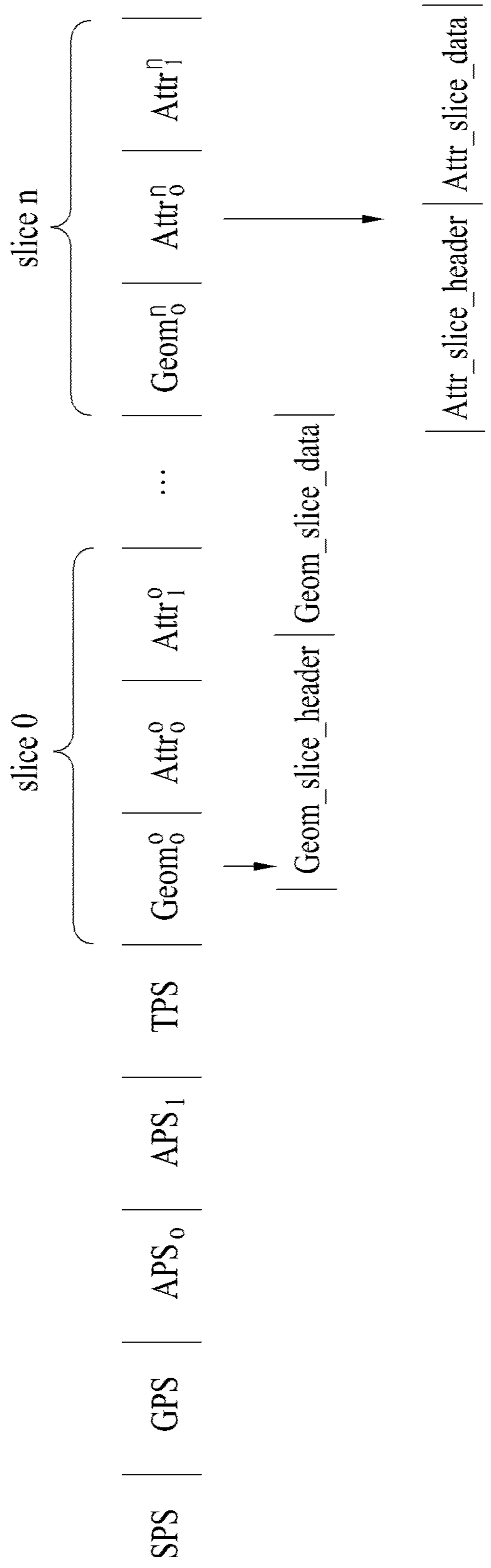
SPS
GPS
APS0
APS1
TPS
slice 0
Geom00
Attr00
Attr01
...
slice n
Geomn0
Attrn0
Attrn1
Geom_slice_header
Geom_slice_data
Attr_slice_header
Attr_slice_data

FIG. 27

| geometry_paraneter_set( ) { | Descriptor |
|---|---|
| ...... | |
| predictor_neighbor_enabled_flag | u(1) |
| if(predictor_neighbor_enabled_flag) | |
| predictor_neighbor_type | u(8) |
| ...... | |
| } | |

FIG. 28

| geometry_data_unit( ) { | Descriptor |
|---|---|
| geometry_data_unit_header( ) | |
| if( geom_tree_type == 0 ) | |
| occupancy_tree( ) | |
| else if( geom_tree_type == 1 ) | |
| geometry_predtree_data( ) | |
| geometry_data_unit_footer( ) | |
| } | |

FIG. 29

| geometry_data_unit_header( ) { | Descriptor |
|---|---|
| gsh_geometry_parameter_set_id | u(4) |
| gsh_reserved_zero_3bits | u(3) |
| gsh_slice_id | ue(v) |
| slice_tag | u(v) |
| frame_ctr_lsb | u(v) |
| if( !entropy_continuation_enabled_flag ) { | |
| gsh_entropy_continuation_flag | u(1) |
| if( gsh_entropy_continuation_flag ) | |
| gsh_prev_slice_id | ue(v) |
| } | |
| if( gps_gsh_box_log2_scale_present_flag ) | |
| gsh_box_log2_scale | ue(v) |
| gsh_box_origin_bits_minus1 | ue(v) |
| for( k = 0; k < 3; k++ ) | |
| gsh_box_origin_xyz[ k ] | u(v) |
| if( geom_slice_angular_origin_present_flag ) { | |
| gsh_angular_origin_bits_minus1 | ue(v) |
| for( k =0; k < 3; k++ ) | |
| gsh_angular_origin_xyz[ k ] | s(v) |
| } | |
| if( geom_tree_type = = 0 ) { | |
| geom_tree_depth_minus1 | ue(v) |
| if( geom_tree_coded_axis_list_present_flag ) | |
| for( lvl = 0; lvl <= geom_tree_depth_minus1; lvl++ ) | |
| for( k = 0; k < 3; k++ ) | |
| geom_tree_coded_axis_flag[ lvl ][ k ] | u(1) |
| gsh_entropy_stream_cnt_minus1 | ue(v) |
| } | |
| if( geom_scaling_enabled_flag ) { | |
| geom_slice_qp_offset | se(v) |
| if( geom_tree_type = = 1 ) | |
| geom_qp_offset_intvl_log2_delta | se(v) |
| } | |
| if( geom_tree_type = = 1 ) { | |
| for( k = 0; k < 3; k++ ) | |
| ptn_residual_abs_log2_bits[ k ] | u(3) |
| if( geometry_angular_enabled_flag ) | |
| ptn_radius_min_value | ue(v) |
| } | |
| byte_alignment( ) | |
| } | |

FIG. 30

| geometry_data_unit_header ( ) { | Descriptor |
|---|---|
| …… | |
| ref_frame_id | u(8) |
| mv_depth_start | u(8) |
| mv_depth_end | u(8) |
| …… | |
| } | |

# FIG. 31

| data_unit ( ) { | Descriptor |
|---|---|
| ...... | |
| for (i = mv_depth_start; i < maxDepth; i++) { | |
| for(j = all nodes in depth i) { | |
| if (i <= mv_depth_end && parentSplitFlag == 1) { | |
| split_flag[i][j] | u(1) |
| if(split_flag[i][j] == 0) { | |
| population_flag[i][j] | u(1) |
| if(population_flag[i][j] == 1) { | |
| for(k=0; k<3; k++) | |
| motion_vector[i][j][k] | u(8) |
| } | |
| } | |
| } | |
| occupancy_map[i][j] | ae(v) |
| } | |
| } | |
| ...... | |
| } | |

FIG. 32

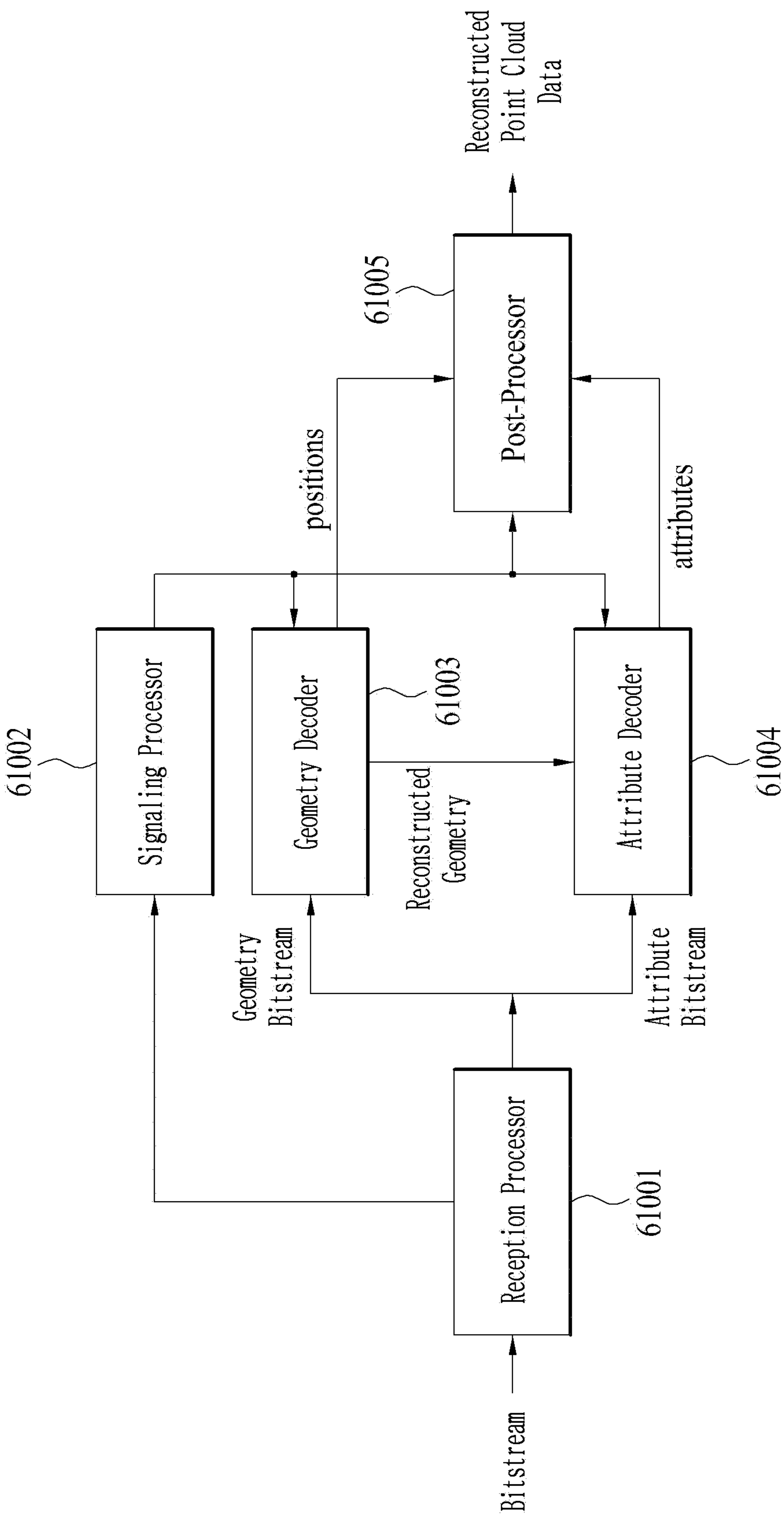
Bitstream
Reception Processor
61001
Geometry Bitstream
Attribute Bitstream
Signaling Processor
61002
Geometry Decoder
61003
Reconstructed Geometry
Attribute Decoder
61004
positions
attributes
Post-Processor
61005
Reconstructed Point Cloud Data

FIG. 33

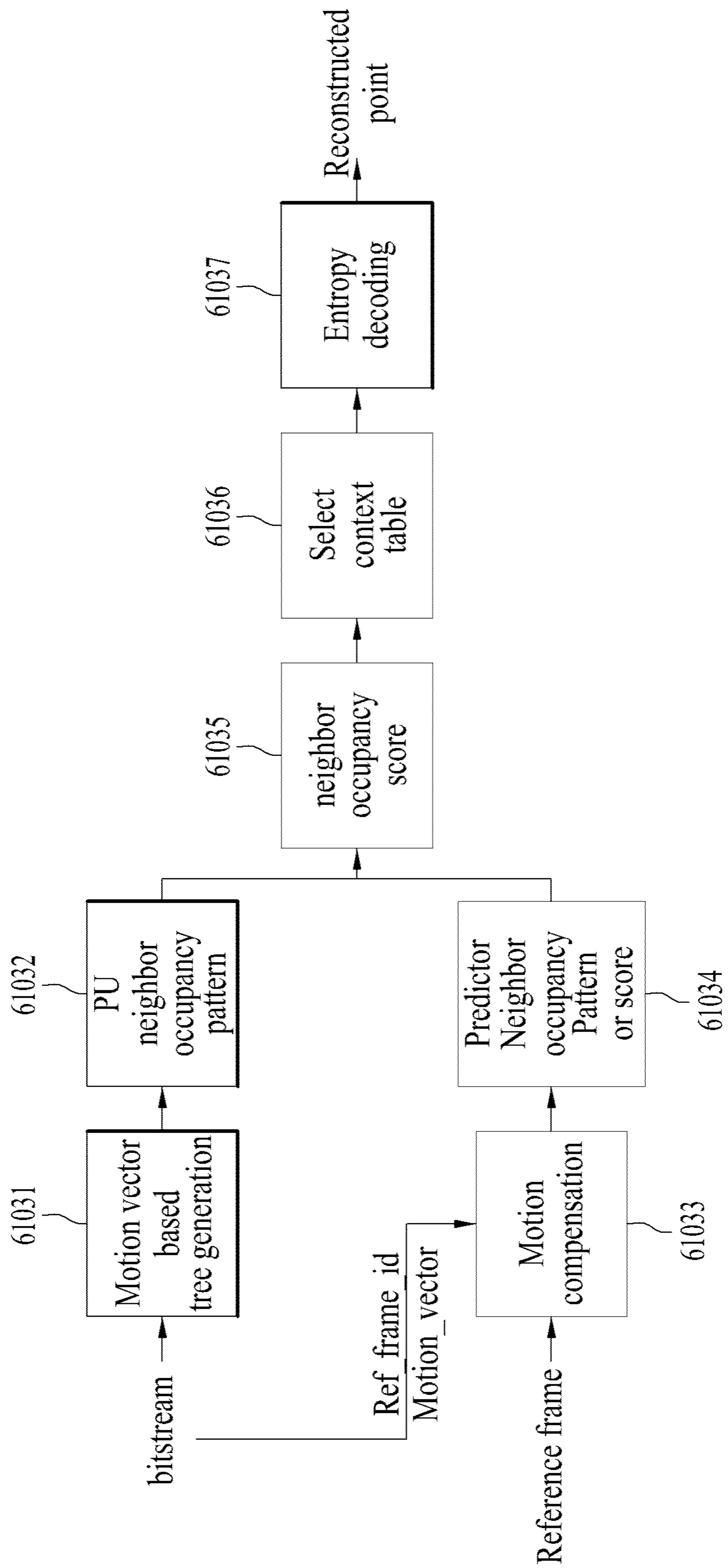
bitstream
Motion vector based tree generation
61031
PU neighbor occupancy pattern
61032
Ref_frame_id
Motion_vector
Reference frame
Motion compensation
61033
Predictor Neighbor occupancy Pattern or score
61034
neighbor occupancy score
61035
Select context table
61036
Entropy decoding
61037
Reconstructed point

FIG. 34

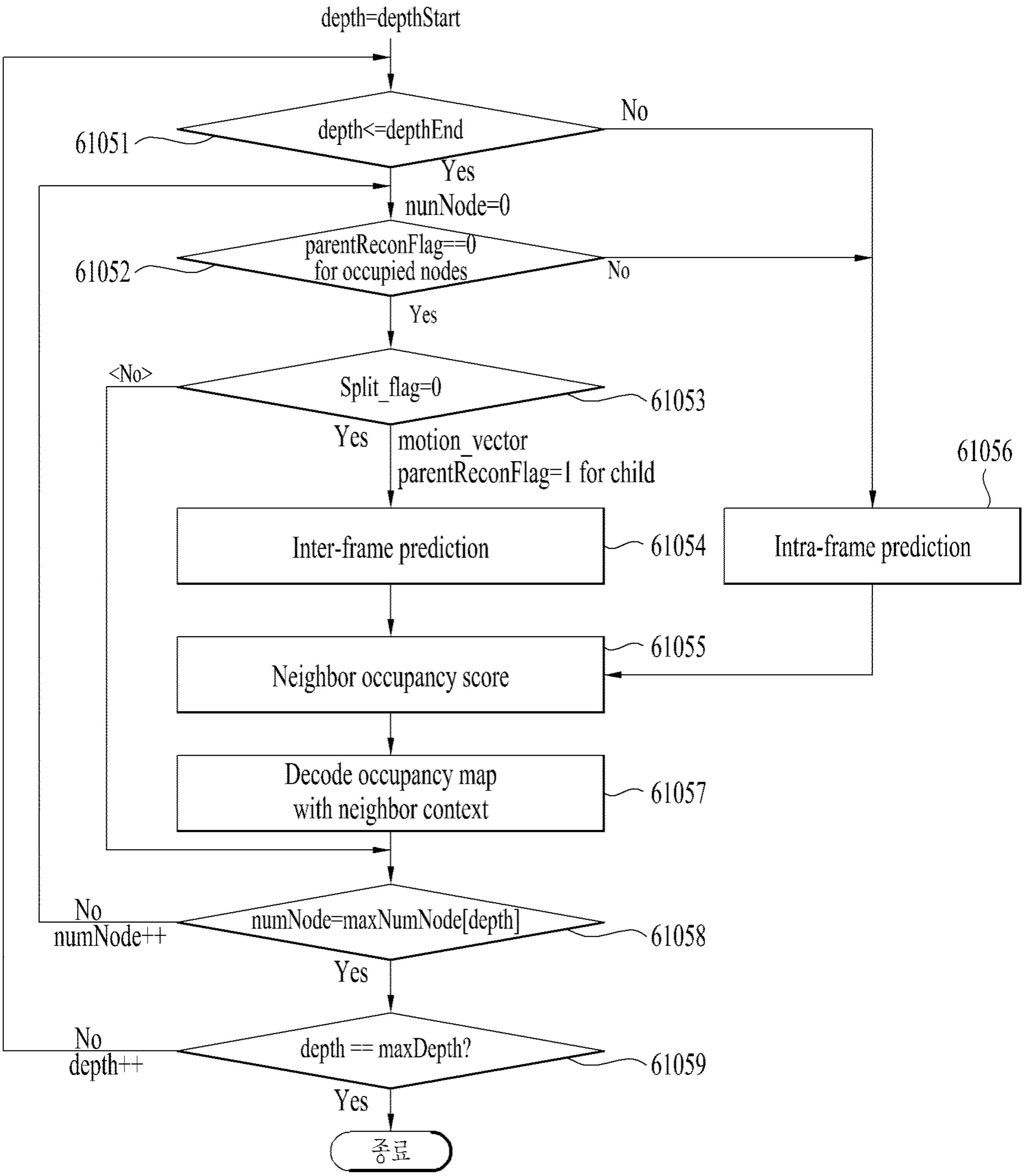
depth=depthStart
depth<=depthEnd
61051
No
Yes
nunNode=0
parentReconFlag==0
for occupied nodes
61052
No
Yes
<No>
Split_flag=0
61053
Yes
motion_vector
parentReconFlag=1 for child
61056
Inter-frame prediction
61054
Intra-frame prediction
61055
Neighbor occupancy score
Decode occupancy map
with neighbor context
61057
No
numNode++
numNode=maxNumNode[depth]
61058
Yes
No
depth++
depth == maxDepth?
61059
Yes
종료

FIG. 35

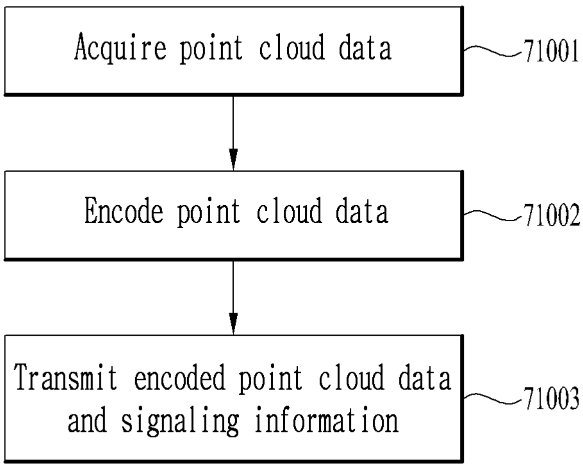
Acquire point cloud data
71001
Encode point cloud data
71002
Transmit encoded point cloud data and signaling information
71003

FIG. 36

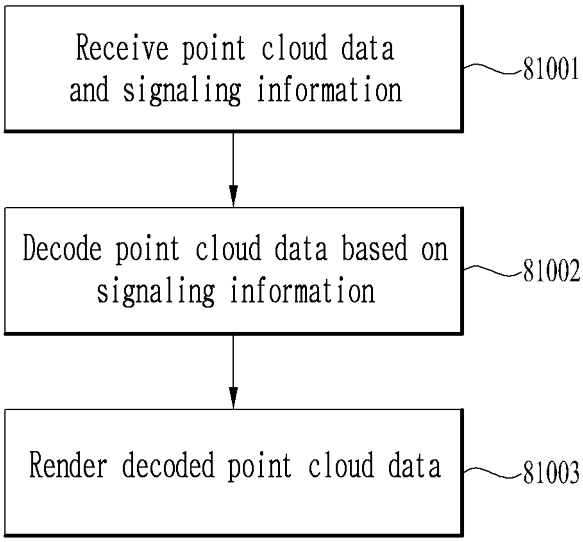
Receive point cloud data and signaling information
81001
Decode point cloud data based on signaling information
81002
Render decoded point cloud data
81003

**INTERNATIONAL SEARCH REPORT**

International application No.
**PCT/KR2022/005475**

**A. CLASSIFICATION OF SUBJECT MATTER**

**H04N 19/597**(2014.01)i; **H04N 19/96**(2014.01)i; **H04N 19/105**(2014.01)i; **H04N 19/139**(2014.01)i; **G06T 9/40**(2006.01)i

According to International Patent Classification (IPC) or to both national classification and IPC

**B. FIELDS SEARCHED**

Minimum documentation searched (classification system followed by classification symbols)

H04N 19/597(2014.01); G06T 3/00(2006.01); G06T 9/00(2006.01); G06T 9/40(2006.01); H04N 19/107(2014.01); H04N 19/139(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 프레임(frame), 옥트리(octree), 시그널링(signaling), 참조(reference), 움직임(motion), 예측(prediction)

**C. DOCUMENTS CONSIDERED TO BE RELEVANT**

| Category* | Citation of document, with indication, where appropriate, of the relevant passages | Relevant to claim No. |
|---|---|---|
| | G-PCC codec description v9. INTERNATIONAL ORGANIZATION FOR STANDARDIZATION ISO/IEC JTC1/SC9/WG7. N0011. 31 December 2020 [Retrieved on 08 July 2022]. Retrieved from <URL: https://www.mpeg.org/wp-content/uploads/mpeg_meetings/132_OnLine/w19620.zip>. | |
| X | See sections 2, 3.15.5 and 3.15.8; and figures 1 and 149. | 1,6 |
| Y | | 11 |
| A | | 2-5,7-10,12-15 |
| Y | KR 10-2021-0040272 A (LG ELECTRONICS INC.) 13 April 2021 (2021-04-13)<br>See claim 11. | 11 |
| A | US 2020-0258262 A1 (INTERDIGITAL VC HOLDINGS, INC.) 13 August 2020 (2020-08-13)<br>See paragraphs [0016]-[0040]; and claims 23-27. | 1-15 |
| A | WO 2020-190093 A1 (LG ELECTRONICS INC.) 24 September 2020 (2020-09-24)<br>See paragraphs [0009]-[0028]; and claims 1-6. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 August 2022** | **04 August 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**

International application No.
**PCT/KR2022/005475**

**C. DOCUMENTS CONSIDERED TO BE RELEVANT**

| Category* | Citation of document, with indication, where appropriate, of the relevant passages | Relevant to claim No. |
|---|---|---|
| A | US 2021-0099711 A1 (APPLE INC.) 01 April 2021 (2021-04-01) See paragraphs [0004]-[0010]; and claims 1-9. | 1-15 |

Form PCT/ISA/210 (second sheet) (July 2019)

**INTERNATIONAL SEARCH REPORT**
**Information on patent family members**

International application No.
**PCT/KR2022/005475**

| Patent document cited in search report | Publication date (day/month/year) | Patent family member(s) | Publication date (day/month/year) |
|---|---|---|---|
| KR 10-2021-0040272 A | 13 April 2021 | US 11138688 B2 | 05 October 2021 |
| | | US 2021-0104013 A1 | 08 April 2021 |
| | | WO 2021-066615 A1 | 08 April 2021 |
| US 2020-0258262 A1 | 13 August 2020 | CN 111386551 A | 07 July 2020 |
| | | EP 3474231 A1 | 24 April 2019 |
| | | EP 3474232 A1 | 24 April 2019 |
| | | EP 3698328 A1 | 26 August 2020 |
| | | WO 2019-079093 A1 | 25 April 2019 |
| WO 2020-190093 A1 | 24 September 2020 | CN 113615204 A | 05 November 2021 |
| | | EP 3944625 A1 | 26 January 2022 |
| | | KR 10-2021-0134049 A | 08 November 2021 |
| US 2021-0099711 A1 | 01 April 2021 | US 11202078 B2 | 14 December 2021 |
| | | WO 2021-062279 A1 | 01 April 2021 |

Form PCT/ISA/210 (patent family annex) (July 2019)